(19) Europäisches Patentamt / European Patent Office / Office européen des brevets

(11) **EP 2 942 953 A1**

(12) **EUROPEAN PATENT APPLICATION**
published in accordance with Art. 153(4) EPC

(43) Date of publication:
**11.11.2015 Bulletin 2015/46**

(21) Application number: **13869976.4**

(22) Date of filing: **16.10.2013**

(51) Int Cl.:
**H04N 19/00** (2014.01)    **H04N 13/00** (2006.01)

(86) International application number:
**PCT/JP2013/078095**

(87) International publication number:
**WO 2014/106915 (10.07.2014 Gazette 2014/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.01.2013 JP 2013000385**

(71) Applicant: **National Institute of Information and Communication Technology**
**Tokyo 184-8795 (JP)**

(72) Inventors:
• **SENOH Takanori**
**Koganei-shi**
**Tokyo 184-8795 (JP)**

• **ICHIHASHI Yasuyuki**
**Koganei-shi**
**Tokyo 184-8795 (JP)**
• **SASAKI Hisayuki**
**Koganei-shi**
**Tokyo 184-8795 (JP)**
• **YAMAMOTO Kenji**
**Koganei-shi**
**Tokyo 184-8795 (JP)**

(74) Representative: **Piésold, Alexander James**
**Dehns**
**St Bride's House**
**10 Salisbury Square**
**London EC4Y 8JD (GB)**

(54) **STEREOSCOPIC VIDEO ENCODING DEVICE, STEREOSCOPIC VIDEO DECODING DEVICE, STEREOSCOPIC VIDEO ENCODING METHOD, STEREOSCOPIC VIDEO DECODING METHOD, STEREOSCOPIC VIDEO ENCODING PROGRAM, AND STEREOSCOPIC VIDEO DECODING PROGRAM**

(57)     A stereoscopic video encoding device inputs therein: a multi-view video constituted by a reference viewpoint video (C), a left viewpoint video (L), and a right viewpoint video (R); and a reference viewpoint depth map (Cd), a left viewpoint depth map (Ld), and a right viewpoint depth map (Rd), each of which is a map of a depth value associated with the multi-view video. In the stereoscopic video encoding device, based on a synthesis technique indicated by a depth type (Hd), a video synthesis unit (11) synthesizes a plurality of videos, and a depth map synthesis unit (13) synthesizes a plurality of depth maps. A video encoding unit (12), a depth map encoding unit (14), and a parameter encoding unit (15) encode, by respective units, respective parameters containing a synthesized video (G), a synthesized depth map (Gd), and a depth type (Hd), respectively. A multiplexing unit (16) multiplexes the encoded parameters into an encoded bit string and transmits the multiplexed encoded bit string.

FIG.2

**Description**

TECHNICAL FIELD

The present invention relates to: a stereoscopic video encoding device, a stereoscopic video encoding method, and a stereoscopic video encoding program, each of which encodes a stereoscopic video; and a stereoscopic video decoding device, a stereoscopic video decoding method, and a stereoscopic video decoding program, each of which decodes the encoded stereoscopic video.

BACKGROUND ART

Stereoscopic televisions and movies with binocular vision have become popular in recent years. Such televisions and movies, however, realize not all of factors required for stereoscopy. Some viewers feel uncomfortable due to absence of motion parallax or have eyestrain or the like because of wearing special glasses. There is thus a need for putting into practical use a stereoscopic video with naked eye vision closer to natural one.

The naked-eye stereoscopic video can be realized by a multi-view video. The multi-view video requires, however, transmitting and storing a large number of viewpoint videos, resulting in a large volume of data, which makes it difficult to put into practical use. Thus, a method of restoring a multi-view video by interpolating thinned-out viewpoint videos has been known. In the method: the number of viewpoints of a viewpoint video is thinned out by adding, as information on a depth of an object, a depth map which is a map of parallax between a pixel of a video at one viewpoint and that at another viewpoint of the multi-view video (an amount of displacement of positions of a pixel for the same object point in different viewpoint videos); and a limited number of viewpoint videos obtained are transmitted, stored, and projected using the depth map.

The above-described method of restoring the multi-view video using small numbers of the viewpoint videos and depth maps is disclosed in, for example, Japanese Laid-Open Patent Application, Publication No. 2010-157821 (to be referred to as Patent Document 1 hereinafter). Patent Document 1 discloses a method of encoding and decoding a multi-view video (an image signal) and a depth map corresponding thereto (a depth signal). An image encoding apparatus disclosed in Patent Document 1 is herein described with reference to FIG. 24. As illustrated in FIG. 24, the image encoding apparatus of Patent Document 1 includes an encoding management unit 101, an image signal encoding unit 107, a depth signal encoding unit 108, a unitization portion 109, and a parameter information encoding unit 110. In the image encoding apparatus, the image signal encoding unit 107 performs a predictive encoding between viewpoint videos (image signals), and the depth signal encoding unit 108 similarly performs an inter-view predictive encoding to one or more viewpoint depth maps (depth signals). The unitization portion 109 generates encoded bit strings from the encoded signals and stores or transmits the generated encoded bit strings.

RELATED ART DOCUMENT

PATENT DOCUMENT

Patent Document 1: Japanese Laid-Open Patent Application, Publication No. 2010-157821

SUMMARY OF THE INVENTION

PROBLEM TO BE SOLVED BY THE INVENTION

In the method described in Patent Document 1, all the encoded viewpoint videos each have a size same as that of an original one. A multi-view stereoscopic display currently being put into practical use, however, uses a display having the number of pixels same as that of a conventionally widely available display, and a viewpoint video is displayed with the number of pixels thinned to one out of the total number of viewpoints thereof so as to keep manufacturing cost down. This means that a large part of encoded and transmitted pixel data is discarded, resulting in a low encoding efficiency. Patent Document 1 also describes a method of synthesizing a thinned-out viewpoint video using a depth map associated with the transmitted viewpoint video. This requires, however, encoding and transmitting depth maps as many as the number of viewpoints, still resulting in a low encoding efficiency.

In the method disclosed in Patent Document 1, a multi-view video and a depth map are individually subjected to inter-view predictive encoding. A conventional method of inter-view predictive encoding includes, however, steps of: searching for corresponding positions of pixels in different viewpoint videos; extracting an amount of displacement between the pixel positions as a parallax vector; and performing the inter-view predictive encoding and decoding using the extracted parallax vector. This takes long time to search for the parallax vector and decreases accuracy of prediction along with a slow rate of encoding and decoding.

In light of the above, another method is proposed in which a plurality of videos and a plurality of depth maps are respectively synthesized to reduce respective amounts of data and then are encoded and transmitted. Such syntheses can generally reduce the amount of data but may result in deterioration in picture quality. Thus, a still another method is proposed in which various synthesis methods can be selected depending on an intended use, including a method of encoding a plurality of videos and a plurality of depth maps without synthesizing.

On the other hand, regarding a method of encoding a multi-view video, for example, the MPEG (Moving Picture Expert Group) affiliated by the ISO (International Organization for Standardization) standardizes the MVC (Multiview Video Coding) as Annex H (Multiview video coding) of the MPEG-4 Video Part 10 AVC (Advanced Video Coding) Encoding Standard (ISO/IEC 14496-10/ITU-T H.264: which will be hereinafter abbreviated as the "MPEG-4 AVC encoding standard" where appropriate). The MPEG-4 AVC encoding standard is used for a TV broadcast for cell phones, a high density optical disk, or the like. The 3DV/FTV (3-Dimensional Video/ Free-viewpoint TV) encoding standard has been drawn up with an aim to further improve encoding efficiency, making use of information on depth of a video.

When the above-described synthesis method in which selection from a plurality of techniques of synthesizing a multi-view video and a depth map is possible is configured to be incorporated into a conventional standard, the synthesis method needs to be made compatible with an old system and to prevent an erroneous operation from being caused in the old system. Thus, forward compatibility is preferably maintained in which part of data can be used also in the old system, with a change in a signal system of an encoded bit string as little as possible. Also, a resource (an encoding tool) can be preferably shared with the old system.

The present invention has been made in light of the above-described problems and in an attempt to provide: a stereoscopic video encoding device, a stereoscopic video encoding method, and a stereoscopic video encoding program, each of which efficiently encodes and transmits a stereoscopic video; and a stereoscopic video decoding device, a stereoscopic video decoding method, and a stereoscopic video decoding program, each of which decodes the encoded stereoscopic video, while maintaining compatibility with an old system.

MEANS FOR SOLVING THE PROBLEM

To solve the problems described above, in a first aspect of the present invention, a stereoscopic video encoding device: encodes a synthesized video and a synthesized depth map, the synthesized video being created by synthesizing a multi-view video which is a set of videos made up of single video viewed from a plurality of different viewpoints, using one of a plurality of types of prescribed video synthesis techniques, the synthesized depth map being associated therewith the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques, adds, to the encoded synthesized video and the encoded synthesized depth map, for each prescribed unit, identification information for identifying a type of information of the prescribed unit; and thereby creates a series of encoded bit strings. The stereoscopic video encoding device is configured to include a video synthesis unit, a video encoding unit, a depth map synthesis unit, a depth map encoding unit, a parameter encoding unit, and a multiplexing unit.

With the configuration, the video synthesis unit of the stereoscopic video encoding device: synthesizes the multi-view video using one of a plurality of types of the prescribed video synthesis techniques; and thereby creates the synthesized video as a target for encoding. The video encoding unit of the stereoscopic video encoding device: encodes the synthesized video; adds thereto first identification information for identifying being the synthesized video having been subjected to the encoding; and thereby creates an encoded synthesized video. The depth map synthesis unit of the stereoscopic video encoding device: synthesizes a plurality of depth maps associated with the multi-view video, using one of a plurality of types of the prescribed depth map synthesis techniques; and thereby creates the synthesized depth map as a target for the encoding. The depth map encoding unit of the stereoscopic video encoding device: encodes the synthesized depth map; adds thereto second identification information for identifying being the synthesized depth map having been subjected to the encoding; and thereby creates an encoded synthesized depth map. The parameter encoding unit of the stereoscopic video encoding device: encodes third identification information for identifying the video synthesis technique used for synthesizing the synthesized video and the depth map synthesis technique used for synthesizing the synthesized depth map, as a parameter of auxiliary information used for decoding an encoded video or displaying a decoded video; adds thereto fourth identification information for identifying being the auxiliary information having been subjected to the encoding; and thereby creates an encoded parameter. The multiplexing unit of the stereoscopic video encoding device: multiplexes the encoded synthesized video, the encoded synthesized depth map, and the encoded parameter; and thereby creates a series of the encoded bit strings.

In a second aspect of the present invention, the video encoding unit of the stereoscopic video encoding device in the first aspect of the present invention: encodes a reference viewpoint video which is a video at a reference viewpoint, the reference viewpoint being set as a viewpoint determined as a reference, from among a plurality of the different viewpoints, and a non-reference viewpoint video which is a video at a viewpoint other than the reference viewpoint, as the respective prescribed units different from each other; and adds, as the first identification information, respective unique values different from each other, to the prescribed unit of the reference viewpoint video and the prescribed unit of the non-reference viewpoint video.

With the configuration, the stereoscopic video encoding device encodes the reference viewpoint video and the non-reference viewpoint video as respective unit information identifiable one from the other.

This makes it possible to determine whether the encoded bit string received contains the reference viewpoint video or the non-reference viewpoint video a side of the stereoscopic video decoding device, by referring to the first identification information.

In a third aspect of the present invention, the parameter encoding unit of the stereoscopic video encoding device in the first or second aspect encodes fifth identification information for identifying a set of encoding tools used for encoding the synthesized depth map and the synthesized video, as another parameter of the auxiliary information.

With the configuration, the parameter encoding unit of the stereoscopic video encoding device encodes the fifth identification information for identifying the set of the encoding tool as the auxiliary information, which is unit information different from the synthesized video and the synthesized depth map.

This makes it possible to: refer to the fifth identification information in the auxiliary information; and thereby determine whether or not the encoded synthesized video and the encoded synthesized depth map are decodable on a side of stereoscopic video decoding device which receives the encoded bit string.

In a fourth aspect of the present invention, in the stereoscopic video encoding device in the first or second aspect: the third identification information is encoded as auxiliary information of type 1 which is information containing only one type of information and additional information associated with the one type of information, in the prescribed unit; and the fourth identification information is encoded with added thereto sixth identification information for identifying being the auxiliary information of type 1 and seventh identification information for identifying the third identification information being contained.

With the configuration, the stereoscopic video encoding device encodes and transmits third identification information indicating a synthesis technique used for a video and a depth map as unit information different from other parameter.

This makes it possible to: detect the unit information having the sixth identification information and the seventh identification information; and extract the third identification information from the unit information on the side of the stereoscopic video decoding device which receives the encoded bit string.

In a fifth aspect of the present invention, in the stereoscopic video encoding device in the third aspect: the third identification information is encoded as auxiliary information of type 1 which is information containing only one type of information and additional information associated with the one type of information, in the prescribed unit; the fourth identification information is encoded with added thereto sixth identification information for identifying being the auxiliary information of type 1 and seventh identification information for identifying the third identification information being contained; and, when the fifth identification information is encoded, the fifth identification information is contained in auxiliary information of type 2 which is information containing a plurality of types of information in the prescribed unit, and is added with eighth identification information for identifying being the auxiliary information of type 2.

With the configuration, the stereoscopic video encoding device: encodes and transmits the third identification information for identifying a synthesis technique used for a video and a depth map as unit information different from other parameter; and encodes and transmits the fifth identification information indicating a set of encoding tools used for the video and the depth map as unit information together with a plurality of parameters.

This makes it possible to: detect the unit information having the sixth identification information and the seventh identification information and extract the third identification information from the unit information on the side of the stereoscopic video decoding device which receives the encoded bit string; and also detect the unit information having the eighth identification information and extract the fifth identification information from the unit information.

In a sixth aspect of the present invention, a stereoscopic video decoding device synthesizes a multi-view video using a decoded synthesized video, a decoded synthesized depth map, and auxiliary information which are obtained by: decoding an encoded bit string in which a synthesized video, a synthesized depth map, and the auxiliary information are encoded; adding, to the encoded information, for each prescribed unit, identification information for identifying a type of information of the prescribed unit; and multiplexing the encoded and added information. The synthesized video is created by synthesizing a multi-view video which is a set of videos made up of single video viewed from a plurality of different viewpoints, using one of a plurality of types of prescribed video synthesis techniques. The synthesized depth map is associated with the multi-view video and is created by synthesizing a depth map which is a map of information on a depth value of the multi-view video for each pixel. The depth value is a parallax between the different viewpoints of the multi-view video, using one of a plurality of types of prescribed depth map synthesis techniques. The auxiliary information contains information for identifying the video synthesis technique used for synthesizing the synthesized video and the depth map synthesis technique used for synthesizing the synthesized depth map. In the encoded bit string, multiplexed are, for the each prescribed unit: an encoded synthesized video which is created by adding, to the synthesized video having been encoded, first identification information for identifying being the having-been-encoded synthesized video; an encoded synthesized depth map which is created by adding, to the synthesized depth map having been encoded, second identification information for identifying being the having-been-encoded synthesized depth map; and an encoded parameter in which third identification information is encoded as a parameter of auxiliary information used for decoding an encoded video or displaying a decoded video. The third identification information is information for identifying the video synthesis technique used for synthesizing the synthesized video and also for identifying the depth map synthesis technique used for synthesizing the synthesized depth map. Fourth identification information for identifying being the auxiliary information having been encoded is added to the encoded parameter. The stereoscopic video decoding device includes a separation unit, a parameter decoding unit, a video decoding unit, a depth map decoding unit, and a multi-view video synthesis unit.

With the configuration, the separation unit separates, for the each prescribed unit, a unit having the first identification information as the encoded synthesized video, a unit having the second identification information as the encoded synthesized depth map, and a unit having the fourth identification information as the encoded parameter. The parameter decoding unit decodes the third identification information from the encoded parameter. The video decoding unit: decodes the encoded synthesized video; and thereby creates the decoded synthesized video. The multi-view video synthesis unit synthesizes a video at a plurality of viewpoints in accordance with the third identification information created by the parameter decoding unit, using the decoded synthesized video and the decoded synthesized depth map.

This makes it possible to for the stereoscopic video decoding device to: decode the unit information which is different from the encoded synthesized video and the encoded synthesized depth map; and extract the third identification information indicating the synthesis technique of the video and the depth map.

In a seventh aspect of the present invention, in the stereoscopic video decoding device in the sixth aspect, in the encoded synthesized video: a reference viewpoint video which is a video viewed from a viewpoint specified as a reference viewpoint from among a plurality of the different viewpoints, and a non-reference viewpoint video which is a video at a viewpoint other than the reference viewpoint are encoded as the respective prescribed units different from each other; and the prescribed unit of the reference viewpoint video and the prescribed unit of the non-reference viewpoint video have respective unique values different from each other, as the first identification information.

With the configuration, the stereoscopic video decoding device can determine whether the encoded unit information contains the reference viewpoint video or the non-reference viewpoint video by referring to the first identification information.

In an eighth aspect of the present invention, the stereoscopic video decoding device in the sixth or seventh aspect, in the encoded parameter, fifth identification information for identifying a set of encoding tools used for encoding the synthesized video and the synthesized depth map is encoded as another parameter of the auxiliary information. The parameter decoding unit further decodes the fifth identification information from the encoded parameter. If the fifth identification information decoded by the parameter decoding unit indicates that the synthesized video has been encoded by a set of encoding tools which is decodable by the decoding unit, the video decoding unit decodes the encoded synthesized video. On the other hand, if the fifth identification information does not indicate that the synthesized video has been encoded by a set of encoding tools which is decodable by the decoding unit, the video decoding unit does not decode the encoded synthesized video.

With the configuration, the stereoscopic video decoding device determines whether or not the encoded synthesized video and the encoded synthesized depth map are decodable by referring to the fifth identification information in the auxiliary information encoded as unit information different from the synthesized video and the synthesized depth map.

This makes it possible to determine whether or not the encoded synthesized video and the encoded synthesized depth map are decodable prior to an actual decoding thereof.

In a ninth aspect of the present invention, in the stereoscopic video decoding device in the sixth or seventh aspect, the third identification information is encoded as the auxiliary information of type 1 which is information containing only one type of information and additional information associated with the one type of information, in the prescribed unit. The fourth identification information is encoded with added thereto sixth identification information for identifying being the auxiliary information of type 1 and seventh identification information for identifying the third identification information being contained. If the prescribed unit has the sixth identification information, the separation unit separates the prescribed unit as the encoded parameter. If the encoded parameter having the sixth identification information has the seventh identification information, the parameter decoding unit decodes the third identification information from the encoded parameter.

With the configuration, the stereoscopic video decoding device: detects the unit information having the sixth identification information and the seventh identification information; and extracts the third identification information from the unit information.

This makes it possible for the stereoscopic video decoding device to quickly extract the third identification information indicating the synthesis technique of the video and the depth map from the unit information in which the third identification information is individually encoded.

In a tenth aspect of the present invention, in the stereoscopic video decoding device in the eighth aspect, the third identification information is encoded as the auxiliary information of type 1 which is information containing only one type of information and additional information associated with the one type of information, in the prescribed unit. The fourth identification information is encoded with added thereto sixth identification information for identifying being the auxiliary information of type 1 and seventh identification information for identifying the third identification information being contained. The fifth identification information: is encoded as auxiliary information of type 2 which is information containing a plurality of prescribed types of information in the prescribed unit; and is also encoded with added thereto eighth identification information for identifying being the auxiliary information of type 2. If the prescribed unit has the sixth identification information or the eighth identification information, the separation unit separates the prescribed unit as the encoded parameter. If the encoded parameter having the sixth identification information has the seventh identification information, the parameter decoding unit: decodes the third identification information from the encoded parameter; and also decodes fifth identification information from the encoded parameter having the eighth identification information.

With the configuration, the stereoscopic video decoding device: detects the unit information having the sixth identification information and the seventh identification information and extracts the third identification information from the unit information; and also detects the unit information having the eighth identification information and extracts the fifth identification information from the unit information.

This makes it possible for the stereoscopic video decoding device to: quickly extract the third identification information indicating a synthesis technique used for a video and a depth map from the unit information in which the third identification information is individually encoded; and determine whether or not the encoded synthesized video and the encoded synthesized depth map are decodable.

In an eleventh aspect of the present invention, a stereoscopic video encoding method encodes a synthesized video and a synthesized depth map, the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques; adds, to the encoded synthesized video and the encoded synthesized depth map, for each prescribed unit, identification information for identifying a type of information of the prescribed unit; and thereby creates a series of encoded bit strings. The stereoscopic video encoding method is a procedure including a video synthesis processing step, a video encoding processing step, a depth map synthesis processing step, a depth map encoding processing step, a parameter encoding processing step, and a multiplexing processing step.

With the procedure, in the video synthesis processing step of the stereoscopic video encoding method: the multi-view video is synthesized using one of a plurality of types of the prescribed video synthesis techniques; and the synthesized video as a target for encoding is thereby created. In the video encoding processing: the synthesized video is encoded; first identification information for identifying being the synthesized video having been subjected to the encoding is added thereto; and an encoded synthesized video is thereby created. In the depth map synthesis processing: a plurality of depth maps associated with the multi-view video is synthesized using one of a plurality of types of the prescribed depth map synthesis techniques; and the synthesized depth map as a target for the encoding is thereby created. In the depth map encoding processing step: the synthesized depth map is encoded; second identification information for identifying being the synthesized depth map having been subjected to the encoding is added thereto; and an encoded synthesized depth map is thereby created. In the parameter encoding processing: third identification information for identifying the video synthesis technique used for synthesizing the synthesized video and the depth map synthesis technique used for synthesizing the synthesized depth map is encoded as a parameter of auxiliary information used for decoding an encoded video or displaying a decoded video; fourth identification information for identifying being the auxiliary information having been subjected to the encoding is added thereto; and an encoded parameter is thereby created. In the multiplexing processing, the encoded synthesized video, the encoded synthesized depth map, and the encoded parameter are multiplexed; and a series of the encoded bit strings is thereby created.

This makes it possible to encode and transmit the synthesized video in which a plurality of videos are synthesized, the synthesized depth map in which a plurality of depth maps are synthesized, and the third identification information which indicates the synthesis technique used for synthesizing the video and the depth map, as information having respective units different from one another.

In a twelfth aspect of the present invention, a stereoscopic video decoding method synthesizes a multi-view video using a decoded synthesized video, a decoded synthesized depth map, and auxiliary information which are obtained by: decoding an encoded bit string in which a synthesized video, a synthesized depth map, and the auxiliary information are encoded; adding, to the encoded information, for each prescribed unit, identification information for identifying a type of information of the prescribed unit; and multiplexing the encoded and added information. The synthesized video is created by synthesizing a multi-view video which is a set of videos made up of single video viewed from a plurality of different viewpoints, using one of a plurality of types of prescribed video synthesis techniques. The synthesized depth map is associated with the multi-view video and is created by synthesizing a depth map which is a map of information on a depth value of the multi-view video for each pixel. The depth value is a parallax between the different viewpoints of the multi-view video, using one of a plurality of types of prescribed depth map synthesis techniques; and the auxiliary information contains information for identifying the video synthesis technique used for synthesizing the synthesized video and the depth map synthesis technique used for synthesizing the synthesized depth map. In the encoded bit string, multiplexed are, for the each prescribed unit: an encoded synthesized video which is created by adding, to the synthesized video having been encoded, first identification information for identifying being the having-been-encoded synthesized video; an encoded synthesized depth map which is created by adding, to the synthesized depth map having been encoded, second identification information for identifying being the having-been-encoded synthesized depth map; and an encoded parameter in which third identification information is encoded as a parameter of auxiliary information used for decoding an encoded video or displaying a decoded video. The third identification information is information for identifying the video synthesis technique used for synthesizing the synthesized video and also for identifying the depth map synthesis technique used for synthesizing the synthesized depth map. Fourth identification information for identifying being the auxiliary information having been encoded is added to the encoded parameter. The stereoscopic video decoding method is a procedure including a separation processing step, a parameter decoding processing step, a video decoding processing step, a depth map decoding processing step, a multi-view video synthesis processing step.

With the procedure, in the separation processing step of the stereoscopic video decoding method, separates, for the each prescribed unit, a unit having the first identification information as the encoded synthesized video, a unit having the second identification information as the encoded synthesized depth map, and a unit having the fourth identification information as the encoded parameter. In the parameter decoding processing step, the third identification information is decoded from the encoded parameter. In the video decoding processing step: the encoded synthesized video is decoded; and the decoded synthesized video is thereby created. In the depth map decoding processing step: the encoded synthesized depth map is decoded; and the decoded synthesized depth map is thereby created. In the multi-view video synthesis processing step, a video at a plurality of viewpoints is synthesized in accordance with the third identification information created by the parameter decoding unit, using the decoded synthesized video and the decoded synthesized depth map.

This makes it possible to: decode the unit information which has been encoded differently from the synthesized video and the synthesized depth map; and extract the third identification information which indicates the synthesis technique used for the synthesized video and the synthesized depth map.

The stereoscopic video encoding device in the first aspect of the present invention can also be realized by a stereoscopic video encoding program in a thirteenth aspect of the present invention which causes a hardware resource of a generally-available computer such as a CPU (central processing unit) and a memory to serve as the video synthesis unit, the video encoding unit, the depth map synthesis unit, the depth map encoding unit, the parameter encoding unit, and the multiplexing unit.

The stereoscopic video decoding device in the sixth aspect of the present invention can also be realized by a stereoscopic video decoding program in a fourteenth aspect of the present invention which causes a hardware resource of a generally-available computer such as a CPU and a memory to serve as the separation unit, the parameter decoding unit, the video decoding unit, the depth map decoding unit, and the multi-view video synthesis unit.

ADVANTAGEOUS EFFECTS OF THE INTENTION

According to the first, eleventh, or thirtieth aspect of the invention, the third identification information indicating the synthesis technique of each of the synthesized video and the synthesized depth map is encoded as unit information different from the synthesized video and the synthesized depth map. This makes it possible to encode the synthesized video and the synthesized depth map using an encoding method same as a conventional one.

According to the second aspect of the invention, upon receipt of the encoded bit string transmitted from the stereoscopic video encoding device, whether the encoded bit string is a reference viewpoint video or a non-reference viewpoint video can be determined on a side of the stereoscopic video decoding device, by referring to the first identification information. This makes it possible for a stereoscopic video decoding device in an old system which does not support a multi-view video to make use of only information on encoding of the reference viewpoint video and ignore that of the non-reference viewpoint video.

According to the third aspect of the invention, upon receipt of the encoded bit string transmitted from the stereoscopic video encoding device whether or not the encoded synthesized video or the encoded synthesized depth map is decodable can be determined on the side of the stereoscopic video decoding device, by referring to the fifth identification information in the auxiliary information. If not decodable, the encoded synthesized video or the encoded synthesized depth map is not subjected to decoding. This makes it possible to prevent an erroneous operation.

According to the fourth aspect of the invention, upon receipt of the encoded bit string transmitted from the stereoscopic video encoding device, the information unit having the sixth identification information and the seventh identification information is detected on the side of the stereoscopic video decoding device. This makes it possible to quickly extract the third identification information from the unit information.

According to the fifth aspect of the invention, upon receipt of the encoded bit string transmitted from the stereoscopic video encoding device, the unit information having the sixth identification information and the seventh identification information is detected on the side of the stereoscopic video decoding device. This makes it possible to quickly extract the third identification information from the unit information. Further, the unit information having the eighth identification information is detected, and the fifth identification information is extracted from the unit information so as to determine whether or not the encoded synthesized video or the encoded synthesized depth map is decodable. If not decodable, the encoded synthesized video or the encoded synthesized depth map is not subjected to decoding. This can prevent an erroneous operation.

According to the sixth, twelfth, or fourteenth aspect of the invention, the third identification information indicating a synthesis technique of the synthesized video and the synthesized depth map is encoded as unit information different from the synthesized video and the synthesized depth map. This makes it possible to encode the synthesized video and the synthesized depth map using an encoding method same as a conventional one.

According to the seventh aspect of the invention, whether the encoded bit string is a reference viewpoint video or a non-reference viewpoint video can be determined by referring to the first identification information. This makes it possible for a stereoscopic video decoding device in an old system which does not support a multi-view video, to make use of only information on encoding of the reference viewpoint video and ignore that of the non-reference viewpoint video.

According to the eighth aspect of the invention, the stereoscopic video decoding device can determine whether or not the encoded synthesized video and the encoded synthesized depth map are decodable by referring to the fifth identification information in the auxiliary information. If the encoded synthesized video and the encoded synthesized depth map are not decodable, the stereoscopic video decoding device does not decode the video and the depth map. This makes it possible to prevent an erroneous operation.

According to the ninth aspect of the invention, the stereoscopic video decoding device can detect the unit information having the sixth identification information and the seventh identification information and can quickly extract the third identification information from the unit information.

According to the tenth aspect of the invention, a side of the stereoscopic video decoding device can detect the unit information having the sixth identification information and the seventh identification information and can quickly extract the third identification information from the unit information. The side of the stereoscopic video decoding device can: detect the unit information having the eighth identification information; extract the fifth identification information from the unit information; determine whether or not the encoded synthesized video and the encoded synthesized depth map are decodable; and, if not decodable, does not decode the encoded synthesized video and the encoded synthesized depth map. This makes it possible to prevent an erroneous operation.

BRIEF DESCRIPTION OF THE DRAWINGS

FIG. 1 is a block diagram illustrating a configuration of a stereoscopic video transmission system including a stereoscopic video encoding device and a stereoscopic video decoding device according to a first embodiment of the present invention.

FIG. 2 is a block diagram illustrating a configuration of the stereoscopic video encoding device according to the first embodiment of the present invention.

FIG. 3Aa to FIG. 3Ac are block diagrams each illustrating a configuration of a depth map synthesis unit of the stereoscopic video encoding device according to the first embodiment. FIG. 3Aa illustrates the depth map synthesis unit using a technique A; FIG. 3Ab, using a technique B; and FIG. 3Ac, using a technique C.

FIG. 3Ba and FIG. 3Bb are also block diagrams each illustrating the depth map synthesis unit of the stereoscopic video encoding device according to the first embodiment. FIG. 3Ba illustrates the stereoscopic video encoding device using a technique D; and FIG. 3Bb, using a technique E.

FIG. 4 is a diagram for explaining outlines of the synthesis techniques of the depth maps which can be selected in the stereoscopic video encoding device according to the first embodiment.

FIG. 5A to FIG. 5C are diagrams each for explaining how a synthesized depth map is reduced in the stereoscopic video encoding device according to the first embodiment. FIG. 5A illustrates a case where the synthesized depth map is an entire depth map; FIG. 5B, a residual depth map; and FIG. 5C, a warp data.

FIG. 6 is a diagram for explaining how the depth map is synthesized in the stereoscopic video encoding device according to the first embodiment.

FIG. 7A to FIG. 7C are block diagrams each illustrating a configuration of a video synthesis unit of the stereoscopic video encoding device according to the first embodiment. FIG. 7A illustrates the configuration of the video synthesis unit using the technique A and the technique B; FIG. 7B, using the technique C and the technique D; and FIG. 7C, using the technique E.

FIG. 8 is a diagram for explaining outlines of the synthesis techniques of multi-view videos which can be selected in the stereoscopic video encoding device according to the first embodiment.

FIG. 9A and FIG. 9B are diagrams each for explaining how a synthesized multi-view video is reduced in the stereoscopic video encoding device according to the first embodiment. FIG. 9A illustrates a case where a single residual video is reduced; and, FIG. 9B, where two residual videos are reduced.

FIG. 10 is a diagram illustrating major units and elements necessary for explaining how a residual video is created in the stereoscopic video encoding device according to the first embodiment.

FIG. 11 is a diagram for explaining how a hole mask is created in the stereoscopic video encoding device according to the first embodiment.

FIG. 12A and FIG. 12B are diagrams for explaining synthesis techniques of a depth map and a multi-view video, respectively, in the stereoscopic video encoding device according to a variation of the first embodiment. FIG. 12A illustrates a case of the depth map; and, FIG. 12B, the multi-view video.

FIG. 13A to FIG. 13F are diagrams each illustrating a data structure of an encoded multi-view video or depth map in the stereoscopic video encoding device according to the first embodiment. FIG. 13A illustrates the data structure of an encoded reference viewpoint video; FIG. 13B, an encoded residual video; FIG. 13C, an encoded entire depth map; FIG. 13D, an encoded residual depth map; FIG. 13E, an encoded entire depth map; and FIG. 13F, an encoded residual depth map.

FIG. 14A to FIG. 14E are diagrams each illustrating a data structure of an encoded parameter in the stereoscopic video encoding device according to the first and a second embodiments. FIG. 14A illustrates the data structure of encoding management information on a reference viewpoint video or a middle viewpoint video; FIG. 14B, encoding management information on a non-reference viewpoint video; and, FIG. 14C, a camera parameter; FIG. 14D, a depth type according to the first embodiment; and FIG. 14E, a depth type according to the second embodiment.

FIG. 15 is a diagram illustrating a correspondence relation between values of the depth types and the synthesis techniques in the stereoscopic video encoding device according to the first embodiment.

FIG. 16 is a block diagram illustrating a configuration of the stereoscopic video decoding device according to the first embodiment.

FIG. 17 is a diagram for explaining how a specified viewpoint video is synthesized in the stereoscopic video decoding device according to the first embodiment.

FIG. 18Aa and FIG. 18Ab are block diagrams each illustrating a configuration of a multi-view video synthesis unit of the stereoscopic video decoding device according to the first embodiment. FIG. 18Aa illustrates the configuration of the multi-view video synthesis unit using the technique A; and FIG. 18Ab, using the technique B.

FIG. 18B is also a block diagram illustrating a configuration of the multi-view video synthesis unit of the stereoscopic video decoding device according to the first embodiment, using the technique C.

FIG. 18Ca and FIG. 18Cb are also block diagrams each illustrating a configuration of the multi-view video synthesis unit of the stereoscopic video decoding device according to the first embodiment. FIG. 18Ca illustrates the configuration of the multi-view video synthesis unit using the technique D; and FIG. 18Cb, using the technique E.

FIG. 19 is a flowchart illustrating a flow of steps performed by the stereoscopic video encoding device according to the first embodiment.

FIG. 20 is a flowchart illustrating a flow of steps performed by the parameter encoding unit of the stereoscopic video encoding device according to the first embodiment.

FIG. 21 is a flowchart illustrating a flow of steps performed by the stereoscopic video decoding device according to the first embodiment.

FIG. 22 is a flowchart illustrating a flow of steps performed by the parameter decoding unit of the stereoscopic video decoding device according to the first embodiment.

FIG. 23 is a flowchart illustrating a flow of steps performed by a parameter decoding unit of a stereoscopic video decoding device according to the second embodiment.

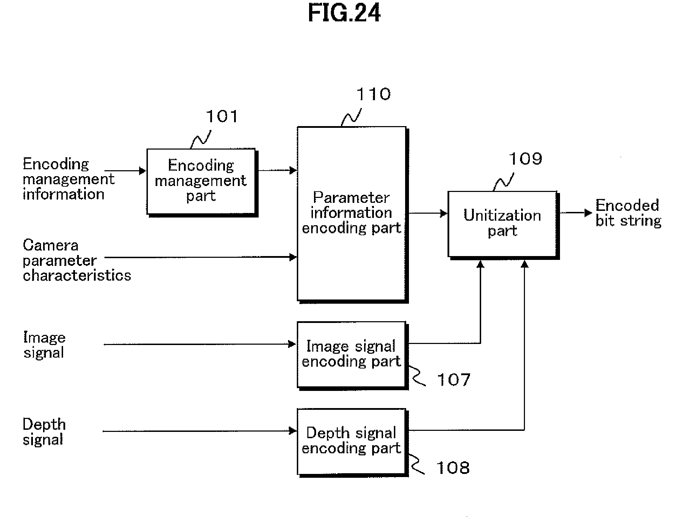

FIG. 24 is a block diagram illustrating a configuration of a stereoscopic video encoding device according to a conventional technology.

EMBODIMENTS FOR CARRYING OUT THE INVENTION

Embodiments of the present invention are described below with reference to accompanied drawings.

<First Embodiment>

[Stereoscopic video transmission system]

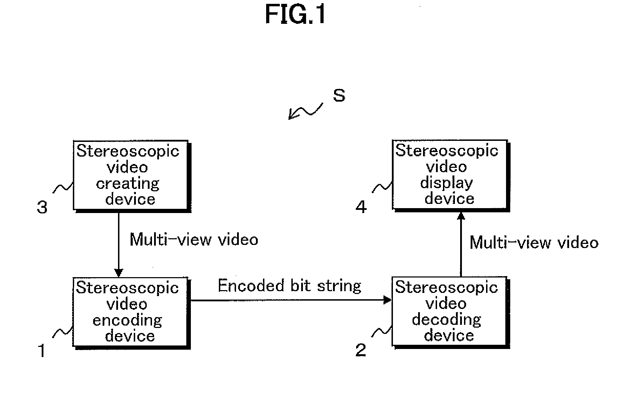

With reference to FIG. 1 is described a stereoscopic video transmission system S including a stereoscopic video encoding device and a stereoscopic video decoding device according to a first embodiment of the present invention.
The stereoscopic video transmission system S: encodes a multi-view video taken by a camera or the like, and a depth map associated therewith; transmits the encoded multi-view video and depth map to a destination; and creates a multi-view video at the destination. The stereoscopic video transmission system S herein includes a stereoscopic video encoding device 1, a stereoscopic video decoding device 2, a stereoscopic video creating device 3, and a stereoscopic video display device 4.
The stereoscopic video encoding device 1: encodes a multi-view video created by the stereoscopic video creating device 3; outputs the encoded multi-view video as an encoded bit string (a bit stream) to a transmission path; and thereby transmits the bit stream to the stereoscopic video decoding device 2. The stereoscopic video decoding device 2: decodes the encoded bit string transmitted from the stereoscopic video encoding device 1; thereby creates a multi-view video; and outputs the multi-view video to the stereoscopic video display device 4.
The stereoscopic video creating device 3 is embodied by a camera capable of taking a stereoscopic video, a CG (computer graphics) creating device, or the like. The stereoscopic video creating device 3: creates a stereoscopic video (a multi-view video) and a depth map associated therewith; and outputs the stereoscopic video and the depth map to the stereoscopic video encoding device 1. The stereoscopic video display device 4: inputs therein the multi-view video created by the stereoscopic video decoding device 2; and thereby displays therein the stereoscopic video.
It is assumed in the present invention that the encoded bit string is multiplexed and includes: an encoded video; an encoded depth map; and an encoded parameter which is a parameter subjected to encoding and is required for decoding the above-described encoded information by the stereoscopic video decoding device 2, or for synthesizing or displaying videos.
It is also assumed in the present invention that: when encoded bit strings are multiplexed, to each of which the identification information for identifying, for each predetermined unit, a type of information of the predetermined unit is added; and the multiplexed encoded bit strings are then transmitted as a series of the encoded bit strings, from the stereoscopic video encoding device 1 to the stereoscopic video decoding device 2.
In this embodiment, a case is exemplified in which an encoded bit string is transmitted in accordance with the MPEG-4 AVC encoding standard. The predetermined unit described above thus corresponds to a NALU (Network Abstraction Layer Unit) in the MPEG-4 AVC encoding standard, and various types of information is transmitted with the NALU as a unit.
The encoding method used herein is not limited to the above-described and may be those in accordance with, for example, the MPEG-4 MVC + Depth encoding standard and the 3D-AVC encoding standard.

[Configuration of stereoscopic video encoding device]

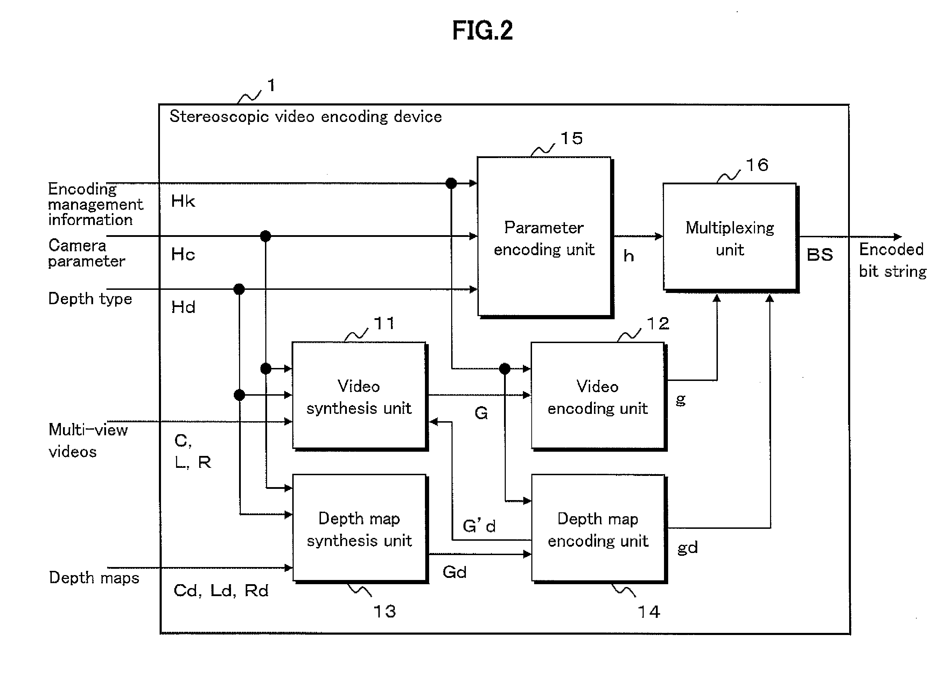

Next is described a configuration of the stereoscopic video encoding device 1 according to the first embodiment with reference to FIG. 2 (as well as FIG. 1 where necessary).
As illustrated in FIG. 2, the stereoscopic video encoding device (which may also be simply referred to as an "encoding device" where appropriate) 1 according to the first embodiment includes a video synthesis unit 11, a video encoding unit 12, a depth map synthesis unit 13, a depth map encoding unit 14, a parameter encoding unit 15, and a multiplexing unit 16.
The encoding device 1 receives: as a stereoscopic video from outside, input of: a reference viewpoint video C which is a video viewed from a viewpoint as a reference (a reference viewpoint); a left viewpoint video L which is a video viewed from a left viewpoint (a non-reference viewpoint) positioned at a prescribed distance horizontally leftward from the reference viewpoint; a right viewpoint video R which is a video viewed from a right viewpoint (another non-reference viewpoint) positioned at a prescribed distance horizontally rightward from the reference viewpoint; a reference viewpoint depth map Cd which is a depth map corresponding to the reference viewpoint video C; a left viewpoint depth map Ld which is a depth map corresponding to the left viewpoint video L; a right viewpoint depth map Rd which is a depth map corresponding to the right viewpoint video R; and a parameter which includes an encoding management information Hk, a camera parameter Hc, and a depth type Hd.
The term "outside" used herein means, for example, the stereoscopic video creating device 3. Some of the depth types Hd each of which specifies how to synthesize a multi-view video and a depth map, and some part of the encoding management information Hk each piece of which specifies how to encode the multi-view video and the depth map may be inputted from a user interface (an input unit) not shown.
The encoding device 1 creates an encoded bit string BS using the above-described input information and transmits the created encoded bit string BS to the stereoscopic video decoding device 2 (which may also be simply referred to as a "decoding device" where appropriate).

The encoding management information Hk is information on encoding and includes, for example, management information on a sequence such as a frame rate and the number of frames, and a parameter such as a profile ID (Identification) which indicates a set of tools used for the encoding.

The camera parameter Hc is a parameter on a camera which takes an inputted video at each viewpoint, and includes a shortest distance to an object, a farthest distance to the object, a focal length thereof, and coordinate values of a left viewpoint, a reference viewpoint, and a right viewpoint. The camera parameter Hc is used when, for example, a depth map or a video is projected to an other viewpoint using the depth map, as information on a coefficient for converting a depth value given as a value of a pixel of the depth map into a shift amount of the pixel.

The depth type Hd is a parameter showing how to synthesize the videos C, L, and R and the depth maps Cd, Ld, Rd inputted by the encoding device 1.

It is assumed in this embodiment that: the reference viewpoint is a middle viewpoint; the left viewpoint (non-reference viewpoint) is a viewpoint on a left of the object; and the right viewpoint (non-reference viewpoint) is a viewpoint on a right of the object. The present invention is not, however, limited to this. For example, the left viewpoint may be regarded as the reference viewpoint, and the middle viewpoint and the right viewpoint may be regarded as the non-reference viewpoints. It is also assumed in this embodiment that the reference viewpoint and each of the non-reference viewpoints are apart from each other in the horizontal direction. The present invention is not, however, limited to this. The reference viewpoint and the non-reference viewpoints may be apart from each other in any other direction such as a longitudinal direction and an oblique direction, in which angles for observing an object from the different viewpoints are different from each other. Further, the number of the non-reference viewpoints is not limited to two, and at least one will do, including three or more. The number of viewpoints of a multi-view video may not be equal to the number of viewpoints of a depth map corresponding thereto.

It is assumed in this embodiment, for a purpose of explanation, that a three-viewpoint video as a multi-view video constituted by the reference viewpoint (middle viewpoint) video C, the left viewpoint video L, and the right viewpoint video R is inputted together with the depth maps Cd, Ld, Rd, respectively associated therewith.

The encoding device 1: synthesizes the inputted videos and depth maps using a synthesis method specified by the depth type Hd; encodes the synthesized videos and depth maps and the parameter including the encoding management information Hk, the camera parameter Hc, and the depth type Hd; multiplexes the encoded videos, depth maps, and parameter into the encoded bit string BS; and transmits the multiplexed bit string BS to the stereoscopic video decoding device 2.

As illustrated in FIG. 2, the video synthesis unit 11: inputs therein the reference viewpoint video C, the left viewpoint video L, the right viewpoint video R, the camera parameter Hc, and the depth type Hd from the outside; inputs a decoded synthesized depth map G'd from the depth map encoding unit 14; thereby creates a synthesized video G; and outputs the created synthesized video G to the video encoding unit 12. Though described in detail hereinafter, the depth map encoding unit 14 also has a function of decoding an encoded depth map.

Note that a signal inputted into or outputted from the video synthesis unit 11 varies according to the depth type Hd which indicates a technique of synthesizing a video and a depth map. It is assumed in FIG. 2, however, that: a signal represented by reference characters C, L, and R as a multi-view video is inputted; a signal represented by a reference character G'd is inputted as a decoded synthesized depth map; and a signal represented by a reference character G is outputted as a synthesized video.

The video encoding unit 12: inputs therein the encoding management information Hk from the outside and the synthesized video G from the video synthesis unit 11; encodes the synthesized video G using an encoding method specified by the encoding management information Hk; and thereby creates an encoded synthesized video g. The video encoding unit 12 outputs the created encoded synthesized video g to the multiplexing unit 16.

Note that when the video encoding unit 12 in this embodiment encodes the synthesized video G, the video encoding unit 12: encodes information on a video at the reference viewpoint and information on a video at the non-reference viewpoint separately; and outputs each of the information as individual encoded data by a unit (NALU) different from each other to the multiplexing unit 16. Also note that the video encoding unit 12 encodes the reference viewpoint video C without processing, so as to maintain upward compatibility.

A structure of the encoded data of a video will be described later.

In this embodiment, the video encoding unit 12 is configured to encode the synthesized video G, using an encoding method specified by the encoding management information Hk from among a plurality of prescribed encoding methods.

When a multi-view video is encoded as the synthesized video G having a plurality of viewpoints without processing, the encoding management information Hk is preferably configured to allow predictions between the reference viewpoint video C and the non-reference viewpoint videos L, R, because the reference viewpoint video C is highly correlated with the non-reference viewpoint videos L, R. This can improve efficiency of encoding the synthesized video G.

When a residual video is encoded as the synthesized video G with respect to the non-reference viewpoint, the encoding management information Hk is preferably configured to prohibit inter-view video prediction, because the reference viewpoint video is not correlated with the residual video. This can improve efficiency of encoding the synthesized video G.

The residual video will be described later.

The depth map synthesis unit 13: inputs therein the depth maps Cd, Ld, Rd, the camera parameter Hc, and the depth type Hd from the outside; creates a synthesized depth map Gd using the depth maps Cd, Ld, Rd, and a synthesis method specified by the depth type Hd; and outputs the created synthesized depth map Gd to the depth map encoding unit 14. How the depth map is synthesized will be described later.

It is assumed in this embodiment that the depth maps Cd, Ld, Rd, at the respective viewpoints: are previously prepared by, for example, the stereoscopic video creating device 3 (see FIG. 1); and are inputted associated with the videos C, L, R at the respective viewpoints, respectively. However, the depth maps Cd, Ld, Rd may be created and provided using the videos C, L, R, respectively.

The depth map encoding unit 14: inputs therein the encoding management information Hk from the outside and the synthesized depth map Gd from the depth map synthesis unit 13; encodes the synthesized depth map Gd using an encoding method specified by the encoding management information Hk; thereby creates an encoded synthesized depth map gd; and outputs the created encoded synthesized depth map gd to the multiplexing unit 16. The depth map encoding unit 14 also: decodes the created encoded synthesized depth map gd based on the encoding method, to thereby create the decoded synthesized depth map G'd; and outputs the created depth map G'd to the video synthesis unit 11.

If the synthesized depth map Gd is composed of a plurality of frames, the depth map encoding unit 14 in this embodiment: encodes the synthesized depth map Gd for each of the frames; and outputs each of the resultant data as encoded data by a unit (NALU) different from each other to the multiplexing unit 16.

A structure of the encoded data of a depth map will be described later.

Similarly to the video encoding unit 12, the depth map encoding unit 14 is configured to encode the synthesized depth map Gd using an encoding method specified by the encoding management information Hk from among a plurality of prescribed encoding methods. The depth map encoding unit 14 also has a function of decoding the encoded synthesized depth map gd.

The encoding method used herein can be similar to that used by the video encoding unit 12. Note that, in a series of stereoscopic video encoding processings, the video encoding unit 12 and the depth map encoding unit 14 may or may not be configured to select the same encoding method.

The parameter encoding unit 15: inputs therein the encoding management information Hk, the camera parameter Hc, and the depth type Hd from the outside; encodes the above-described parameters using a prescribed encoding method; thereby creates an encoded parameter h; and outputs the created encoded parameter h to the multiplexing unit 16.

Note that the parameter encoding unit 15 encodes each of the parameters to be encoded as an individual unit (NALU) according to a type of the parameter.

A structure of the encoded data of a parameter will be described later.

The multiplexing unit 16 inputs therein: the encoded parameter h from the coding unit 15; the encoded synthesized video g from the video encoding unit 12; and the encoded synthesized depth map gd from the depth map encoding unit 14. The multiplexing unit 16 then: multiplexes the inputted encoded information; and transmits the multiplexed information as a series of encoded bit strings BS to the stereoscopic video decoding device 2.

(Depth map synthesis technique)

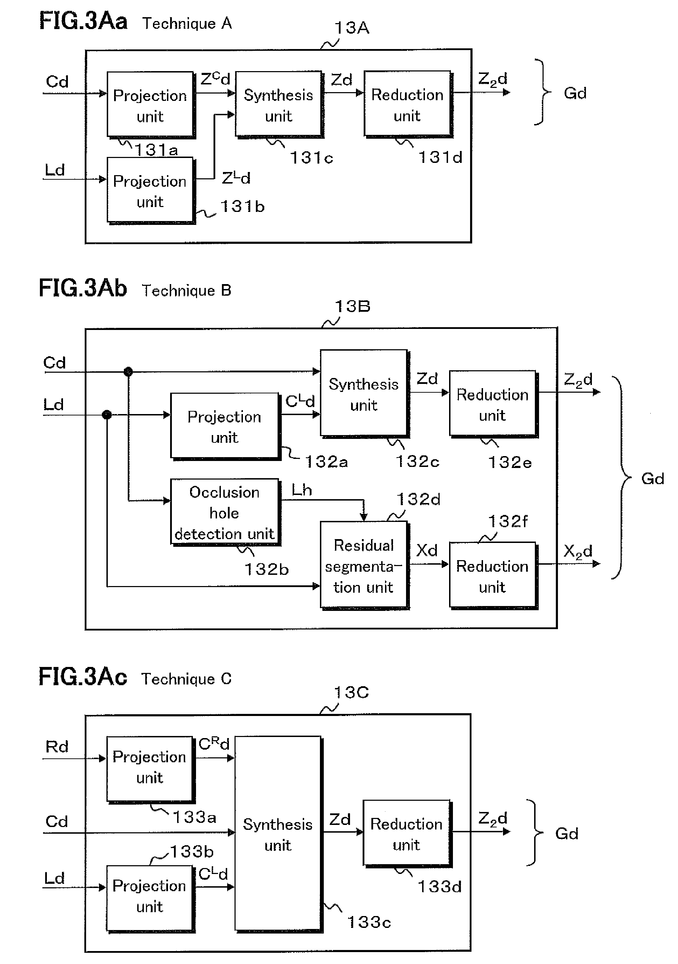

Next is described a technique of synthesizing a depth map performed by the depth map synthesis unit 13, with reference to FIG. 3Aa through FIG. 6 (as well as FIG. 1 and FIG. 2 where appropriate).

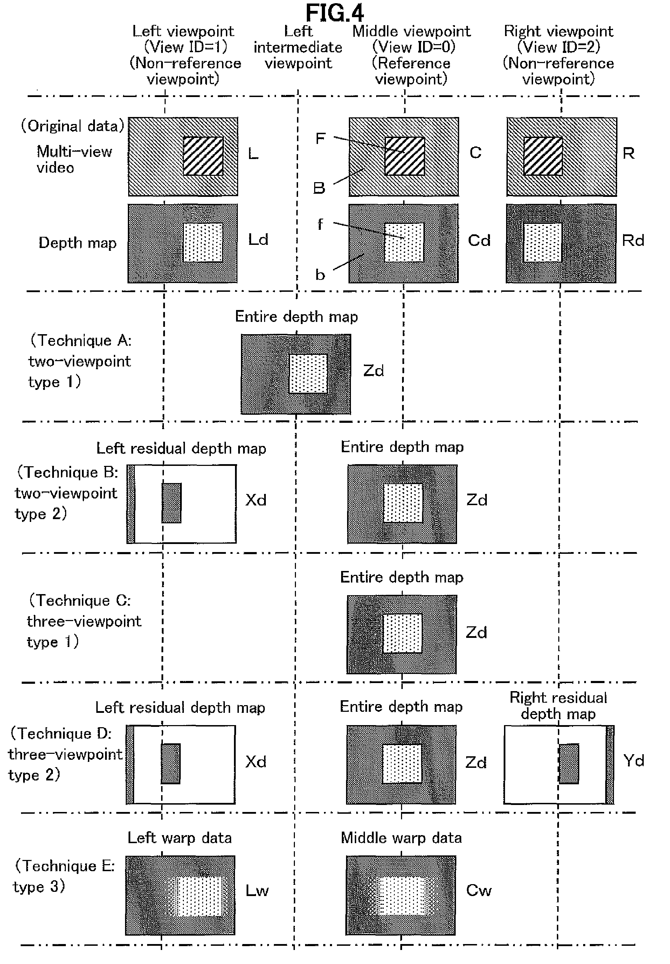

In this embodiment, as illustrated in the first row of rows sectioned with two-dot chain lines of FIG. 4, the videos C, L, R, at the middle, left, and right viewpoints, respectively, and the depth maps Cd, Ld, Rd, associated therewith, respectively, are inputted as original data from the outside (the stereoscopic video creating device 3 (see FIG. 1)). Herein, let the reference viewpoint be a middle point; and, the non-reference viewpoints, the left and right viewpoints.

Note that each of the videos C, L, R illustrated in FIG. 4 is prepared by taking an object containing a square-shaped object image F as a foreground and an object image B other than the object image F as a background. Each of the depth maps Cd, Ld, Rd includes a depth f which corresponds to the foreground object image F and a depth b which corresponds to the object image B. In FIG. 4, the brighter an area, the larger a depth value in the area, indicating that the area is located nearer to a viewpoint of interest.

Note that any of the depth map used in this embodiment is handled as image data in a format same as that of a video such as the reference viewpoint video C. For example, if the format used is in accordance with the high-definition standards, a depth value is set as a luminance component (Y), and prescribed values are set as color difference components (Pb, Pr) (for example, in a case of 8-bit signal per component, "128" is set). This is advantageous because, even in a case where the depth map encoding unit 14 encodes the left synthesized depth map Md using an encoding method similar to that used for a video, a decrease in encoding efficiency can be prevented, which is otherwise caused by the color difference components (Pb, Pr) without having information valid as a depth map.

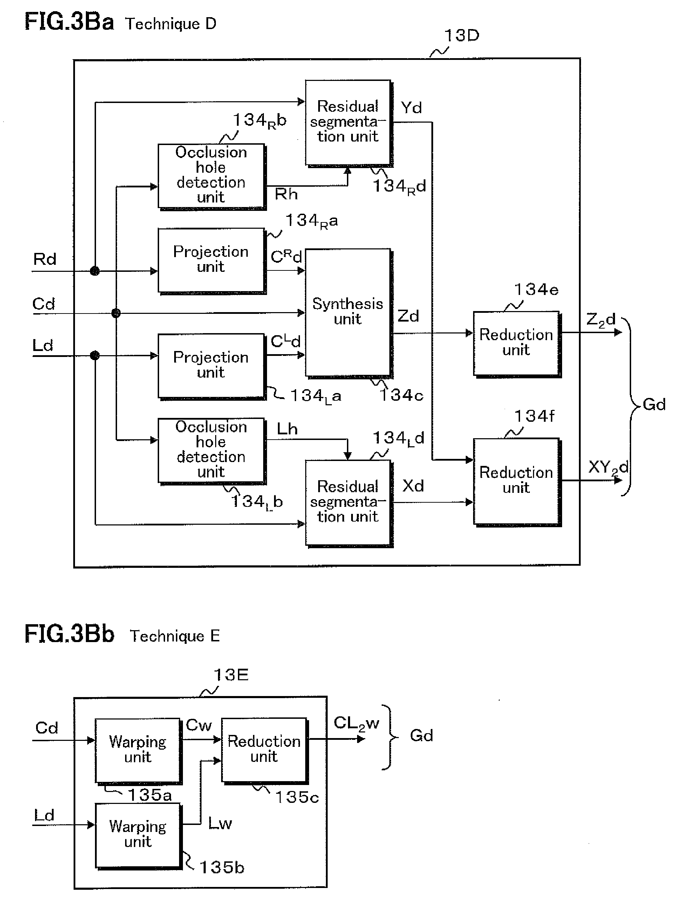

This embodiment is structured such that a technique of synthesizing a depth map can be chosen from among six techniques in total, namely, techniques A to E and a technique of encoding a plurality of depth maps without processing. FIG. 3Aa to FIG. 3Ac and FIG. 3Ba to FIG. 3Bb illustrate configuration examples of the depth map synthesis unit 13 corresponding to the techniques A to E, respectively.

Next is described each of the depth map synthesis techniques.

(Technique A: two-viewpoint type 1)

In the technique A, as illustrated in the second row of FIG. 4, each of the reference viewpoint depth map Cd and the left viewpoint depth map Ld, both of which are depth maps having the middle point as the reference viewpoint and the left viewpoint as the non-reference viewpoint, is projected to a prescribed common viewpoint; and the two depth maps projected to the common viewpoint are synthesized into one. In this embodiment, the common viewpoint means a left intermediate viewpoint which is an intermediate viewpoint between the middle viewpoint and the left viewpoint. The common viewpoint may be, however, any viewpoint between the middle point and the left viewpoint other than the left intermediate viewpoint.

The depth map synthesized using the technique A is referred to as an "entire depth map" which is a depth map having depth values corresponding to all pixels of a video at the common viewpoint.

As shown in FIG. 3Aa, the depth map synthesis unit 13A (which is specifically referred to as the collectively-referred depth map synthesis unit 13; ditto below) synthesizes depth maps using the technique A and includes a projection unit 131 a, a projection unit 131b, a synthesis unit 131c, and a reduction unit 131d.

The projection unit 131 a: projects the reference viewpoint depth map Cd which is a depth map at the middle point inputted from the outside, to the left intermediate viewpoint which is the common viewpoint; and thereby creates a depth map $Z^Cd$ at the left intermediate viewpoint. The projection unit 131 a outputs the created left intermediate viewpoint depth map $Z^Cd$ to the synthesis unit 131c.

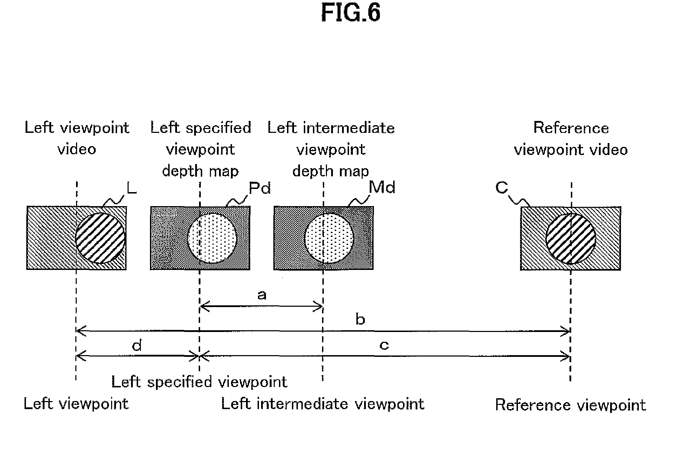

Next is described a projection of a depth map with reference to FIG. 6.

As illustrated in FIG. 6, let "b" be a distance from the reference viewpoint to the left viewpoint; "c", from the reference viewpoint to a left specified viewpoint which is a freely specified viewpoint; "a", from the left intermediate viewpoint to the left specified viewpoint; and "d", from the left specified viewpoint to the left viewpoint. Both a distance from the reference viewpoint to the left intermediate viewpoint and a distance from the left intermediate viewpoint to the left viewpoint are b/2.

The depth value corresponds, when a depth map or a video is projected to a viewpoint apart from an original viewpoint by the distance b which is the distance between the reference viewpoint and the left viewpoint, to the number of pixels (an amount of parallax) to make a pixel of interest shift rightward, opposite to a direction of shifting the viewpoint of interest. The depth value is typically used in such a manner that the largest amount of parallax in a video is made to correspond to the largest depth value. A shift amount of the number of pixels is proportionate to a shift amount of a viewpoint. Thus, when a depth map at the reference viewpoint is projected to the specified viewpoint which is apart from the reference viewpoint by the distance c, pixels of the depth map are shifted rightward by the number of pixels corresponding to c/b times the depth values thereof. As is obvious, if a direction of shifting a viewpoint is rightward, the pixel is shifted leftward to the opposite direction.

Hence, when the projection unit 131 a illustrated in FIG. 3Aa projects a depth map at the reference viewpoint to the left intermediate viewpoint, a pixel of the depth map is shifted rightward by the number of pixels corresponding to ((b/2)/b)=1/2 times the depth value as described above.

As illustrated in the projection unit 131b to be described next, when a depth map at the left viewpoint is projected to the left intermediate viewpoint which is positioned rightward as viewed from the left viewpoint, each pixel of the depth map at the left viewpoint is shifted leftward by the number of pixels ((b/2)/b)=1/2 times a depth value of the pixel.

Note that in this embodiment, when the above-described projection is performed, if there is a pixel position to which a plurality of pixel values (depth values) are projected, the projection unit 131 a takes the largest of the projected pixel values as a depth value of the pixel in the left intermediate viewpoint depth map $Z^Cd$, that is, the depth map created after the projection. In the meantime, if there is a pixel to which no valid pixel value is projected, the projection unit 131a takes the smaller depth value between two depth values of neighboring pixels positioned right and left of the pixel of interest, as a pixel value of the pixel of interest in the left intermediate viewpoint depth map $Z^Cd$.

The above description has been made assuming a case in which a depth map is used for projecting the depth map to a depth map corresponding thereto at another viewpoint. However, a case in which a depth map is used for projecting a video to another viewpoint can be performed using a similar procedure.

Referring back to FIG. 3Aa, description is continued.

The projection unit 131b performs: projective transformation of the left viewpoint depth map Ld which is a depth map at the left viewpoint inputted from the outside, to the left intermediate viewpoint which is the common viewpoint; and thereby creates a depth map $Z^L d$ at the left intermediate viewpoint. Note that the projection unit 131 b can perform projective transformation in a procedure similar to that of the projection unit 131 a except a different shift direction which is opposite to that of the projection unit 131a. The projection unit 131b also outputs the created left intermediate viewpoint depth map $Z^L d$ to the synthesis unit 131c.

The synthesis unit 131c: inputs therein the left intermediate viewpoint depth map $Z^C d$ from the projection unit 131 a and the left intermediate viewpoint depth map $Z^L d$ from the projection unit 131 b, respectively; synthesizes the two depth maps; and thereby creates a synthesized depth map Zd. More specifically, the synthesis unit 131c: calculates, for each of corresponding pixels in the two depth maps, an average of corresponding pixel values as depth values; determines the calculated average value as a pixel value of the synthesized depth map Zd; and thereby synthesizes the two depth maps. The synthesis unit 131c then outputs the created synthesized depth map Zd to the reduction unit 131d.

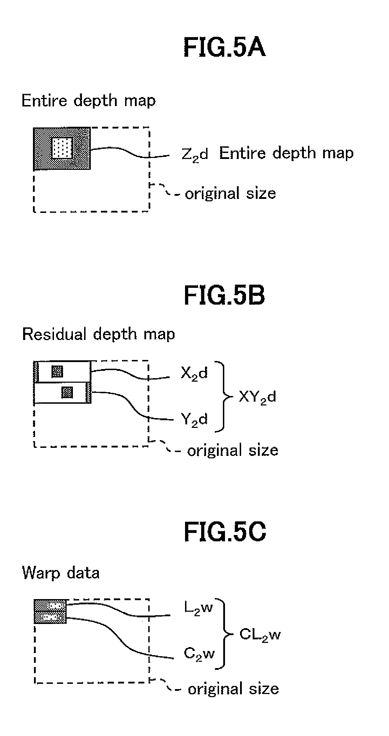

The reduction unit 131d: inputs therein the synthesized depth map Zd from the synthesis unit 131c; reduces the inputted synthesized depth map Zd by thinning out the pixels to 1/2 both in a vertical (longitudinal) direction and in a horizontal (lateral) direction, as shown in FIG. 5A; and thereby creates the reduced synthesized depth map $Z_2 d$. The depth map synthesis unit 13A outputs the created reduced synthesized depth map $Z_2 d$ as the synthesized depth map Gd to the depth map encoding unit 14 (see FIG. 2).

Reduction of a depth map can decrease an amount of transmitted data and improve an encoding efficiency because, even if the depth map is reduced, the reduced depth map less affects an imaging quality of a video synthesized therefrom in decoding.

In reducing the depth map, a ratio of the reduction is not limited to 1/2 and may be any other ratio such as 1/3 and 1/4. Or, the reduction ratios of the longitudinal and lateral directions may be different from each other. Further, the depth map may be used as it is without any reduction. In this case, the reduction unit 131d can be omitted.

It is assumed also in the other synthesizing techniques that a depth map is reduced. However, the depth map may not be reduced. In this case, a reduction unit in each of the synthesizing techniques can be omitted.

(Technique B: two-viewpoint type 2)

In the technique B, as illustrated in the first and the third rows of FIG. 4, the entire depth map Zd at the reference viewpoint and a left residual depth map Xd at the left viewpoint are synthesized into one, using the reference viewpoint depth map Cd which is the depth map at the middle point as the reference viewpoint, and the left viewpoint depth map Ld which is the depth map at the left viewpoint as the non-reference viewpoint.

The "residual depth map" used herein is a depth map which is created by segmenting, from the left viewpoint depth map Ld, a depth value of a pixel which becomes an occlusion hole and is not projectable, when the depth map Cd at the reference viewpoint is projected to the left viewpoint. The "occlusion hole" herein means, in the depth map Cd at the reference viewpoint, a pixel which is not present in the depth map Cd at the reference viewpoint. Such a pixel is, for example, a pixel hidden behind a foreground object or positioned outside of the depth map Cd at the reference viewpoint. That is, in the technique B, only information on a depth which is not overlapped with the reference viewpoint depth map Cd is extracted from the left viewpoint depth map Ld which is an entire depth map; and the left residual depth map Xd is thereby created. This can reduce an amount of data.

A depth map synthesis unit 13B: synthesizes depth maps using the technique B; and includes, as illustrated in FIG. 3Ab, a projection unit 132a, an occlusion hole detection unit 132b, a synthesis unit 132c, a residual segmentation unit 132d, a reduction unit 132e, and a reduction unit 132f.

The projection unit 132a: projects the left viewpoint depth map Ld inputted from the outside, to the reference viewpoint; and thereby creates a depth map $C^L d$ at the reference viewpoint. The projection unit 132a outputs the created reference viewpoint depth map $C^L d$ to the synthesis unit 132c.

The occlusion hole detection unit 132b: inputs therein the reference viewpoint depth map Cd from the outside; and detects an occlusion hole, which is an area to which no pixel value is projected, when the depth map Cd is projected to the left viewpoint. The occlusion hole detection unit 132b: creates a hole mask Lh which indicates an area to become an occlusion hole; and outputs the created hole mask Lh to the residual segmentation unit 132d.

How to detect the area to become an occlusion hole will be described later.

The synthesis unit 132c: inputs therein the reference viewpoint depth map Cd from the outside and the reference viewpoint depth map $C^L d$ from the projection unit 132a; synthesizes the two depth maps at the reference viewpoint into one entire depth map Zd; and outputs the synthesized entire depth map Zd to the reduction unit 132e. More specifically, the synthesis unit 132c: calculates, for each of corresponding pixels in the inputted two depth maps, an average of corresponding pixel values as depth values; determines the calculated average value as a pixel value of the entire depth map Zd; and thereby synthesizes the two depth maps into one.

In the technique B, the reference viewpoint depth map Cd may be used as it is without any change, as the entire depth map Zd at the reference viewpoint. In this case, the projection unit 132a and the synthesis unit 132c can be omitted.

The residual segmentation unit 132d: inputs therein the left viewpoint depth map Ld from the outside and the hole mask Lh from the occlusion hole detection unit 132b; segments an area to become an occlusion hole indicated as the hole mask Lh, from the left viewpoint depth map Ld; and thereby creates the left residual depth map Xd which is a depth map having only a pixel value of the area to become the occlusion hole. The residual segmentation unit 132d outputs the created left residual depth map Xd to the reduction unit 132f.

The residual segmentation unit 132d preferably sets a prescribed value as a pixel value of an area not to become an occlusion hole. This can improve an encoding efficiency of the left residual depth map Xd. The prescribed value may be, for example, 128 which is a middle value in a case of 8 bit data per pixel.

The reduction unit 132e: inputs therein the entire depth map Zd from the synthesis unit 132c; creates a reduced entire depth map $Z_2d$ which is subjected to reduction at a prescribed reduction ratio, by thinning out pixels similarly to the reduction unit 131 d using the above-described technique A; and outputs the created reduced entire depth map $Z_2d$ as a part of the synthesized depth map Gd, to the depth map encoding unit 14 (see FIG. 2).

The reduction unit 132f: inputs therein the left residual depth map Xd from the residual segmentation unit 132d; creates a reduced residual depth map $X_2d$ which is reduced at a prescribed reduction ratio by thinning out pixels thereof similarly to the reduction unit 131d using the above-described technique A; and outputs the created reduced residual depth map $X_2d$ as a part of the synthesized depth map Gd to the depth map encoding unit 14 (see FIG. 2).

That is, the synthesized depth map Gd obtained using the technique B is a synthesis made up of the reduced entire depth map $Z_2d$ and the reduced residual depth map $X_2d$.

(Technique C: three-viewpoint type 1)

In the technique C, as illustrated in the first and the fourth rows of FIG. 4, each of the reference viewpoint depth map Cd, the left viewpoint depth map Ld, and the right viewpoint depth map Rd, which are depth maps at respective points, namely, a middle point as the reference viewpoint, a left viewpoint, and a right viewpoint, the latter two as non-reference viewpoints, is projected to a prescribed common viewpoint; and the three depth maps projected to the common viewpoint are synthesized into one. In this embodiment, the middle point is taken as the common viewpoint. Any other viewpoint positioned between the left viewpoint and the right viewpoint can be used as the common viewpoint.

Note that the depth map synthesized using the technique C is the entire depth map Zd at the common viewpoint.

The depth map synthesis unit 13C synthesizes depth maps using the technique C and includes, as shown in FIG. 3Ac, a projection unit 133a, a projection unit 133b, a synthesis unit 133c, and a reduction unit 133d.

The projection unit 133a: projects the right viewpoint depth map Rd inputted from the outside, to the middle point as the common viewpoint, that is, the reference viewpoint; and thereby creates a reference viewpoint depth map $C^Rd$. The projection unit 133a outputs the created reference viewpoint depth map $C^Rd$ to the synthesis unit 133c.

The projection unit 133b projects the left viewpoint depth map Ld inputted from the outside, to the middle point as the common viewpoint, that is, the reference viewpoint; and thereby creates the reference viewpoint depth map $C^Ld$. The projection unit 133b outputs the created reference viewpoint depth map $C^Ld$ to the synthesis unit 133c.

The synthesis unit 133c: inputs therein the reference viewpoint depth map Cd from the outside, the reference viewpoint depth map $C^Rd$ from the projection unit 133a, and the reference viewpoint depth map $C^Ld$ from the projection unit 133b; synthesizes the three inputted depth maps into one; and thereby creates the entire depth map Zd. More specifically, the synthesis unit 133c: calculates, for each of corresponding pixels in the three depth maps, an average of pixel values as depth values; determines the calculated average value as a pixel value of the entire depth map Zd; and thereby synthesizes the three depth maps into one entire depth map Zd. Instead of the average value, a median value of the three pixel values may be used. The synthesis unit 133c outputs the created entire depth map Zd to the reduction unit 133d.

In a case where the common viewpoint is a viewpoint other than the reference viewpoint, the synthesis unit 133c: projects the reference viewpoint depth map Cd, the left viewpoint depth map Ld, and the right viewpoint depth map Rd to the common viewpoint; synthesizes the three obtained depth maps; and thereby creates the entire depth map Zd.

The reduction unit 133d: reduces the entire depth map Zd at a prescribed reduction ratio, by thinning out pixels similarly to the reduction unit 131d using the above-described technique A; and thereby creates the reduced entire depth map $Z_2d$. The depth map synthesis unit 13C outputs the created reduced entire depth map $Z_2d$ as the synthesized depth map Gd to the depth map encoding unit 14 (see FIG. 2).

(Technique D: three-viewpoint type 2)

In the technique D, as illustrated in the first and the fifth rows of FIG. 4, the entire depth map Zd at the reference viewpoint which is the middle point, the residual depth map Xd at the left viewpoint, and the residual depth map Yd at the right viewpoint are synthesized into one, using the reference viewpoint depth map Cd, the left viewpoint depth map Ld, and the right viewpoint depth map Rd which are depth maps at respective three points, namely, the middle point as the reference viewpoint, the left viewpoint, and the right viewpoint, the latter two as the non-reference viewpoints.

The "residual depth map at the right viewpoint" herein means a depth map which is created by segmenting, from the right viewpoint depth map Rd, a depth value of a pixel which becomes an occlusion hole and is not projectable, when the depth map Cd at the reference viewpoint is projected to the right viewpoint. Thus, in the technique D, only information which is not overlapped with the reference viewpoint depth map Cd is extracted from each of the depth maps at the two non-reference viewpoints. The left residual depth map Xd and the right residual depth map Yd is thereby created. This can reduce an amount of data.

The depth map synthesis unit 13D: synthesizes depth maps using the technique D; and includes, as shown in FIG. 3Ba, projection units $134_L a$, $134_R a$, occlusion hole detection units $134_L b$, $134_R b$, a synthesis unit 134c, residual segmentation units $134_L d$, $134_R d$, a reduction unit 134e, and a reduction unit 134f.

The projection unit $134_L a$: projects the left viewpoint depth map Ld inputted from the outside, to the reference viewpoint; and thereby creates the depth map $C^L d$ at the reference viewpoint. The projection unit $134_L a$ outputs the created reference viewpoint depth map $C^L d$ to the synthesis unit 134c.

The projection unit $134_R a$: projects the right viewpoint depth map Rd inputted from the outside, to the reference viewpoint; and thereby creates the depth map $C^R d$ at the reference viewpoint. The projection unit $134_R a$ outputs the created reference viewpoint depth map $C^R d$ to the synthesis unit 134c.

The occlusion hole detection unit $134_L b$: inputs therein the reference viewpoint depth map Cd from the outside; and detects an occlusion hole which becomes an area into which no pixel value is projected, when the reference viewpoint depth map Cd is projected to the left viewpoint. The occlusion hole detection unit $134_L b$: creates the hole mask Lh which indicates the area to become the occlusion hole; and outputs the hole mask Lh to the residual segmentation unit $134_L d$.

The occlusion hole detection unit $134_R b$: inputs therein the reference viewpoint depth map Cd from the outside; and detects an occlusion hole which becomes an area into which no pixel value is projected, when the reference viewpoint depth map Cd is projected to the right viewpoint. The occlusion hole detection unit $134_R b$: creates a hole mask Rh which indicates the area to become the occlusion hole; and outputs the hole mask Rh to the residual segmentation unit $134_R d$.

The synthesis unit 134c: inputs therein the reference viewpoint depth map Cd from the outside, the reference viewpoint depth map $C^L d$ from the projection unit $134_L a$, and the reference viewpoint depth map $C^R d$ from the projection unit $134_R a$; synthesizes the three depth maps at the reference viewpoint into one entire depth map Zd; and outputs the synthesized entire depth map Zd to the reduction unit 134e. That is, the synthesis unit 134c synthesizes the three depth maps similarly to the synthesis unit 133c using the above-described technique C.

Note that, in the technique D, as the entire depth map Zd, the reference viewpoint depth map Cd may be used as it is without any change. In this case, the synthesis unit 134c can be omitted.

The residual segmentation unit $134_L d$: inputs therein the left viewpoint depth map Ld from the outside and the hole mask Lh from the occlusion hole detection unit $134_L b$; segments a pixel value in an area to become an occlusion hole indicated as the hole mask Lh, from the left viewpoint depth map Ld; and thereby creates the left residual depth map Xd which is a depth map having only a pixel value of the area to become the occlusion hole. The residual segmentation unit $134_L d$ outputs the created left residual depth map Xd to the reduction unit 134f.

The residual segmentation unit $134_R d$: inputs therein the right viewpoint depth map Rd from the outside and the hole mask Rh from the occlusion hole detection unit $134_R b$; segments a pixel value in an area to become an occlusion hole indicated as the hole mask Rh, from the right viewpoint depth map Rd; and thereby creates the right residual depth map Yd which is a depth map having only a pixel value of the area to become the occlusion hole. The residual segmentation unit $134_R d$ outputs the created right residual depth map Yd to the reduction unit 134f.

Each of the residual segmentation units $134_L d$, $134_R d$ preferably sets a prescribed value as a pixel value of an area not to become the occlusion hole, similarly to the residual segmentation unit 132d using the above-described technique B.

The reduction unit 134e: inputs therein the entire depth map Zd from the synthesis unit 134c; creates the reduced entire depth map $Z_2 d$ which is reduced at a prescribed reduction ratio, similarly to the reduction unit 131d using the above-described technique A; and outputs the created reduced entire depth map $Z_2 d$ as a part of the synthesized depth map Gd to the depth map encoding unit 14 (see FIG. 2).

The reduction unit 134f: inputs therein the left residual depth map Xd from the residual segmentation unit $134_L d$ and the right residual depth map Yd from the residual segmentation unit $134_R d$; reduces each of the depth maps at a prescribed reduction ratio (for example, 1/2 both in a longitudinal and a lateral directions); further reduces each of the reduced depth maps to 1/2 in the longitudinal or the lateral direction, to thereby create the left reduced residual depth

map $X_2d$ and the right reduced residual depth map $Y_2d$; synthesizes the created two depth maps into one frame, as shown in FIG. 5B; and thereby creates a reduced residual depth map $XY_2d$. The reduction unit 134f outputs the created reduced residual depth map $XY_2d$ as a part of the synthesized depth map Gd to the depth map encoding unit 14 (see FIG. 2).

That is, in the technique D, the synthesized depth map Gd is a synthesis made up of the reduced entire depth map $Z_2d$ and the reduced residual depth map $XY_2d$.

FIG. 5B illustrates a case in which the two residual depth maps: are reduced to 1/2 in the longitudinal direction; and are framed by being joined in the longitudinal direction. Alternatively, each of the left and right residual depth maps Xd, Yd may be subjected to reduction or remain unchanged, without being framed, and may be then outputted to the depth map encoding unit 14 (see FIG. 2).

(Technique E: type 3)

In a technique E, as illustrated in the first and sixth rows of FIG. 4, the reference viewpoint depth map Cd and the left viewpoint depth map Ld which are depth maps at two points, namely, the middle point as the reference viewpoint and the left viewpoint as the non-reference viewpoint are used; and a depth map is created in which a portion in which a depth value is sharply changed (an edge portion) is made to have a depth value having a smooth change on a background side thereof, for each of the depth maps Cd, Ld. (The created depth map may also be referred to as warp data hereinafter.)

If a video is projected using the warp data in which a portion in which a sharp change of a depth value is made to be a smooth change, occlusion is not generated in the projected video. Thus, if the stereoscopic video decoding device 2 (see FIG. 1) synthesizes a video using a middle warp data Cw or a left warp data Lw, as a depth map, a smooth video can be synthesized in either case.

The depth map synthesis unit 13E: synthesizes depth maps using the technique E; and includes, as shown in FIG. 3Bb, a warping unit 135a, a warping unit 135b, and a reduction unit 135c.

The warping unit 135a: receives the reference viewpoint depth map Cd inputted from the outside; changes a portion (an edge portion) thereof in which a depth value is sharply changed is made to have a depth value having a smooth change on a background side thereof; and thereby creates the "warped" middle warp data Cw. The warping unit 135a outputs the created middle warp data Cw to the reduction unit 135c.

A range in which a change in a depth value of the reference viewpoint depth map Cd is made to be smooth is an area in which pixels are overlapped when the reference viewpoint depth map Cd which is a depth map at the middle point is projected to the left viewpoint. That is, the area includes: an area rightward from a right side edge of the depth f of the object image F as the foreground; and an area leftward from a left side edge of the depth f of the object image F as the foreground having a prescribed width. The prescribed width may be set at any width and may be, for example, as wide as a width corresponding to an area in which a depth value is smoothly changed on a right side of the right edge.

How to smoothly change the depth value in the above-described range includes: linear interpolation using a pair of depth values at both the right and the left ends of the range; and curve interpolation using a spline function or the like.

Alternatively, the middle warp data Cw may be created by: detecting an edge of video texture from the reference viewpoint video C which is a video corresponding to the reference viewpoint depth map Cd; and weighting a depth value in a portion in which the edge is detected. This can reduce displacement of positions between the edge in the video and the depth value of the middle warp data Cw.

The warping unit 135b: inputs therein the left viewpoint depth map Ld from the outside; warps the inputted left viewpoint depth map Ld; and thereby creates the left warp data Lw. The warping unit 135b outputs the created left warp data Lw to the reduction unit 135c.

A range in which a depth value of the left viewpoint depth map Ld is smoothly changed includes: an area which has a valid pixel value in the left residual depth map Xd using the above-described technique B (an area leftward from the left side edge of the depth f corresponding to the object image F as the foreground); and an area rightward from a right side edge of the depth f corresponding to the object image F as the foreground, having a prescribed width. The left warp data Lw is created by this procedure. The prescribed width can be set at any width and may be, for example, as wide as a width corresponding to an area in which a depth value is smoothly changed on a left side of the left edge.

How to smoothly change the depth value in the area is similar to that of the above-described middle warp data Cw, description of which is thus omitted herefrom.

The reduction unit 135c: inputs therein the middle warp data Cw from the warping unit 135a and the left warp data Lw from the warping unit 135b; reduces each of the data Cw, Lw at a prescribed reduction ratio (for example, 1/4) both in the longitudinal and lateral directions; further reduces each of the reduced data Cw, Lw to 1/2 in the longitudinal or the lateral direction; joins the further reduced data Cw, Lw in the longitudinal or the lateral direction, as shown in FIG. 5C; and thereby creates a reduced warp data $CL_2w$ synthesized into one frame. The reduction unit 135c outputs the created reduced warp data $CL_2w$ as the synthesized depth map Gd to the depth map encoding unit 14 (see FIG. 2).

FIG. 5C illustrates a case in which: the above-described further reduction is performed at a reduction ratio at 1/2 in the longitudinal direction; and the two data is joined and framed in the longitudinal direction. Even with reduction to as small as, for example, 1/4, an amount of information lost is little, because a depth value of a depth map subjected to warping changes smoothly. Thus, the reduction ratio can be made smaller, which allows a data amount to be reduced.

The prescribed reduction ratio at which the warp data is reduced may be 1/2, 1/3, or any other reduction ratio including 1 as an original size. The middle warp data Cw and the left warp data Lw may be subjected to reduction or remain unchanged without being framed, and may be then outputted as individual data as they are to the depth map encoding unit 14 (see FIG. 2).

<How to synthesize video>

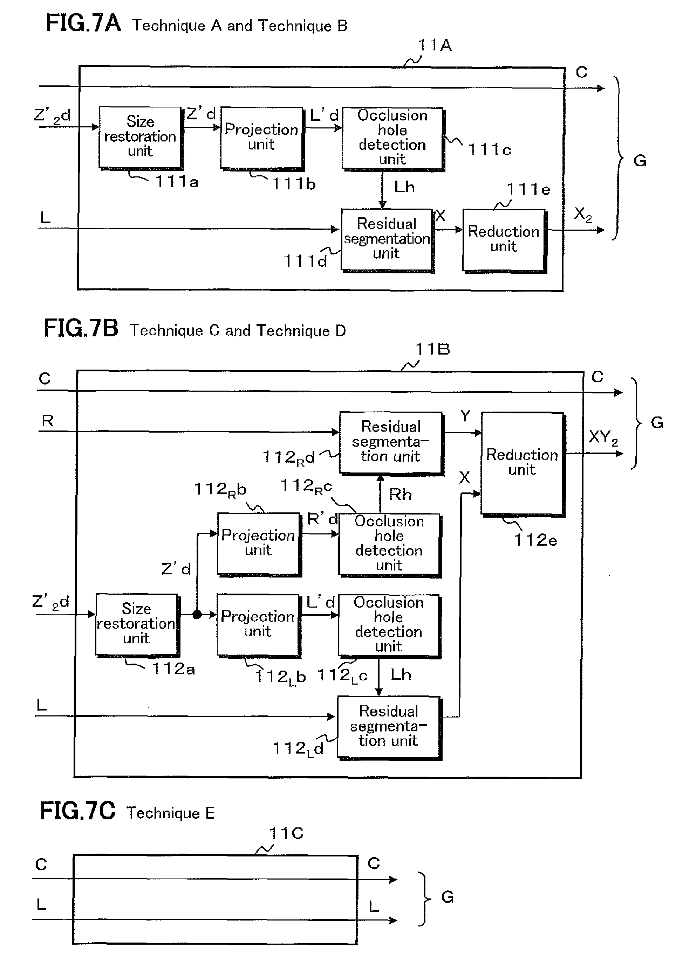

Next is described how the video synthesis unit 11 synthesizes a video with reference to FIG. 7A to FIG. 11 (as well as FIG. 1, FIG. 2, and FIG. 4 where necessary).

It is assumed in this embodiment, as described above, that the videos C, L, R at three viewpoints, namely, the middle point, the left viewpoint, and the right viewpoint, respectively, and the depth maps Cd, Ld, Rd, respectively associated therewith are inputted as original data (see the first row of FIG. 4) from the outside. Also, the middle point is taken as the reference viewpoint, and the left viewpoint and the right viewpoint, as the non-reference viewpoints.

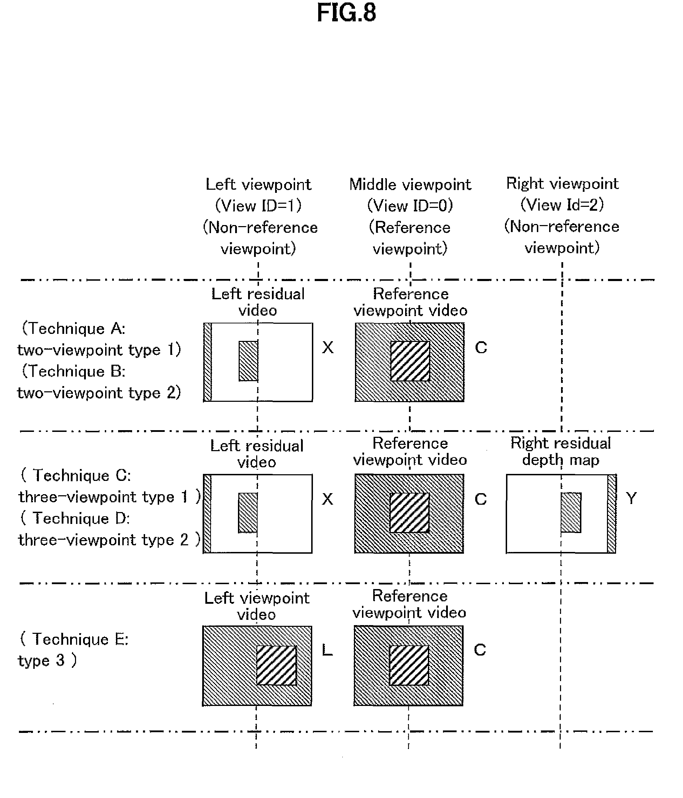

Further, any one of three techniques of synthesizing a video as shown in FIG. 8, which corresponds to any of the techniques A to E which are 5 types of how to synthesize depth maps as described above is selected.

(Technique A: two-viewpoint type 1, Technique B: two-viewpoint type 2)

In synthesizing a video using the technique A and the technique B, as illustrated in the first row of FIG. 8: the middle viewpoint video C and the left viewpoint video L are used; the middle viewpoint video C as it is used as the reference viewpoint video; and a left residual video X is created by segmenting a residual video from the left viewpoint video L. That is, one reference viewpoint video at the middle point and one residual video at the left viewpoint are synthesized, to thereby create the synthesized video G.

The "residual video" used herein means a video created by segmenting, from the left viewpoint depth map Ld, a pixel in an area to become an occlusion hole, when the reference viewpoint video C is projected to the left viewpoint. That is, in the technique A and the technique B, only information on a pixel which is not overlapped with that of the reference viewpoint video C is extracted from the left viewpoint video L in the synthesized video G; and the left residual video X is thereby created. This can reduce an amount of data.

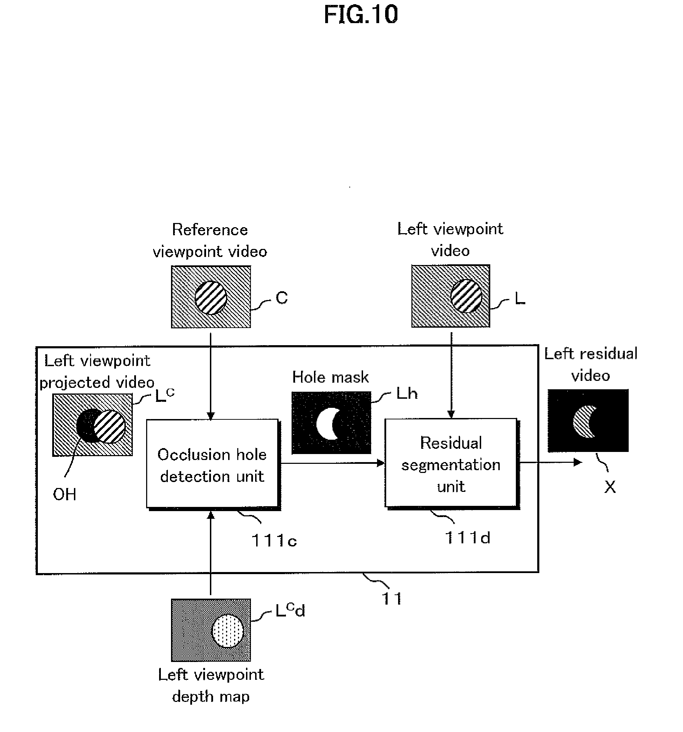

Next is described an outline of how to create a residual video with reference to FIG. 10.

FIG. 10 is a block diagram illustrating major units and elements necessary for explaining how the video synthesis unit 11 of the encoding device 1 illustrated in FIG. 2 creates a residual video.

It is assumed that FIG. 10 illustrates an example in which each of the reference viewpoint video C, the left viewpoint video L, and the like is constituted by a round-shaped object as a foreground and an object other than the round-shaped object, as a background.

An occlusion hole OH is described below. Description is made assuming an example in which, as shown in FIG. 10, the reference viewpoint video C is projected to the left viewpoint, using a left viewpoint depth map $L^{C}d$ which is created by projecting the reference viewpoint depth map Cd to the left viewpoint.

With a shift of a viewpoint position at which, for example, a camera for taking a video is set up, a pixel of an object as a foreground which is nearer to the viewpoint position is projected to a position farther away from its original position. On the other hand, with such a shift of the viewpoint position, a pixel of an object as a background which is farther from the viewpoint position is projected to a position almost the same as the original position. Thus, as schematically illustrated as a left viewpoint projected video $L^{C}$ of FIG. 10, if the round-shaped object as the foreground is shifted rightward, a crescent-shaped black portion in which no corresponding pixel is present in the reference viewpoint video C is left as an area to which no pixel is projected. The area to which no pixel has been projected is referred to as the occlusion hole OH because the crescent-shaped portion has been behind the foreground.

Note that not only in the above-described example but also in a case where a video is projected to a given viewpoint using a depth map on the video (wherein a viewpoint of the depth map may not necessarily be the same as that of the video), an occlusion hole is typically produced.

In the meantime, a pixel in the occlusion hole OH is captured because, in the left viewpoint video L, the object as the foreground is caught at a distance in the right direction. Thus, in this embodiment, the residual segmentation unit 111d: extracts a pixel in an area of the occlusion hole OH from the left viewpoint video L; and thereby creates the left residual video X.

This makes it possible to encode not the left viewpoint video L as a whole but only a residual video thereof excluding a pixel area projectable from the reference viewpoint video C, which allows a high encoding efficiency and a reduction in a volume of transmitted data.

To simplify explanation, it is assumed in FIG. 10 that a depth value of the background is "0", that is, infinite. As a result, there is no pixel in the left viewpoint video L which is present outside of the reference viewpoint video C. It is also assumed that, if there is a pixel whose depth value of the background is not "0" and which is present outside of the reference viewpoint video C, the pixel is included in the residual video.

In the case illustrated in FIG. 10, the occlusion hole detection unit 111c of the video synthesis unit 11: detects an area to become the occlusion hole OH using the left viewpoint depth map $L^Cd$; and thereby creates the hole mask Lh indicating the area to become the occlusion hole OH. In the hole mask Lh illustrated in FIG. 10, a white portion is the area to become the occlusion hole OH.

The residual segmentation unit 111d of the video synthesis unit 11: extracts a pixel in the area to become the occlusion hole OH indicated by the hole mask Lh, from the left viewpoint video L; and thereby creates the left residual video X.

In FIG. 10, the reference viewpoint video C is illustrated for convenience of explaining how the occlusion hole OH is generated, when the left viewpoint projected video $L^C$ is created. The occlusion hole OH can be, however, detected using the left viewpoint depth map $L^Cd$, the reference viewpoint video C is not actually necessary for the detection.

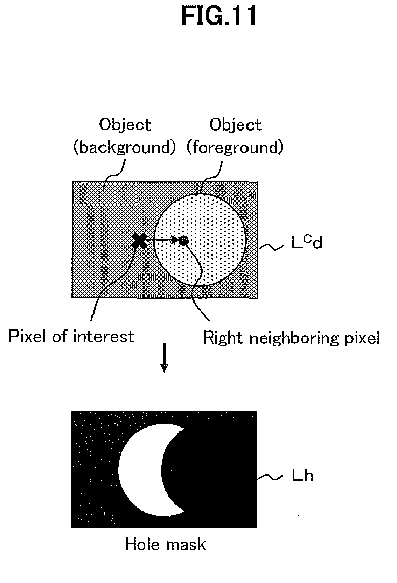

Next is described how to detect (predict) a pixel area to become an occlusion hole using the left viewpoint depth map $L^Cd$ with reference to FIG. 11.

As illustrated in FIG. 11, in the left viewpoint depth map $L^Cd$, a depth value of a pixel of interest as a target to be determined whether or not the pixel becomes an occlusion hole (which is indicated by "x" in the figure) is compared to a depth value of a rightward neighboring pixel thereof (which is indicated by "●" in the figure). If the depth value of the rightward neighboring pixel is larger than that of the pixel of interest, the pixel of interest is determined to become an occlusion hole. Then, the hole mask Lh indicating that the pixel of interest becomes an occlusion hole is created. Note that in the hole mask Lh illustrated in FIG. 11, a pixel which becomes an occlusion hole is shown in white, and a pixel which does not become an occlusion hole is shown in black.

How to detect a pixel to become an occlusion hole is described in detail. Let x be a depth value of a pixel of interest; and let y be a depth value of a pixel away rightward from the pixel of interest by a prescribed number of pixels Pmax. The prescribed number of pixels Pmax away rightward from the pixel of interest herein is, for example, the number of pixels equivalent to a maximum amount of parallax in a corresponding video, that is, an amount of parallax corresponding to a maximum depth value. Further, let a rightward neighboring pixel be a pixel away rightward from the pixel of interest by the number of pixels equivalent to an amount of parallax corresponding to a difference between the two depth values, g=(y-x). Then let z be a depth value of the rightward neighboring pixel. If an expression as follows is satisfied, the pixel of interest is determined as a pixel to become an occlusion hole.

$$(z-x) \geqq kg > (\text{a prescribed value}) \qquad \text{...Expression 1}$$

In Expression 1, k is a prescribed coefficient and may take a value from about "0.8" to about "0.6", for example. Multiplying the coefficient k having such a value less than "1" makes it possible to correctly detect an occlusion hole, even if there is some fluctuations in a depth value of an object as a foreground possibly caused by a shape of the object or inaccuracy in obtaining the depth value.

Note that, even if no occlusion hole is detected as a result of the above-described determination, there is still a possibility that a small-width foreground object is overlooked. It is thus preferable to repeat the above-described detection of an occlusion hole while decreasing the prescribed number of pixels Pmax each time. The number of times of repeating the detections may be, for example, eight, which can almost eliminate the possibility of overlooking the occlusion hole.

In Expression 1, the "prescribed value" may take a value of, for example, "4". As described above, the condition that the difference of depth values between the pixel of interest and the rightward neighboring pixel is larger than the prescribed value is added to Expression 1. It is thus possible to: prevent unnecessary detection of a portion having discontinuous depth values which are substantially too small to generate occlusion; reduce the number of pixels extracted as a left residual video; and also reduce a data volume of an encoded residual video to be described later.

Note that, if an entire depth map is at the reference viewpoint as in those cases using the techniques B, C, and D illustrated in FIG. 4, an area to which no pixel is projected may be determined as an occlusion hole, when the entire depth map is projected to the left viewpoint or the right viewpoint.

Referring back to FIG. 7A to FIG. 7C, description is continued.

The video synthesis unit 11A: synthesizes a video using the technique A or technique B; and includes, as illustrated in FIG. 7A, a size restoration unit 111 a, a projection unit 111 b, an occlusion hole detection unit 111 c, a residual segmentation unit 111 d, and a reduction unit 111 e.

The size restoration unit 111 a: inputs therein the decoded synthesized depth map G'd from the depth map encoding unit 14 (see FIG. 2); magnifies the reduced entire depth map Z'$_2$d in the decoded synthesized depth map G'd which has been reduced by the reduction unit 131d (see FIG. 3Aa) of the depth map synthesis unit 13A using the technique A or the reduction unit 132e (see FIG. 3Ab) of the depth map synthesis unit 13B using the technique B, at a magnification ratio corresponding to each of the techniques; and thereby creates the entire depth map Z'd which is restored to an original size thereof. The size restoration unit 111 a outputs the created entire depth map Z'd to the projection unit 111 b.

The projection unit 111b: inputs therein the entire depth map Z'd from the size restoration unit 111 a; projects the inputted entire depth map Z'd to the left viewpoint; and thereby creates the left viewpoint depth map L'd. The projection unit 111 b outputs the created left viewpoint depth map L'd to the occlusion hole detection unit 111 c.

Note that, if the technique A is used, the entire depth map Z'd is a depth map at the left intermediate viewpoint. The projection unit 111 b thus performs a projective transformation from the left intermediate viewpoint to the left viewpoint. On the other hand, if the technique B is used, the entire depth map Z'd is a depth map at the reference viewpoint. The projection unit 111 b thus performs a projective transformation from the reference viewpoint to the left viewpoint.

In this embodiment, the decoded synthesized depth map G'd restored to its original size is used for detecting an occlusion hole. This is advantageous because an area to become an occlusion hole can be predicted on a stereoscopic video decoding device 2 (see FIG. 1) side more appropriately.

In order to detect an occlusion, in place of the decoded synthesized depth map G'd, the synthesized depth map Gd created by the depth map synthesis unit 13 restored to its original size may be used.

Note that the same applies to detection of an occlusion hole by the video synthesis unit 11 B using the technique C and the technique D.

The occlusion hole detection unit 111 c: inputs therein the left viewpoint depth map L'd from the projection unit 111b; detects (predicts) using the inputted left viewpoint depth map L'd, an area to become an occlusion hole when the reference viewpoint video C is projected to the left viewpoint according to the above-described technique; and thereby creates the hole mask Lh indicating the area. The occlusion hole detection unit 111c outputs the created hole mask Lh to the residual segmentation unit 111d.

The residual segmentation unit 111d: inputs therein the left viewpoint video L from the outside and the hole mask Lh from the occlusion hole detection unit 111 c; extracts a pixel which the hole mask Lh indicates as the area to become the occlusion hole from the left viewpoint video L; and thereby creates the left residual video X. Note that, as illustrated in the first row of rows sectioned with two-dot chain lines of FIG. 8, a pixel in a neighborhood of a left extremity of the left viewpoint video L is also added to the left residual video X because the leftmost neighboring pixel within a range according to an appropriate depth value is not included in the reference viewpoint video C as pixel information. The residual segmentation unit 111 d outputs the created left residual video X to the reduction unit 111e.

If there is an area in which no pixel is extracted in the left residual video X, a prescribed value or an average value of all pixel values in the left residual video X is preferably set as a pixel value in the area. This can improve an encoding efficiency of the left residual video X.

Also, a boundary between a portion in which a valid pixel value is present and the area in which the above-described prescribed pixel value is set is preferably smoothed using a low pass filter. This can further improve the encoding efficiency.

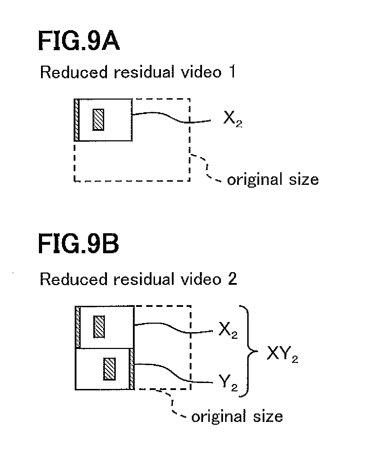

The reduction unit 111e: inputs therein the left residual video X from the residual segmentation unit 111d; reduces the inputted residual video X at a prescribed reduction ratio, as illustrated in FIG. 9A; and thereby creates a left reduced residual video X$_2$. The reduction unit 111e outputs the created left reduced residual video X$_2$ as a part of the synthesized video G to the video encoding unit 12 (see FIG. 2).

The video synthesis unit 11A consistent with the technique A or the technique B outputs the reference viewpoint video C as it is and also as a part of the synthesized video G, to the video encoding unit 12 (see FIG. 2).

The prescribed reduction ratio used when the left residual video X is reduced may be, for example, 1/2 in both the longitudinal and lateral directions.

The left residual video X may be reduced and inserted in a frame of an original size thereof. In this case, if there is a blank area without the left reduced residual video X$_2$, a prescribed pixel value may be set which is set out of a pixel extracting area of the left residual video X.

In reducing the left residual video X, the reduction ratio is not limited to 1/2 and may be any other reduction ratio such as 1/3 and 1/4. The reduction ratios of the longitudinal and lateral directions may be different from each other. Alternatively, the depth map may be used as it is without any reduction. In this case, the reduction unit 111e can be omitted.

(Technique C: three-viewpoint type 1, technique D: three-viewpoint type 2)

In synthesizing a video using the technique C and the technique D, as illustrated in the second row of FIG. 8: the middle viewpoint video C is used as it is as the reference viewpoint video; and the left residual video X is created by segmenting a residual video from the left viewpoint video L; and the right residual video Y is created by segmenting a residual video from the right viewpoint video R. That is, one reference viewpoint video at the middle point and the two residual videos at the left and right viewpoints are created as the synthesized video G.

Note that the left residual video X herein is the same as the left residual video X as the synthesized video consistent with the technique A and the technique B. The right residual video Y herein is a video created by segmenting, from the right viewpoint video R, a pixel in an area to become an occlusion hole when the reference viewpoint video C is projected to the right viewpoint. The right residual video Y can be created similarly to the left residual video X, except that the right residual video Y has a right and left positional relation opposite to that of the left residual video X with respect to the reference viewpoint depth map Cd.

That is, in the technique C and the technique D: only information on a pixel which is not overlapped with the reference viewpoint video C is extracted from the left viewpoint video L and the right viewpoint video R which are non-reference viewpoint videos; and the left residual video X and the right residual video Y are thereby created. This can reduce an amount of data.

The video synthesis unit 11B: synthesizes a video using the technique C or the technique D; and includes, as illustrated in FIG. 7B, a size restoration unit 112a, projection units $112_L$b, $112_R$b, occlusion hole detection units $112_L$c, $112_R$c, residual segmentation units $112_L$d, $112_R$d, and a reduction unit 112e.

The size restoration unit 112a: inputs therein the decoded synthesized depth map G'd from the depth map encoding unit 14 (see FIG. 2); magnifies the reduced entire depth map $Z'_2$d in the decoded synthesized depth map G'd which has been reduced by the reduction unit 133d (see FIG. 3Ac) of the depth map synthesis unit 13C using the technique C or by the reduction unit 134e (see FIG. 3Ba) of the depth map synthesis unit 13D using the technique D, at a magnification ratio corresponding to each of the techniques; and thereby creates the entire depth map Z'd restored to its original size. The size restoration unit 112a outputs the created entire depth map Z'd to the projection unit $112_L$b and the projection unit $112_R$b.

The projection unit $112_L$b, the occlusion hole detection unit $112_L$c, and the residual segmentation unit $112_L$d used herein are similar to the projection unit 111 b, the occlusion hole detection unit 111 c, and the residual segmentation unit 111 d illustrated in FIG. 7A, respectively. Detailed description thereof is thus omitted herefrom. Further, the projection unit $112_R$b, the occlusion hole detection unit $112_R$c, and the residual segmentation unit $112_R$d used herein are similar to the projection unit 111 b, the occlusion hole detection unit 111 c, and the residual segmentation unit 111 d illustrated in FIG. 7A, respectively, except that the former has a right and left positional relation opposite to that of the latter with respect to the reference viewpoint.

The projection unit $112_R$b outputs a right viewpoint depth map R'd to the occlusion hole detection unit $112_R$c. The occlusion hole detection unit $112_R$c outputs the hole mask Rh to the residual segmentation unit $112_R$d.

The residual segmentation unit $112_L$d outputs the created left residual video X to the reduction unit 112e. The residual segmentation unit $112_R$d outputs the created right residual video Y to the reduction unit 112e.

The reduction unit 112e: inputs therein the left residual video X from the residual segmentation unit $112_L$d and the right residual video Y from the residual segmentation unit $112_R$d; synthesizes the left reduced residual video $X_2$ and a right reduced residual video $Y_2$ each of which has been reduced at a prescribed reduction ratio (for example, 1/2 in both the longitudinal and lateral directions), into one frame as illustrated in FIG. 9B; and thereby creates a framed reduced residual video $XY_2$. The reduction unit 112e outputs the created framed reduced residual video $XY_2$ as a part of the synthesized video G to the video encoding unit 12 (see FIG. 2).

FIG. 9B illustrates an example in which the left and right residual videos X, Y are framed by being joined in the longitudinal direction. Alternatively, each of the left and right residual videos X, Y may be subjected to reduction or remain unchanged, without being framed, and may be outputted to the video encoding unit 12 (see FIG. 2). Further, the reduction ratios of the longitudinal and lateral directions may be different from each other.

(Technique E: type 3)

In synthesizing a video using the technique E, as illustrated in the third row of FIG. 8, the reference viewpoint video C and the left viewpoint video L are used as they are. That is, as illustrated in FIG. 7C, the video synthesis unit 11C using the technique E creates the synthesized video G from a video at the reference viewpoint and a video at the left viewpoint which is the non-reference viewpoint. Thus, the two videos are outputted to the video encoding unit 12 (see FIG. 2) without being subjected to any processing.

(Other techniques)

Five types of the techniques of synthesizing a video and a depth map have been explained above. The synthesis techniques are not, however, limited to those, and may be configured such that part or all of those techniques are selectably replaced by or added with another technique.

Also, all of the five synthesis techniques may not be selectably provided and may be configured such that one or more of the five techniques can be used.

One such an example is that the above-described technique A (two-viewpoint type 1) can be applied to a synthesis technique using a three-viewpoint video and a depth map.

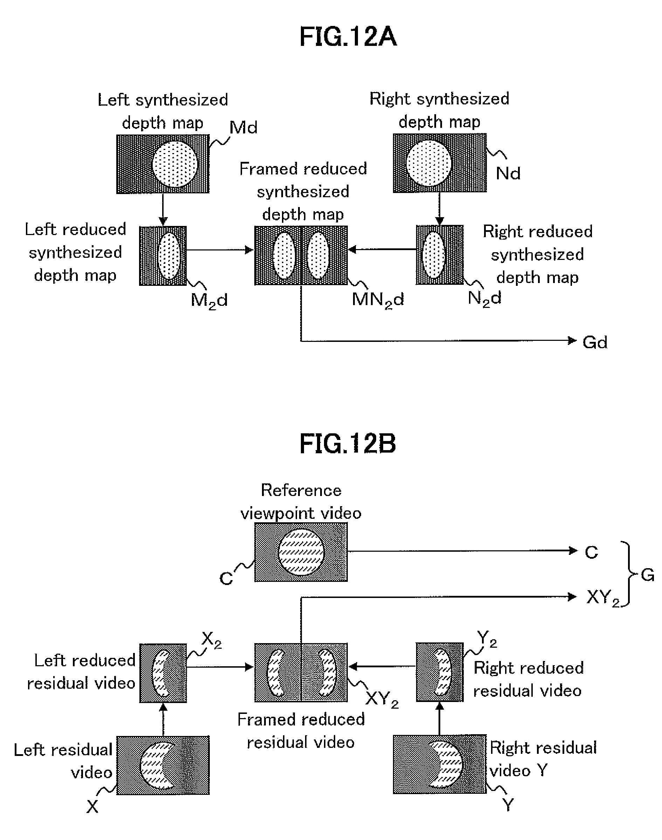

Next is described a case in which the technique A is applied to the three-viewpoint technique, with reference to FIG. 12A and FIG. 12B (see FIG. 4 and FIG. 8 where appropriate).

Regarding a depth map, as illustrated in FIG. 12A, a left synthesized depth map Md is created which is a depth map at an intermediate viewpoint between the reference viewpoint and the left viewpoint, using the reference viewpoint depth map Cd and the left viewpoint depth map Ld, similarly to the technique A. Similarly, a right synthesized depth map Nd is created which is a depth map at an intermediate viewpoint between the reference viewpoint and the right viewpoint, using the reference viewpoint depth map Cd and the right viewpoint depth map Rd. The left synthesized depth map Md and the right synthesized depth map Nd are then reduced at respective prescribed reduction ratios (for example, both at 1/2 in the lateral directions and with no reduction in the longitudinal directions), to thereby create a left reduced synthesized depth map $M_2d$ and a right reduced synthesized depth map $N_2d$. The two depth maps $M_2d$ and $N_2d$ are joined in, for example, the lateral direction and are thus synthesized in a single frame, to thereby create a framed reduced synthesized depth map $MN_2d$. The framed reduced synthesized depth map $MN_2d$ may be encoded as the synthesized depth map Gd.

Regarding a video, as illustrated in FIG. 12B, the left residual video X and the right residual video Y are created, similarly to the technique C and the technique D. Then, similarly to the depth maps in the technique A, the residual videos X, Y are reduced at respective prescribed reduction ratios, to thereby create the left reduced residual video $X_2$ and the right reduced residual video $Y_2$. The residual video $X_2$, $Y_2$ are synthesized in a single frame, to thereby create the framed reduced residual video $XY_2$.

That is, the synthesized video G can be created which is constituted by the reference viewpoint video C and the framed reduced residual video $XY_2$ which is created by framing two residual videos at two viewpoints.

It is assumed in FIG. 12B that the residual videos each has a depth value of the background of "0".

(Data structure)

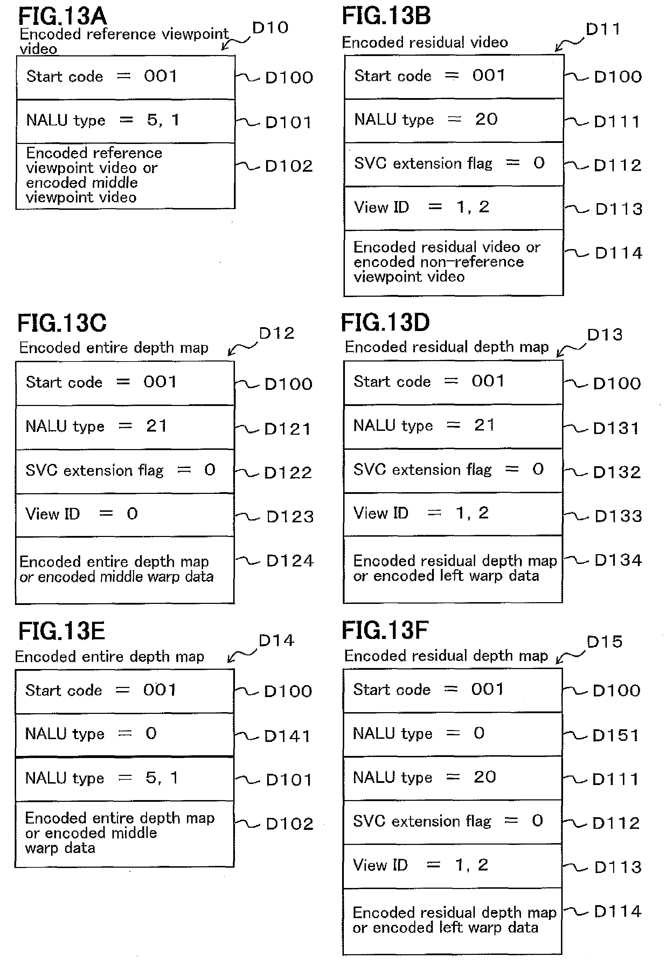

Next is described a structure of data which is multiplexed into an encoded bit string by the multiplexing unit 16 in this embodiment, with reference to FIG. 13A through FIG. 15.

As described above, in this embodiment, the encoded bit string is transmitted in accordance with the MPEG-4 AVC encoding standard. Thus, various types of information is constituted by data using a NALU in the MPEG-4 AVC encoding standard as a unit.

Next are described data structures of a video and a depth map with reference to FIG. 13A to FIG. 13F.

(Encoded reference viewpoint video)

FIG. 13A illustrates a data structure D10 of an encoded reference viewpoint video which is a data created by encoding a video on the reference viewpoint or the middle point. The data structure D10 has: a start code D100 at a head thereof; subsequently, a NALU type D101 with a value "5" or "1" as identification information for identifying being a video at the reference viewpoint; and an encoded reference viewpoint video (or an encoded middle viewpoint video) D102. The value "5" of the NALU type D101 is added to an encoded video which is intra-frame encoded, from among the reference viewpoint videos; and the value "1" is added to an encoded video which is inter-frame encoded.

Note that the NALU of all types has, at the head thereof, the start code D100 to which "001" as a 3-byte prescribed value is assigned. The NALU of all types also has, after the start code D100, the NALU type which is the identification information for identifying a type of information of interest. A specific value is assigned to the NALU type according to a type of the information. The NALU type is 1-byte information.

(Encoded residual video)

FIG. 13B illustrates a data structure D11 of an encoded residual video which is a data created by encoding a video at the non-reference viewpoint. The data structure D11 has: the start code D100 at a head thereof; and, subsequently, a NALU type D111 with a value "20" as identification information for identifying being a video at the non-reference viewpoint.

The data structure D11 further has a SVC (Scalable Video Coding) extension flag D112, to which a value of "0" is assigned.

The SVC extension flag is one-bit information. If the value is "1", the flag indicates that a video is decomposed into a plurality of resolution videos made up of a reference resolution video and a residual resolution video thereof, and the decomposed videos are then encoded. When a video with a plurality of viewpoints is encoded as a reference viewpoint video and a residual video thereof, the value of the SVC extension flag is set at "0" which indicates that the video is encoded as a residual video of the multi-view video.

The data structure D11 further has a view ID (D113) which is information showing a position of the non-reference viewpoint. In this embodiment, a value of "0" of the view ID (D113) indicates the reference viewpoint; "1", the left viewpoint; and "2", the right viewpoint. As in the technique C or the technique D described above, if residual depth maps at a plurality of viewpoints are framed into one, the value "1" is set as the view ID (D113).

The data structure D11 subsequently has an encoded residual video (or an encoded non-reference viewpoint video) D114.

(Encoded entire depth map)

FIG. 13C illustrates a data structure D12 which is a data structure of an encoded entire depth map as a data created by encoding an entire depth map. If the depth map encoding unit 14 in accordance with the MPEG-4 MVC+Depth encoding standard or the 3D-AVC encoding standard is used, the data structure D12 has: the start code D100 at a head thereof; and, subsequently, a NALU type D121 with a value "21" as identification information for identifying being an entire depth map. Note that in a case of the middle warp data Cw in the technique E, the value "21" is set as the NALU type D121.

The data structure D12 further has a SVC (Scalable Video Coding) extension flag D122, to which a value "0" is assigned. The data structure D12 further has a view ID D123 as viewpoint information indicating a position of a viewpoint of the entire depth map. A value "0" is set to the view ID D123 of the entire depth map. The data structure D12 subsequently has an encoded entire depth map (or an encoded middle warp data) D124. If the technique A is used for synthesizing depth maps, though a viewpoint of an entire depth map corresponding thereto is at an intermediate viewpoint position between the middle point and the left viewpoint, the value "0" is set as the view ID. The viewpoint position can be identified as a position of the left intermediate viewpoint, because a value of the depth type indicating a synthesis technique is "0".

(Encoded residual depth map)

FIG. 13D illustrates a data structure D13 which is a data structure of an encoded residual depth map as a data created by encoding a residual depth map. The data structure D13 has: the start code D100 at a head thereof; and, subsequently, a NALU type D131 with a value "21" as identification information for identifying being a residual depth map. Note that in a case of the left warp data Lw in the technique E, the value "21" is set as the NALU type D131.

The data structure D13 subsequently has a SVC (Scalable Video Coding) extension flag D132, to which a value "0" is assigned. The data structure D13 further has a view ID D133 as viewpoint information indicating a position of a viewpoint of the residual depth map. If the residual depth map at a plurality of viewpoints is framed into one as in the technique D, a value "1" is set to the view ID D133 so as to distinguish the residual depth map from an entire depth map. The data structure D13 further has an encoded residual depth map (or an encoded left warp data) D134.

In the technique E, if a warp data at a plurality of viewpoints is framed into one, the value "0" is set as the view ID and the data is encoded using the data structure D12 illustrated in FIG. 13C.

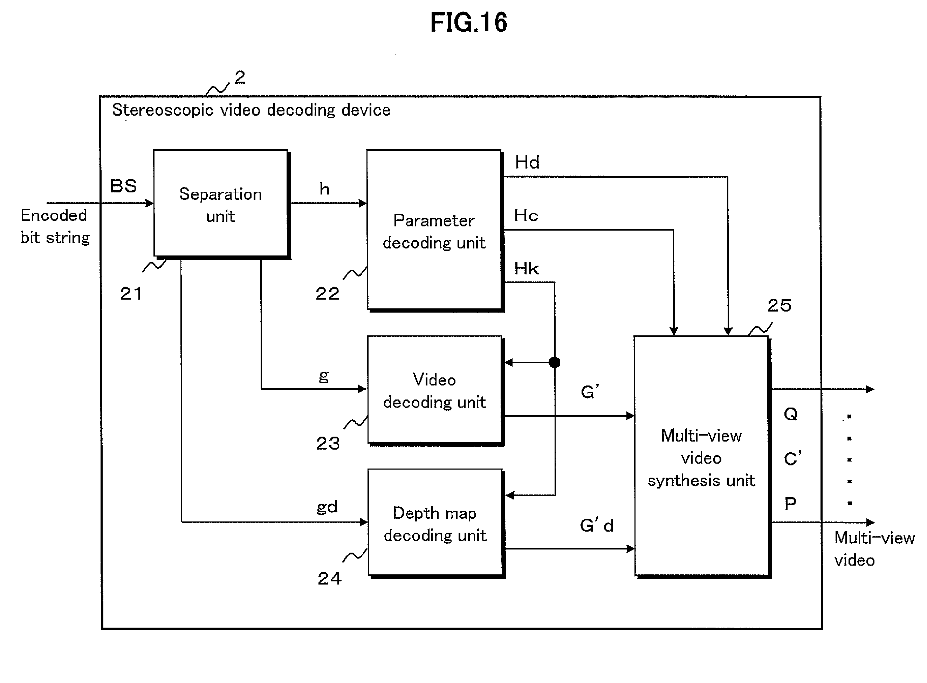

When the depth map encoding unit 14 in accordance with the MPEG-4 MVC encoding standard (profile ID=118, 128) is used, the depth map encoding unit 14 gives a NALU type same as that of the encoded synthesized video g, to an encoded synthesized depth map gd, which makes it impossible to distinguish one from the other. Therefore, the multiplexing unit 16 additionally inserts, as illustrated in FIG. 13E, a NALU type D141 having a value "0", as identification information for identifying being a synthesized depth map, immediately after the start code D100 at the head of a data structure D14. The data structure D14 is a data structure of an encoded entire depth map which is data created by encoding an entire depth map. The value "0" is undefined in the MPEG-4 AVC encoding standard and its extended standards such as the MVC. This makes it position for the separation unit 21 (see FIG. 16) of the decoding device 2 to be described hereinafter, to determine that the data of interest is the synthesized depth map gd. The separation unit 21 (see FIG. 16) of the decoding device 2 then: deletes the inserted NALU type D141 of the value "0"; thereby converts the data structure D14 of the data into the data structure D10 illustrated in FIG. 13A; and outputs the data to a depth map decoding unit 24 (see FIG. 16). This makes it possible for the depth map decoding unit 24 (see FIG. 16) to correctly decode the data as a NALU having the NALU type D101 in accordance with the MVC encoding standard.

FIG. 13F illustrates a data structure D15 which is a data structure of an encoded residual depth map as a data created by encoding a residual depth map. The multiplexing unit 16 inserts a NALU type D151 having a value of "0" as identification information for identifying being a synthesized depth map, immediately after the start code D100 at a head of the data structure D15. This makes it possible for the separation unit 21 (see FIG. 16) of the decoding device 2 to be described later to determine that the data of interest is a synthesized depth map. The separation unit 21 (see FIG. 16) of the decoding device 2 then: deletes the inserted NALU type D151 having the value "0"; thereby converts the data structure D15 of the data into the data structure D11 illustrated in FIG. 13B; and outputs the data to the depth map decoding unit 24 (see FIG. 16). This makes it possible for the depth map decoding unit 24 (see FIG. 16) to correctly decode the data as a NALU having the NALU type D111 in accordance with the MVC encoding standard.

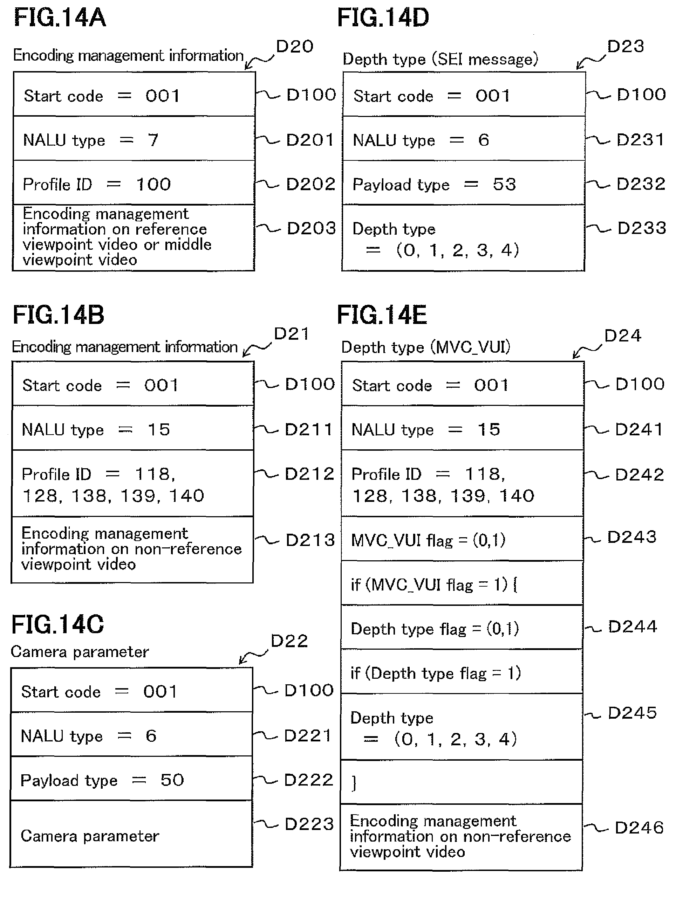

Next are described data structures of encoded parameters, with reference to FIG.14A to FIG. 14E.

(Encoding management information on reference viewpoint video)

FIG. 14A illustrates a data structure D20 which is a data structure of the encoded parameter h created by encoding a SPS (Sequence Parameter Set) which is encoding management information on the reference viewpoint video (or the middle viewpoint video). The data structure D20 has: the start code D100 at a head thereof; and, subsequently, a NALU type D201 having a value of "7" as identification information for identifying being the encoding management information (SPS) on the reference viewpoint video. The data structure D20 further has a profile ID D202 which is one-byte information showing a set of tools which encode the reference viewpoint video. A value of, for example, "100" is set to the profile ID D202. The data structure D20 further has encoding management information D203 which is information on the reference viewpoint video (or the middle viewpoint video).

(Encoding management information on non-reference viewpoint video)

FIG. 14B illustrates a data structure D21 which is a data structure of the encoded parameter h created by encoding the S_SPS (Subset_Sequence Parameter Set) which is encoding management information on the non-reference viewpoint video (a left viewpoint video, a right viewpoint video, and the like). The data structure D21 has: the start code D100 at a head thereof; and, subsequently, a NALU type D211 having a value "15" as identification information for identifying being the management information (S_SPS) on the non-reference viewpoint video. The data structure D21 further has a profile ID D212 which is information showing a set of tools which encode the non-reference viewpoint video. For example, a value of "118", "128", "138", "139", or "140" is set at the profile ID D212. The data structure D21 subsequently has encoding management information D213 on the non-reference viewpoint video.

The value "118" of the profile ID herein means that a synthesized video or a synthesized depth map is encoded using a MVC encoding tool which is an extended standard of the MPEG-4 AVC encoding standard; the value "128", using a stereo encoding tool; the value "138", using a MVC +Depth encoding tool; and the value "139", using a 3D-AVC encoding tool. Those values may be kept as they are but may have a problem that a multi-view video cannot be synthesized correctly, though an encoded bit string can be decoded correctly. This is because a conventional decoding device based on the MPEG-4 AVC encoding standard and its extended standard cannot decode the depth type. The problem may be ignored or may be solved by setting a value of "140" at the profile ID. The value "140" of the profile ID is undefined in the MPEG-4 AVC encoding standard and its extended standard. Thus, if the conventional decoding device in accordance with the MPEG-4 AVC encoding standard and its extended standard receives an encoded bit string having the value "140" as the profile ID, the conventional decoding device stops decoding because an encoding method used is determined to be unknown. This can prevent an erroneous operation that the conventional decoding device synthesizes an incorrect multi-view video.

(Camera parameter)

In this embodiment, a camera parameter is encoded as a SEI (Supplemental Enhancement Information) message which is information for decoding and displaying a video. FIG. 14C illustrates a data structure D22 of the encoded parameter h in which the camera parameter is encoded. The data structure D22 has: the start code D100 at a head thereof; and, subsequently, a NALU type D221 having a value of "6" as identification information for identifying being a SEI message. The data structure D22 further has a payload type D222 having a value "50" as 1-byte information for identifying a presence of the camera parameter as the SEI message. The data structure D22 further has a camera parameter D223.

Note that the SEI message is used for transmitting various types of information for decoding and displaying a video. On the other hand, one NALU contains only a prescribed relevant data on one type of information. The relevant data is previously determined for each type.

(Depth type)

In this embodiment, the depth type indicating a technique of synthesizing a video and a depth map is encoded as a SEI message as described above. FIG. 14D illustrates a data structure D23 of the encoded parameter h in which a depth type is encoded. The data structure D23 has: the start code D100 at a head thereof; and, subsequently, a NALU type D231 having a value "6" as identification information for identifying being a SEI message. The data structure D23 further has a payload type D232 having a value of, for example, "53", as information for identifying a presence of the depth type as the SEI message. The data structure D23 subsequently has a depth type value D233.

Note that a data structure of another depth type illustrated in FIG. 14E will be described in a second embodiment.

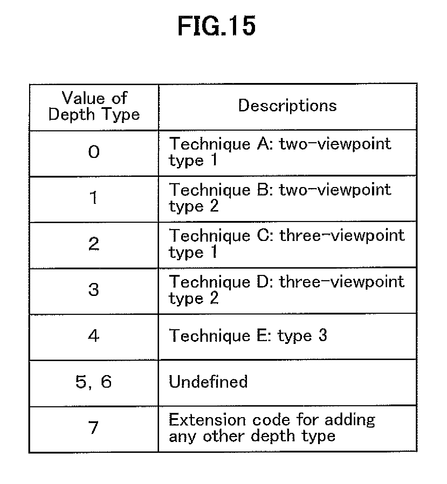

Next is described a correspondence relation between a value of a depth type and a technique of synthesizing a video and a depth map, with reference to FIG. 15.

In this embodiment, as illustrated in FIG. 15, values "0" to "4" represent the techniques A to E, respectively. Values "5" and "6" are undefined. A value "7" is assigned as an extension code for adding any other depth type.

It is assumed in this embodiment that, if the encoding device 1 transmits a video or a depth map without a depth type thereof to the stereoscopic video decoding device 2 (see FIG. 1), the stereoscopic video decoding device 2 handles the video or the depth map as not having been subjected to any processing but just having been encoded and then transmitted.

[Configuration of stereoscopic video decoding device]

Next is described a configuration of the stereoscopic video decoding device 2 according to the first embodiment with reference to FIG. 16 (as well as FIG. 1 where appropriate). The stereoscopic video decoding device 2: decodes the encoded bit string BS transmitted from the stereoscopic video encoding device 1 illustrated in FIG. 2 via a transmission line; and thereby creates a multi-view video. The encoded synthesized video g, the encoded synthesized depth map gd, and the encoded parameter h which is necessary for decoding, synthesizing, or displaying a multi-view video are multiplexed in the encoded bit string BS.

As illustrated in FIG. 16, the stereoscopic video decoding device 2 (which may also be simply referred to as the "decoding device 2" hereinafter, where appropriate) according to the first embodiment includes the separation unit 21, a parameter decoding unit 22, a video decoding unit 23, the depth map decoding unit 24, and a multi-view video synthesis unit 25.

The separation unit 21: inputs therein the encoded bit string BS transmitted from the encoding device 1; and separates the encoded parameter h, the encoded synthesized video g, and the encoded synthesized depth map gd which have been multiplexed, from the encoded bit string BS. The separation unit 21 then outputs: the separated encoded parameter h to the parameter decoding unit 22; the separated encoded synthesized video g to the video decoding unit 23; and the separated encoded synthesized depth map gd to the depth map decoding unit 24.

The parameter decoding unit 22: inputs therein the encoded parameter h from the separation unit 21; decodes the inputted encoded parameter h; and outputs the decoded data to other constituent unit according to types of the parameters. The parameter decoding unit 22 outputs: the depth type Hd and the camera parameter Hc to the multi-view video synthesis unit 25; and the encoding management information Hk to the video decoding unit 23 and the depth map decoding unit 24.

The video decoding unit 23: inputs therein the encoded synthesized video g from the separation unit 21 and the encoding management information Hk from the parameter decoding unit 22; references a profile ID (see the data structures D20 and D21 illustrated in FIG. 14A and FIG. 14B, respectively) indicating an encoding method of a video contained in the encoding management information Hk; and decodes the encoded synthesized video g according to the encoding method. The video decoding unit 23 then outputs the created decoded synthesized video G' to the multi-view video synthesis unit 25.

The depth map decoding unit 24: inputs therein the encoded synthesized depth map gd from the separation unit 21 and the encoding management information Hk from the parameter decoding unit 22; references a profile ID (see the data structure D21 illustrated in FIG. 14B) indicating an encoding method of a depth map contained in the encoding management information Hk; and decodes the encoded synthesized depth map gd according to the encoding method. The depth map decoding unit 24 then outputs the created decoded synthesized depth map G'd to the multi-view video synthesis unit 25.

The multi-view video synthesis unit 25: inputs therein the depth type Hd and the camera parameter Hc from the parameter decoding unit 22, the decoded synthesized video G' from the video decoding unit 23, and the decoded synthesized depth map G'd from the depth map decoding unit 24; and synthesizes, for example, a video at a specified viewpoint which is outputted from the outside via a user interface, using the above-described information. The multi-view video synthesis unit 25 then outputs the synthesized multi-view videos P, C', Q, and the like to, for example, the stereoscopic video display device 4 (see FIG. 1).

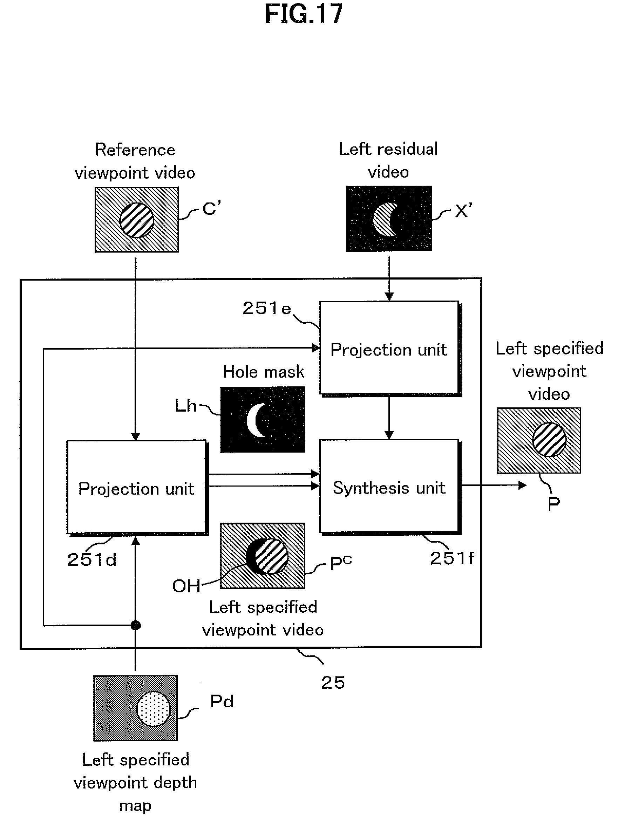

Next is described an outline of how to synthesize a multi-view video, with reference to FIG. 17.

FIG. 17 is, as an example, a block diagram illustrating major units and elements necessary for explaining how the multi-view video synthesis unit 25 of the decoding device 2 illustrated in FIG. 16 creates a multi-view video using the technique A.

It is assumed in the example illustrated in FIG. 17 that, similarly to the example illustrated in FIG. 10, the reference viewpoint video C', the left residual video X', and the like are each constituted by the round-shaped object as the foreground and the other object as the background. The example illustrates how the left specified viewpoint video P which is a video at a left specified viewpoint which is specified between the reference viewpoint and the left viewpoint is synthesized using: the decoded reference viewpoint video C'; the decoded left residual video X'; and the left specified viewpoint depth map Pd which is created by projecting the entire depth map (not shown) at the decoded left intermediate viewpoint, to the left specified viewpoint.

In the example illustrated in FIG. 17, the projection unit 251 d of the multi-view video synthesis unit 25: projects the reference viewpoint video C' to the left specified viewpoint using the left specified viewpoint depth map Pd; and thereby creates the left specified viewpoint video P$^C$. At this time, the occlusion hole OH (a crescent-shaped black portion in FIG. 17) is generated in the left specified viewpoint video P$^C$. The projection unit 251 d of the multi-view video synthesis unit 25 creates the hole mask Lh indicating the area to become the occlusion hole OH. In the hole mask Lh illustrated in FIG. 17, a crescent-shaped white area is an area to become the occlusion hole OH.

The projection unit 251e of the multi-view video synthesis unit 25 projects the left residual video X' to the left specified viewpoint, using the left specified viewpoint depth map Pd.

The synthesis unit 251f of the multi-view video synthesis unit 25 extracts a pixel at a position corresponding to the occlusion hole OH indicated by the hole mask Lh, from a residual video projected to the left specified viewpoint; and interpolates the extracted pixel in the left specified viewpoint video P$^C$. This makes it possible to synthesize the left specified viewpoint video P without any occlusion hole OH.

In this example, as a depth map, an entire depth map at the left intermediate viewpoint is used for synthesizing the multi-view video. However, a depth map at another viewpoint may be used.

The multi-view video synthesis unit 25 of the decoding device 2 according to this embodiment illustrated in FIG. 16 synthesizes a video at a freely specified viewpoint, corresponding to each of the five techniques of synthesizing a video and a depth map by the encoding device 1 (the technique A to the technique E) as well as the technique of encoding and transmitting a plurality of depth maps and videos as they are without being subjected to any processing. The decoding device 2 identifies by which of the techniques a video and a depth map inputted are synthesized, by referencing the depth type Hd as one of the encoded parameters. The decoding device 2 is assumed to synthesize a multi-view video using the multi-view video synthesis unit 25 having a configuration corresponding to the technique indicated by the depth type Hd.

Next is described a configuration of the multi-view video synthesis unit 25 corresponding to each of the synthesis techniques, with reference to FIG. 8Aa through FIG. 18Cb (as well as FIG. 4, FIGS. 5A to 5C, FIG. 8, FIGS. 9A and 9B, and FIG. 16 where necessary).

(Technique A: two-viewpoint type 1)

In the technique A, as illustrated in the second row of FIG. 4 and the first row of FIG. 8: the entire depth map Zd at the left intermediate viewpoint is encoded as the synthesized depth map Gd; and the reference viewpoint video C and the left residual video X are encoded as the synthesized video G.

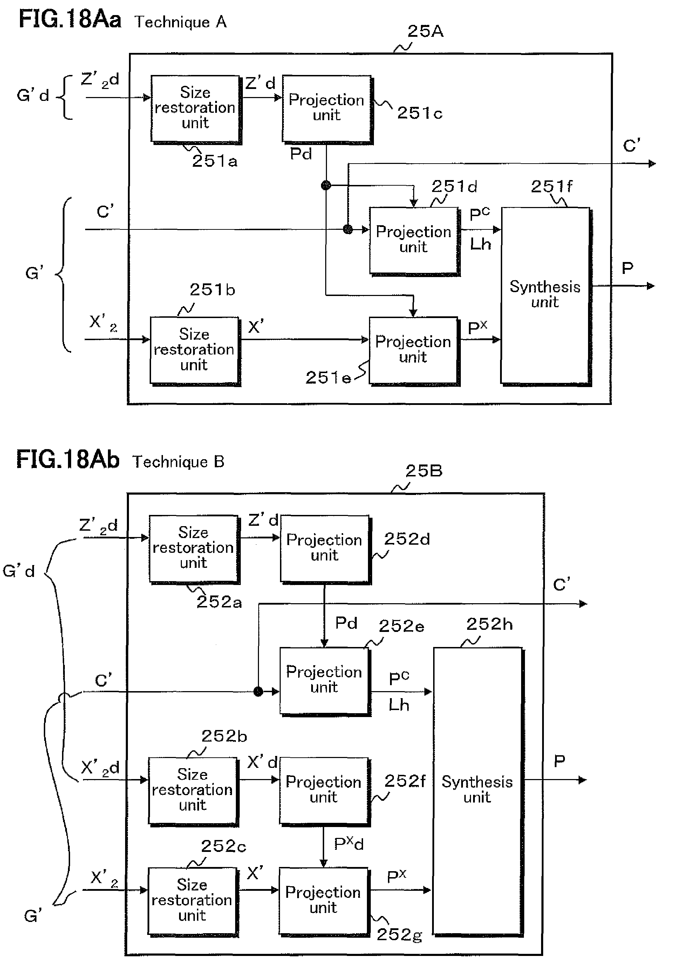

The multi-view video synthesis unit 25A: synthesizes a multi-view video using the technique A; and includes, as illustrated in FIG. 18Aa, a size restoration unit 251 a, a size restoration unit 251 b, a projection unit 251 c, a projection unit 251 d, a projection unit 251e, and a synthesis unit 251f.

The size restoration unit 251 a: inputs therein the reduced entire depth map Z'$_2$d as the decoded synthesized depth map G'd, from the depth map decoding unit 24; magnifies the depth map Z'$_2$d at a prescribed magnification ratio; and thereby restores the entire depth map Z'd to an original size thereof. The size restoration unit 251 a outputs the restored entire depth map Z'd to the projection unit 251 c.

Note that, if the inputted decoded synthesized depth map G'd is not subjected to reduction, the size restoration unit 251a can be omitted. Omission of the size restoration unit also applies to the size restoration unit 251 b of a video to be described later. The same applies to respective size restoration units using other techniques to be described later.

The size restoration unit 251b: inputs therein the left reduced residual video X'$_2$ which is a part of a decoded synthesized video G', from the video decoding unit 23; magnifies the residual video X'$_2$ at a prescribed magnification ratio; and thereby restores the left residual video X' to an original size thereof. The size restoration unit 251b outputs the restored left residual video X' to the projection unit 251 e.

The projection unit 251 c: inputs therein the entire depth map Z'd at the left intermediate viewpoint from the size restoration unit 251a; projects the entire depth map Z'd to the left specified viewpoint; and thereby creates the left specified viewpoint depth map Pd. The projection unit 251 c outputs the created left specified viewpoint depth map Pd to the projection unit 251d and the projection unit 251e.

The projection unit 251d: inputs therein the decoded reference viewpoint video C' from the video decoding unit 23 and the left specified viewpoint depth map Pd from the projection unit 251c; projects the reference viewpoint video C' to the left specified viewpoint, using the left specified viewpoint depth map Pd; and thereby creates the left specified viewpoint video $P^C$. The projection unit 251d creates the hole mask Lh which indicates an area to become an occlusion hole in the left specified viewpoint video $P^C$, when the reference viewpoint video C' is projected to the left specified viewpoint, using the left specified viewpoint depth map Pd.

The projection unit 251d outputs the created left specified viewpoint video $P^C$ and the created hole mask Lh to the synthesis unit 251f.

The projection unit 251e: inputs therein the left residual video X' from the size restoration unit 251 b and the left specified viewpoint depth map Pd from the projection unit 251 c; projects the left residual video X' to the left specified viewpoint using the left specified viewpoint depth map Pd; and thereby creates the left specified viewpoint residual video $P^X$. The projection unit 251e outputs the created left specified viewpoint residual video $P^X$ to the synthesis unit 251f.

The synthesis unit 251f: inputs therein the left specified viewpoint video $P^C$ and the hole mask Lh from the projection unit 251d, and the left specified viewpoint residual video $P^X$ from the projection unit 251e; extracts a pixel in an area constituting an occlusion hole indicated by the hole mask Lh from the left specified viewpoint residual video $P^X$; interpolates the extracted pixel in the left specified viewpoint video $P^C$; and thereby creates the left specified viewpoint video P. If there is a pixel to which a valid pixel has been projected from neither the left specified viewpoint video $P^C$ nor the left specified viewpoint residual video $P^X$ in the above-described interpolation processing, the synthesis unit 251f interpolates the pixel therein using a value of a valid pixel neighboring thereto.

The synthesis unit 251f outputs the created left specified viewpoint video P together with the reference viewpoint video C' as a multi-view video to, for example, the stereoscopic video display device 4 (see FIG. 1).

Note that, as the multi-view video, in place of or in addition to the reference viewpoint video C', a video at another viewpoint may be synthesized and outputted. A position of a viewpoint of a video to be synthesized and the number of the viewpoints used in this technique are similar to those in the other techniques to be described hereinafter.

(Technique B: two-viewpoint type 2)

In the technique B, as illustrated in the third row of FIG. 4 and the first row of FIG. 8: the entire depth map Zd at the reference viewpoint and the left residual depth map Xd are encoded as the synthesized depth map Gd; and the reference viewpoint video C and the left residual video X are encoded as the synthesized video G.

The multi-view video synthesis unit 25B: synthesizes a multi-view video using the technique B; and includes, as illustrated in FIG. 18Ab, a size restoration unit 252a, a size restoration unit 252b, a size restoration unit 252c, a projection unit 252d, a projection unit 252e, a projection unit 252f, a projection unit 252g, and a synthesis unit 252h.

The size restoration unit 252a: inputs therein the reduced entire depth map $Z'_2d$ which is a part of the decoded synthesized depth map G'd, from the depth map decoding unit 24; magnifies the depth map $Z'_2d$ at a prescribed magnification ratio; and thereby restores the entire depth map Z'd to an original size thereof. The size restoration unit 252a outputs the restored entire depth map Z'd to the projection unit 252d.

The size restoration unit 252b: inputs therein the left reduced residual depth map $X'_2d$ which is a part of the decoded synthesized depth map G'd, from the depth map decoding unit 24; magnifies the depth map $X'_2d$ at a prescribed magnification ratio; and thereby restores the left residual depth map X'd to an original size thereof. The size restoration unit 252b outputs the restored left residual depth map X'd to the projection unit 252f.

The size restoration unit 252c: inputs therein the left reduced residual video $X'_2$ which is the decoded synthesized video G', from the video decoding unit 23; magnifies the residual video $X'_2$ at a prescribed magnification ratio; and thereby restores the left residual video X' to an original size thereof. The size restoration unit 252c outputs the restored left residual video X' to the projection unit 252g.

The projection unit 252d: inputs therein the entire depth map Z'd at the middle point as the reference viewpoint, from the size restoration unit 252a; projects the entire depth map Z'd to the left specified viewpoint; and thereby creates the left specified viewpoint depth map Pd. The projection unit 252d outputs the created left specified viewpoint depth map Pd to the projection unit 252e.

The projection unit 252e: inputs therein the decoded reference viewpoint video C' from the video decoding unit 23 and the left specified viewpoint depth map Pd from the projection unit 252d; projects the reference viewpoint video C' to the left specified viewpoint using the left specified viewpoint depth map Pd; and thereby creates the left specified viewpoint video $P^C$ and the hole mask Lh which indicates an area to which no pixel is projected and which becomes an occlusion hole. The projection unit 252e outputs the created left specified viewpoint video $P^C$ and the created hole mask Lh to the synthesis unit 252h.

The projection unit 252f: inputs therein the left residual depth map X'd from the size restoration unit 252b; projects the left residual depth map X'd to the left specified viewpoint; and thereby creates the left specified viewpoint residual depth map $P^Xd$. The projection unit 252f outputs the created left specified viewpoint residual depth map $P^Xd$ to the projection unit 252g.

The projection unit 252g: inputs therein the left residual video X' from the size restoration unit 252c and the left specified viewpoint residual depth map $P^Xd$ from the projection unit 252f; projects the left residual video X' using the left specified viewpoint residual depth map $P^X d$; and thereby creates the left specified viewpoint residual video $P^X$ The projection unit 252g outputs the created left specified viewpoint residual video $P^X$ to the synthesis unit 252h.

The synthesis unit 252h: inputs therein the left specified viewpoint video $P^C$ and the hole mask Lh from the projection unit 252e, and the left specified viewpoint residual video $P^X$ from the projection unit 252g; extracts a pixel constituting an occlusion hole in the left specified viewpoint video $P^C$ from the left specified viewpoint residual video $P^X$; interpolates the pixel in the left specified viewpoint video $P^C$; and thereby creates the left specified viewpoint video P. If there is a pixel to which a valid pixel has been projected from neither the left specified viewpoint video $P^C$ nor the left specified viewpoint residual video $P^X$ in the above-described interpolation processing, the synthesis unit 252h interpolates the pixel therein using a value of a valid pixel neighboring thereto.

The synthesis unit 252h outputs the created left specified viewpoint video P as a part of the multi-view video to, for example, the stereoscopic video display device 4 (see FIG. 1).

That is, the multi-view video synthesis unit 25B using the technique B outputs the multi-view video constituted by the left specified viewpoint video P and the reference and the viewpoint video C'.

(Technique C: three-viewpoint type 1)

In the technique C, as illustrated in the fourth row of FIG. 4 and the second row of FIG. 8, the entire depth map Zd at the reference viewpoint is encoded as the synthesized depth map Gd; and the reference viewpoint video C, the left residual video X, and the right residual video Y are encoded as the synthesized video G.

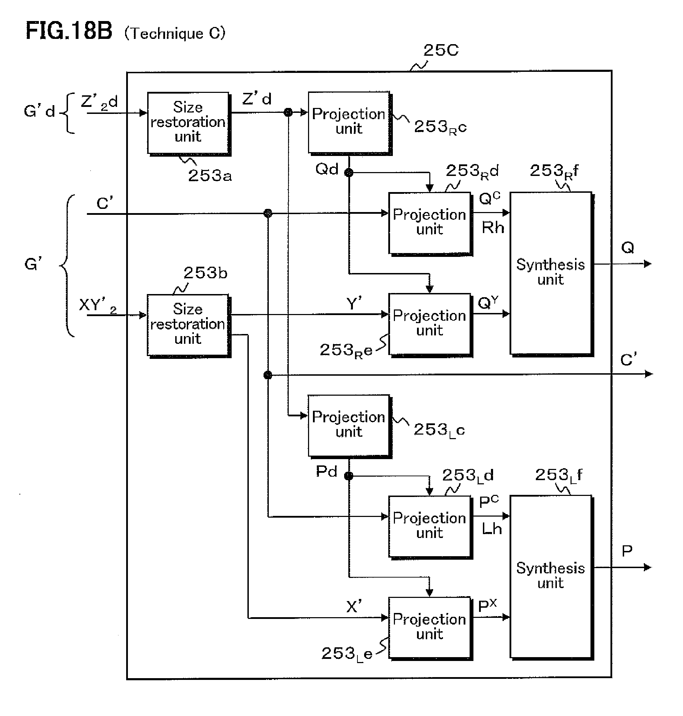

The multi-view video synthesis unit 25C: synthesizes a multi-view video using the technique C; and includes, as illustrated in FIG. 18B, a size restoration unit 253a, a size restoration unit 253b, projection units $253_L c$, $253_R c$, projection units $253_L d$, $253_R d$, projection units $253_L e$, $253_R e$, and synthesis units $253_L f$, $253_R f$.

The size restoration unit 253a: inputs therein the reduced entire depth map $Z'_2 d$ which is created by reducing the entire depth map at the reference viewpoint as the decoded synthesized depth map G'd, from the depth map decoding unit 24; magnifies the reduced entire depth map $Z'_2 d$ at a prescribed magnification ratio; and thereby restores the entire depth map Z'd to an original size thereof. The size restoration unit 253a outputs the restored entire depth map Z'd to the projection unit $253_L c$ and the projection unit $253_R c$.

The size restoration unit 253b: inputs therein a reduced residual video $XY'_2$ which is a part of the decoded synthesized video G', from the video decoding unit 23; separates the reduced residual video $XY'_2$ into right and left residual videos; magnifies the right and left residual videos at respective prescribed magnification ratios; and thereby restores the left residual video X' and the right residual video Y' to respective original sizes thereof. The size restoration unit 253b outputs the restored left residual video X' to the projection unit $253_L e$ and the restored right residual video Y' to the projection unit $253_R e$.

Next is described a configuration with respect to the left viewpoint.

The projection unit $253_L c$: inputs therein the entire depth map Z'd at the reference viewpoint from the size restoration unit 253a; projects the entire depth map Z'd to the left specified viewpoint; and thereby creates the left specified viewpoint depth map Pd. The projection unit $253_L c$ outputs the created left specified viewpoint depth map Pd to the projection unit $253_L d$ and the projection unit $253_L e$.

The projection unit $253_L d$: inputs therein the left specified viewpoint depth map Pd, and the reference viewpoint video C' which is a part of the decoded synthesized video G', from the video decoding unit 23; and thereby creates the left specified viewpoint video $P^C$ which is created by projecting the reference viewpoint video C' to the left specified viewpoint, using the left specified viewpoint depth map Pd and the hole mask Lh indicating an area constituting an occlusion hole in the left specified viewpoint video $P^C$. The projection unit $253_L d$ outputs the created left specified viewpoint video $P^C$ and the created hole mask Lh to the synthesis unit $253_L f$.

The projection unit $253_L e$: inputs therein the left specified viewpoint depth map Pd from the projection unit $253_L c$, and the left residual video X' from the size restoration unit 253b; projects the left residual video X' to the left specified viewpoint, using the left specified viewpoint depth map Pd; and thereby creates the left specified viewpoint residual video $P^X$. The projection unit $253_L e$ outputs the created left specified viewpoint residual video $P^X$ to the synthesis unit $253_L f$.

The synthesis unit $253_L f$: inputs therein the left specified viewpoint video $P^C$ and the hole mask Lh from the projection unit $253_L d$, and the left specified viewpoint residual video $P^X$ from the projection unit $253_L e$; extracts a pixel in an area constituting an occlusion indicated by the hole mask Lh, from the left specified viewpoint residual video $P^X$; interpolates the pixel in the left specified viewpoint video $P^C$; and thereby creates the left specified viewpoint video P. If there is a pixel to which a valid pixel has been projected from neither the left specified viewpoint video $P^C$ nor the left specified viewpoint residual video $P^X$ in the above-described interpolation processing, the synthesis unit $253_L f$ interpolates the pixel therein using a value of a valid pixel neighboring thereto.

The synthesis unit $253_L f$ outputs the created left specified viewpoint video P, together with the reference viewpoint video C' and a right specified viewpoint video Q to be described hereinafter as the multi-view video to, for example, the stereoscopic video display device 4 (see FIG. 1).

The projection unit $253_R c$, the projection unit $253_R d$, the projection unit $253_R e$, and the synthesis unit $253_R f$ correspond to the projection unit $253_L c$, the projection unit $253_L d$, the projection unit $253_L e$, and the synthesis unit $253_L f$ as described above, respectively. The former is different from the latter only in a right and left positional relation with respect to the reference viewpoint, detailed description of which is thus omitted. Note that, in creating the right specified viewpoint video Q: a right specified viewpoint depth map Qd is created in place of the left specified viewpoint depth map Pd for creating the above-described left specified viewpoint video P; and, the right residual video Y' is used in place of the left residual video X'. Similarly, the right specified viewpoint video $Q^C$, a right specified viewpoint reference viewpoint $Q^Y$, and the hole mask Rh are used in place of the left specified viewpoint video $P^C$, the left specified viewpoint residual video $P^X$, and the hole mask Lh, respectively.

(Technique D: three-viewpoint type 2)

In the technique D, as illustrated in the fifth row of FIG. 4 and the second row of FIG. 8: the entire depth map Zd at the reference viewpoint, the left residual depth map Xd, and the right residual depth map Yd are encoded as the synthesized depth map Gd; and the reference viewpoint video C, the left residual video X, and the right residual video Y are encoded as the synthesized video G.

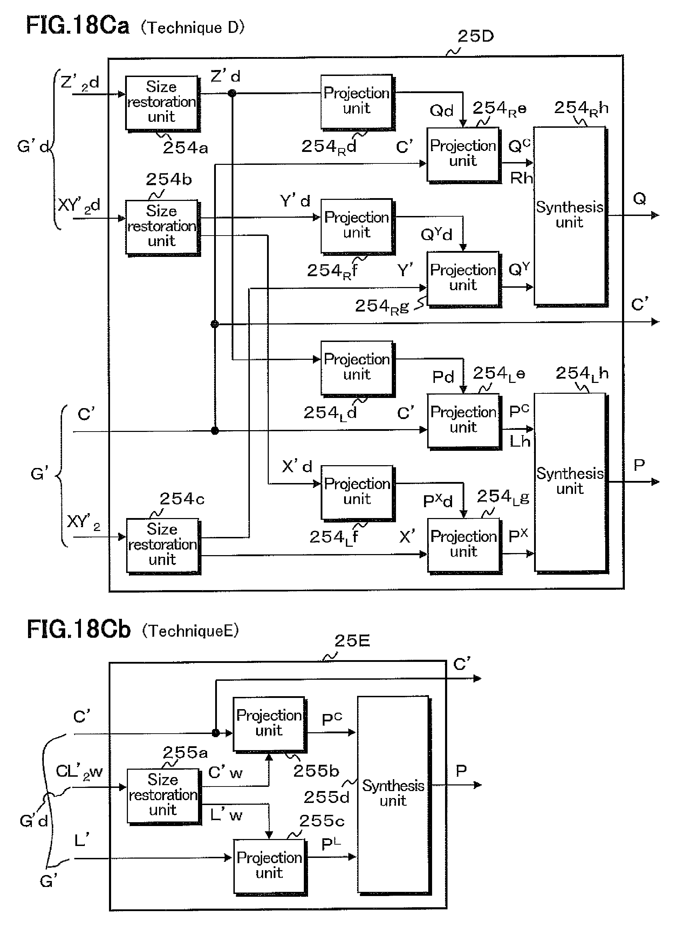

The multi-view video synthesis unit 25D: synthesizes a multi-view video using the technique D; and includes, as illustrated in FIG. 18Ca, a size restoration unit 254a, a size restoration unit 254b, a size restoration unit 254c, projection units $254_L d$, $254_R d$, projection units $254_L e$, $254_R e$, projection units $254_L f$, $254_R f$, projection units $254_L g$, $254_R g$, and synthesis units $254_L h$, $254_R h$.

The size restoration unit 254a: inputs therein the reduced entire depth map $Z'_2 d$ which is a part of the decoded synthesized depth map G'd from the depth map decoding unit 24; magnifies the reduced entire depth map $Z'_2 d$ at a prescribed magnification ratio; and thereby restores the entire depth map Z'd to an original size thereof. The size restoration unit 254a outputs the restored entire depth map Z'd to the projection unit $254_L d$ and the projection unit $254_R d$.

The size restoration unit 254b: inputs therein the reduced residual depth map $XY'_2 d$ which is a part of the decoded synthesized depth map G'd, from the depth map decoding unit 24; separates the reduced residual depth map $XY'_2 d$ into a right and a left residual depth maps; magnifies the residual depth maps at respective magnification ratios; and thereby restores the left residual depth map X'd and a right residual depth map Y'd to respective original sizes. The size restoration unit 254b outputs the restored left residual depth map X'd to the projection unit $254_L f$ and the restored right residual depth map Y'd to the projection unit $254_R f$.

The size restoration unit 254c: inputs therein the reduced residual video $XY'_2$ which is a part of the decoded synthesized video G', from the video decoding unit 23; separates the reduced residual video $XY'_2$ into a right and a left residual videos; magnifies the residual videos at respective magnification ratios; and thereby restores the left residual video X' and the right residual video Y' to respective original sizes. The size restoration unit 254c outputs the restored left residual video X' to the projection unit $254_L g$ and the restored right residual video Y' to the projection unit $254_R g$.

The projection unit $254_L d$, the projection unit $254_L e$, the projection unit $254_L f$, the projection unit $254_L g$, and the synthesis unit $254_L h$: correspond to the projection unit 252d, the projection unit 252e, the projection unit 252f, the projection unit 252g, and the synthesis unit 252h, respectively, of the multi-view video synthesis unit 25B using the technique B illustrated in FIG. 18Ab; and similarly synthesize the left specified viewpoint video P. Detailed description thereof is thus omitted herefrom.

The projection unit $254_R d$, the projection unit $254_R e$, the projection unit $254_R f$, the projection unit $254_R g$, and the synthesis unit $254_R h$: correspond to the projection unit $254_L d$, the projection unit $254_L e$, the projection unit $254_L f$, the projection unit $254_L g$, and the synthesis unit $254_L h$ as above-described, respectively; and synthesize, in place of the left specified viewpoint video P, the right specified viewpoint video Q. The former is different from the latter only in a right and left positional relation with respect to the reference viewpoint, and can similarly synthesize the right specified viewpoint video Q. Detailed description thereof is thus omitted herefrom.

Note that, in creating the right specified viewpoint video Q: the right specified viewpoint depth map Qd is created in place of the left specified viewpoint depth map Pd for creating the above-described left specified viewpoint video P; the right residual video Y'd is used in place of the left residual video X'd; and, the right residual video Y' is used in place of the left residual video X'. Similarly, the right specified viewpoint video $Q^C$, the hole mask Rh, and the right specified viewpoint reference viewpoint $Q^Y$ are used in place of the left specified viewpoint video $P^C$, the hole mask Lh, and the left specified viewpoint residual video $P^X$, respectively.

(Technique E: type 3)

In the technique E, as illustrated in the sixth row of FIG. 4 and the third row of FIG. 8, the middle warp data Cw which is a warped depth map at the reference viewpoint (the middle point) and the left warp data Lw which is a warped depth map at the left viewpoint are encoded as the synthesized depth map Gd; and the reference viewpoint video C and the left viewpoint video L which are videos at two viewpoints are encoded as the synthesized video G.

The multi-view video synthesis unit 25E: synthesizes a multi-view video using the technique E; and includes, as illustrated in FIG. 18Cb, a size restoration unit 255a, a projection unit 255b, a projection unit 255c, and a synthesis unit 255d.

The size restoration unit 255a: inputs therein the reduced warp data $CL'_2w$ which is the decoded synthesized depth map G'd, from the depth map decoding unit 24; separates the reduced warp data $CL'_2w$ into two warp data at two viewpoints different from each other; magnifies the separated warp data at respective magnification ratios; thereby restores a middle warp data C'w and a left warp data L'w to respective original sizes. The size restoration unit 255a outputs the restored middle warp data C'w to the projection unit 255b and the restored left warp data L'w to the projection unit 255c.

The projection unit 255b: inputs therein the middle warp data C'w from the size restoration unit 255a and the reference viewpoint video C' which is a part of the restored synthesized video G' from the video decoding unit 23; projects the reference viewpoint video C' to the left specified viewpoint using the middle warp data C'w; and thereby creates the left specified viewpoint video $P^C$. The projection unit 255b outputs the created left specified viewpoint video $P^C$ to the synthesis unit 255d.

Note that no occlusion is generated in projectively transforming a video using a warp data. This makes it possible to obtain a smooth video in such a manner that an unprojectable pixel in the left specified viewpoint video $P^C$ as a video after the projection is interpolated using a value of a neighboring pixel of the pixel of interest. The same applies to the left specified viewpoint video $P^L$ to be described hereinafter.

The projection unit 255c: inputs therein the left warp data L'w from the size restoration unit 255a and the left viewpoint video L' which is a part of the restored synthesized video G' from the video decoding unit 23; projects the left viewpoint video L' to the left specified viewpoint using the left warp data L'w; and thereby creates the left specified viewpoint video $P^L$. The projection unit 255c outputs the created left specified viewpoint video $P^L$ to the synthesis unit 255d.

The synthesis unit 255d: inputs therein the left specified viewpoint video $P^C$ from the projection unit 255b and the left specified viewpoint video $P^L$ from the projection unit 255c; calculates, for each of pixels, an average of pixel values between the left specified viewpoint video $P^C$ and the left specified viewpoint video $P^L$; and thereby creates the left specified viewpoint video P. The synthesis unit 255d outputs the created left specified viewpoint video P to, for example, the stereoscopic video display device 4 (see FIG. 1).

(Technique of not processing depth map and video)

If a video and a depth map each at a plurality of viewpoints are encoded without being subjected to any processing, the multi-view video synthesis unit 25, as, for example, the multi-view video synthesis unit 25E using the technique E illustrated in FIG. 18Cb: projects the reference viewpoint video C' to the left specified viewpoint using a reference viewpoint depth map which is an entire depth map, in place of the middle warp data C'w; and thereby creates the left specified viewpoint video $P^C$. The multi-view video synthesis unit 25E also: projects the left viewpoint video L' to the left specified viewpoint using a left viewpoint depth map which is an entire depth map, in place of the left warp data L'w; and thereby creates the left specified viewpoint video $P^L$. The multi-view video synthesis unit 25E then synthesizes the left specified viewpoint video $P^C$ and the left specified viewpoint video $P^L$ by averaging pixel values therebetween for each pixel; and thereby creates the left specified viewpoint video P.

If there is an occlusion hole in the left specified viewpoint video $P^C$ or the left specified viewpoint video $P^L$, if any, is interpolated therebetween.

Each of the encoding device 1 and the decoding device 2 described above can be configured by appropriate units using dedicated hardware circuits. The configuration is not, however, limited to this. Each of the devices 1, 2 may be realized by executing a program which functions as each of the units described above (the stereoscopic video encoding program and the stereoscopic video decoding program) by a generally-available computer including a storage unit such as a CPU (central processing unit), a memory, a hard disk, and an optical disc, a communication unit, and the like. The program can be distributed via a communication line or by being written in a recording medium such as an optical disc.

The same applies to a variation and the other embodiments of the present invention to be described hereinafter.

[Operations of stereoscopic video encoding device]

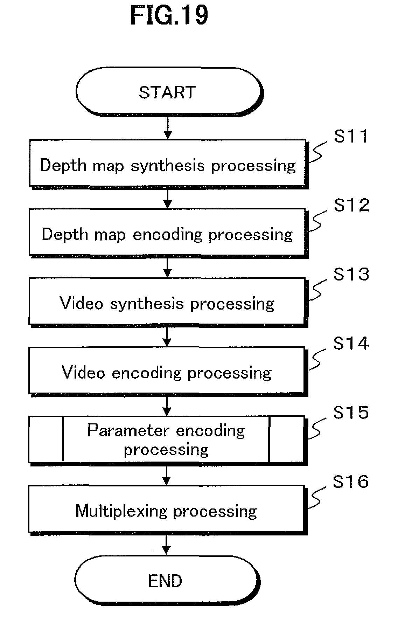

Next are described operations of the stereoscopic video encoding device 1 according to the first embodiment, with reference to FIG. 19 (as well as FIG. 1 and FIG. 2 where necessary).

(Depth map synthesis processing)

The depth map synthesis unit 13 of the encoding device 1: selects a synthesis technique (one of the technique A to the technique E) instructed by the depth type Hd inputted from the outside; and thereby creates the synthesized depth map Gd using the reference viewpoint depth map Cd, the left viewpoint depth map Ld, the right viewpoint depth map Rd, and the camera parameter Hc which are inputted from the outside (step S11).

At this time, any one of the depth map synthesis units 13A to 13E (see FIG. 3A and FIG. 3B) (each of which is specifically referred to as the collectively referred depth map synthesis unit 13) corresponding to the synthesis technique of interest creates the synthesized depth map Gd.

Note that, if no depth type Hd is inputted, the depth map synthesis unit 13 of the encoding device 1 takes a plurality of the inputted entire depth maps as they are without any processing, as the synthesized depth map Gd.

(Depth map encoding processing)

The depth map encoding unit 14 of the encoding device 1 encodes the synthesized depth map Gd created in step S11, using a set of encoding tools which are predetermined assuming that, for example, the profile ID=140; and thereby creates the encoded synthesized depth map gd (step S12).

At this time, one or more NALUs each having the data structure D12 of the encoded entire depth map illustrated in FIG. 13 and/or the data structure D13 of the encoded residual depth map are created as the encoded synthesized depth map gd depending on the selected synthesis technique.

(Video synthesis processing)

The depth map encoding unit 14 of the encoding device 1: decodes the encoded synthesized depth map gd created in step S12; and thereby creates the decoded synthesized depth map G'd. The video synthesis unit 11 of the encoding device 1: selects the synthesis technique (one of the technique A to the technique E) instructed by the above-described depth type Hd; synthesizes the reference viewpoint video C and the left viewpoint video L, or the reference viewpoint video C, the left viewpoint video L, and the right viewpoint video R, using the decoded synthesized depth map G'd and the camera parameter Hc inputted from the outside; and thereby creates the synthesized video G (step S13).

At this time, one of the video synthesis units 11A to 11C (see FIG. 7) (each of which is specifically-referred to as the collectively-referred video synthesis unit 11) corresponding to the synthesis technique creates the synthesized video G.

(Video encoding processing)

The video encoding unit 12 of the encoding device 1: encodes the synthesized video G created in step S13, with respect to, for example, the reference viewpoint video C, using a prescribed set of encoding tools assuming, for example, the profile ID=100; also encodes the synthesized video G with respect to, for example, the residual video or the left viewpoint video (non-reference viewpoint video) using a prescribed set of encoding tools assuming, for example, the profile ID=104; and thereby creates the encoded synthesized video g (step S14).

At this time, two or more NALUs having the data structure D10 of the encoded reference viewpoint video illustrated in FIG. 13 and the data structure D11 of the encoded residual video are created as the encoded synthesized video g depending on the selected synthesis technique.

(Parameter encoding processing)

The parameter encoding unit 15 of the encoding device 1 encodes parameters including various types of the encoding management information Hk, the camera parameter Hc, and the depth type Hd using a prescribed technique; and thereby creates the encoded parameter h (step S15).

At this time, a NALU of each of the parameters having one of the data structures illustrated in FIG. 14A to FIG. 14E is created depending on a type of information of the parameter.

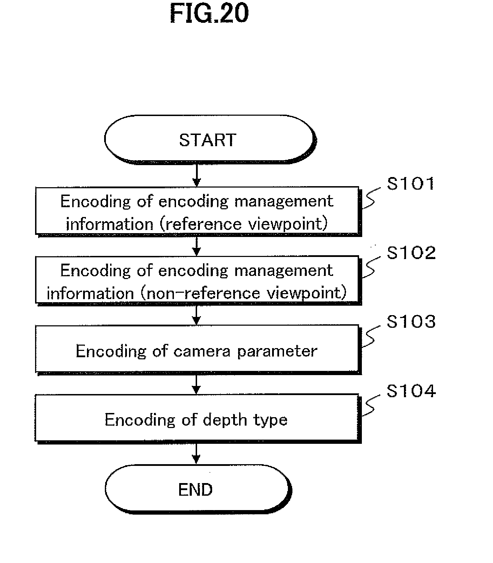

Next is described in detail a parameter encoding processing (step S15 of FIG. 19) with reference to FIG. 20.

As illustrated in FIG. 20, the parameter encoding unit 15 creates a NALU having the data structure D20 illustrated in FIG. 14A, as the encoded parameter h of the encoding management information Hk with respect to the reference viewpoint video (step S101).

The parameter encoding unit 15 creates a NALU having the data structure D21 illustrated in FIG. 14B, as the encoded parameter h of the encoding management information Hk with respect to the non-reference viewpoint video such as the residual video or the left viewpoint video (step S102).

The parameter encoding unit 15 creates a NALU having the data structure D22 illustrated in FIG. 14C, as the encoded parameter h of the camera parameter Hc (step S103).

The parameter encoding unit 15 creates a NALU having the data structure D23 illustrated in FIG. 14D, as the encoded parameter h of the depth type Hd (step S104).

If there is any other parameter, the parameter is encoded using a prescribed technique.

Note that an order of encoding a plurality of parameters is not limited to that described above and may be changed where appropriate.

It is enough for the depth type Hd to be transmitted just once at a beginning of a series of sequences. In order to achieve a random access to an animation video, however, the depth type Hd may be inserted during transmission of a video and a depth map and may be transmitted periodically, for example, for every 24 frame. The camera parameter Hc which can be possibly changed for each frame may be transmitted by being inserted in the encoded bit string BS for each frame.

Referring back to FIG. 19, description of the operations of the encoding device 1 is continued.

(Multiplexing processing)

The multiplexing unit 16 of the encoding device 1: multiplexes the encoded synthesized depth map gd created in step S12, the encoded synthesized video g created in step S14, and the encoded parameter h created in step S15 into the encoded bit string BS; and transmits the encoded bit string BS to the decoding device 2 (step S16).

As described above, the encoded bit string BS is transmitted from the encoding device 1 to the decoding device 2.

[Operations of stereoscopic video decoding device]

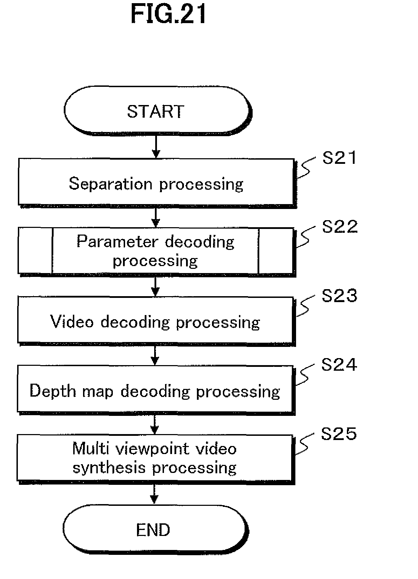

Next are described operations of the stereoscopic video decoding device 2 according to the first embodiment, with reference to FIG. 21 (as well as FIG. 1 and FIG. 16 where necessary).

(Separation processing)

As illustrated in FIG. 21, the separation unit 21 of the decoding device 2: inputs therein the encoded bit string BS from the encoding device 1; separates the inputted encoded bit string BS for each NALU as a unit of information; and outputs the separated encoded bit string BS to an appropriate constituent unit depending on the type of information included in the NALU (step S21).

In more detail, the separation unit 21: detects a value of the NALU type in the NALU, which is positioned after a start code; and determines an output destination of the NALU depending on the detected value of the NALU type.

More specifically, a NALU with respect to the encoded reference viewpoint video which has a value of the NALU type of "5" or "1", or a NALU with respect to the encoded residual video which has a value of the NALU type of "20" is outputted as the encoded synthesized video g to the video decoding unit 23.

A NALU with respect to the encoded entire depth map or the encoded residual depth map which has a value of the NALU type of "21" is outputted as the encoded synthesized depth map gd to the depth map decoding unit 24.

A NALU which has a value of the NALU type of "6", "7", or "15" is outputted as the encoded parameter h to the parameter decoding unit 22.

Regarding a NALU which has the data structure D14 or the data structure D15, both having the value of the NALU type of "0" as illustrated in FIG. 13E and FIG. 13F, respectively, the separation unit 21: deletes the NALU type D141 or the NALU type D151, both having the value "0", from the NALUs; converts the NALU into a NALU having the data structure D10 or the data structure D11, respectively; and outputs the converted NALU to the depth map decoding unit 24. That is, the separation unit 21: converts the NALU having the value of the NALU type of "0" into the NALU having the value of the NALU type of "5", "1", or "20"; and outputs the converted NALU to the depth map decoding unit 24.

(Parameter decoding processing)

The parameter decoding unit 22 of the decoding device 2: decodes the encoded parameter h separated in step S21; and outputs the decoded parameter to an appropriate constituent unit depending on the type of information (step S22).

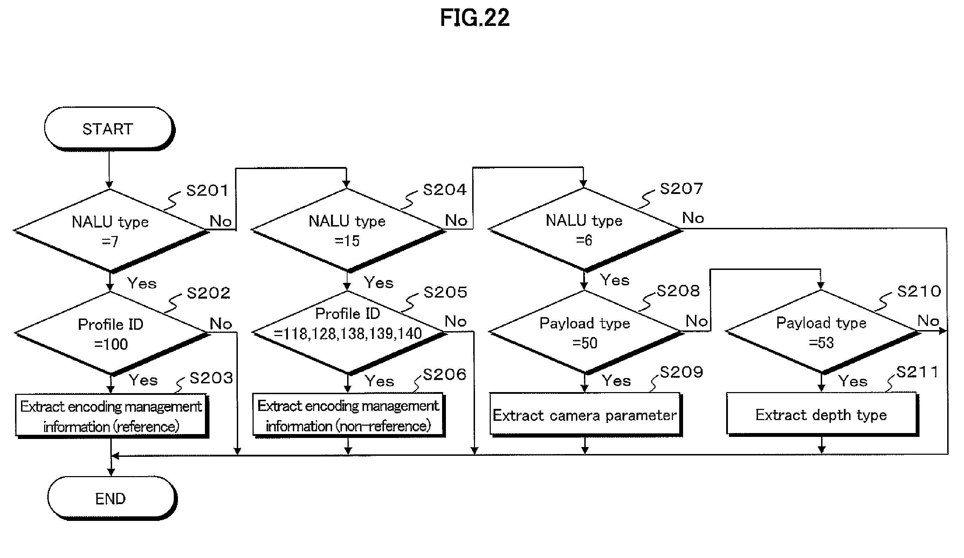

Next is described in detail a parameter decoding processing (step S22 of FIG. 21) with reference to FIG. 22.

To simplify explanations, a case exemplified in FIG. 22 is described in such a manner that only a parameter directly required for the present invention is extracted. However, other parameter or parameters may also be extracted appropriately in accordance with prescribed standards and based on the NALU type or the payload type.

As illustrated in FIG. 22, the parameter decoding unit 22: detects a NALU type owned by the NALU inputted as the encoded parameter h; and determines whether or not the value of the NALU type is "7" (step S201). If the value of the NALU type is "7" (if Yes in step S201), the parameter decoding unit 22 detects a profile ID which is positioned after the NALU type; and determines whether or not the value of the profile I D is "100" (step S202).

If the value of the profile ID is "100" (if Yes in step S202), this means that the encoded reference viewpoint video contained in a series of the encoded bit strings BS has been encoded using a set of prescribed encoding tools which is decodable by the video decoding unit 23. The parameter decoding unit 22 thus extracts another encoding management information Hk contained in the NALU with respect to the encoded reference viewpoint video (step S203). The parameter decoding unit 22 outputs the extracted encoding management information Hk including the profile ID, to the video decoding unit 23 and the depth map decoding unit 24.

On the other hand, if the value of the profile ID is not "100" (if No in step S202), the decoding device 2 cannot decode the encoded reference viewpoint video, and thus stops the decoding processing. This can prevent an erroneous operation of the decoding device 2.

If the value of the NALU type is not "7" (if No in step S201), the parameter decoding unit 22 determines whether or not the value of the NALU type is "15" (step S204). If the value of the NALU type is "15" (if Yes in step S204), the parameter decoding unit 22: detects a profile ID positioned after the NALU type; and determines whether or not a value of the profile ID is "118", "128", "138", "139", or "140" (step S205).

If the value of the profile ID is "118", "128", "138", "139", or"140" (if Yes in step S205), this means that the encoded residual video, the encoded entire depth map, and the encoded residual depth map which are information on a video (non-reference viewpoint video) other than the reference viewpoint video contained in a series of the encoded bit strings BS have been encoded using a set of prescribed encoding tools which is decodable by the video decoding unit 23 and depth map decoding unit 24. The parameter decoding unit 22 thus extracts another encoding management information Hk on the non-reference viewpoint video contained in the NALU (step S206). The parameter decoding unit 22 transmits the extracted encoding management information Hk containing the profile ID to the video decoding unit 23 and the depth map decoding unit 24.

Note that if the value of the profile ID is "118", "128", "138", or "139", this means that: a set of the encoding tools having been used for encoding the non-reference viewpoint video is set based on an old standard which does not support the above-described synthesis technique of synthesizing a video and a depth map; and the video and the depth map at the non-reference viewpoints have been encoded as multi-view depth map and video without being subjected to any processing.

If the value of the profile ID is "140", this means that the video and the depth map have been encoded using one of the above-described synthesis techniques (the technique A to the technique E). Note that if the value of the profile ID is "140", the technique depth type Hd representing the synthesis technique is further transmitted as another NALU.

On the other hand, if the value of the profile ID is not "118", "128", "138", "139", or "140" (if No in step S205), the decoding device 2 cannot decode information on how the non-reference viewpoint video and the depth map have been encoded, and thus stops the decoding processing. This can prevent an erroneous operation of the decoding device 2.

If the value of the NALU type is not "15" (if No in step S204), the parameter decoding unit 22: determines whether or not the value of the NALU type is "6" (step S207). If the value of the NALU type is "6" (if Yes in step S207), the parameter decoding unit 22: detects a payload type which is positioned after the NALU type; and determines whether or not a value of the detected payload type is "50" (step S208).

If the value of the payload type is "50" (if Yes in step S208), the parameter decoding unit 22 extracts the camera parameter Hc contained in the NALU (step S209). The parameter decoding unit 22 outputs the extracted camera parameter Hc to the multi-view video synthesis unit 25.

On the other hand, if the value of the payload type is not "50" (if No in step S208), the parameter decoding unit 22 determines whether or not the value of the payload type is "53" (step S210).

If the value of the payload type is "53" (if Yes in step S210), the parameter decoding unit 22 extracts the depth type Hd contained in the NALU (step S211). The parameter decoding unit 22 outputs the extracted depth type Hd to the multi-view video synthesis unit 25.

On the other hand, if the value of the payload type is not "53" (if No in step S210), the decoding device 2 determines whether or not the payload type is unknown to itself. If unknown, the decoding device 2 ignores the NALU.

If the value of the NALU type is not "6" (if No in step S207), the decoding device 2 continues the decoding processing unless the NALU type of interest is unknown to itself.

Note that in the above-described decoding device in accordance with the old standard which does not support the synthesis technique of synthesizing a video and a depth map, if the value of the profile ID is "118", "128", "138", or "139", the processing of decoding the non-reference viewpoint video and the depth map can be continued. If the value of the profile ID is "140", because a set of the encoding tools are unknown to the decoding device in accordance with the old standard, the decoding device is configured to withhold the processing of decoding the non-reference viewpoint video and the depth map. This can prevent an erroneous operation of the decoding device in accordance with the old standard and also maintain forward compatibility.

Even when the value of the profile ID is "140", if the value of the profile ID with respect to the reference viewpoint video is "100", the decoding device in accordance with the old standard can continue the processing of decoding the reference viewpoint video and can use the reference viewpoint video as a video having a single viewpoint, thus allowing the forward compatibility to be maintained.

In a case of a decoding device in accordance with a further older standard which does not support an encoding of a video having a plurality of viewpoints, if the profile ID is "118", "128", "138", "139", or "140", the decoding device does not perform a decoding processing because the decoding device regards information on a non-reference viewpoint video and a depth map as information unknown to itself, but continues only a processing of decoding the reference viewpoint video. This makes it possible to use the decoded reference viewpoint video as a single viewpoint video and to maintain the forward compatibility.

Referring back to FIG. 21, description of the operations of the decoding device 2 is continued.

(Video decoding processing)

The video decoding unit 23 of the decoding device 2 decodes the encoded synthesized video g separated in step S21 using a set of the decoding tools (which may also be referred to as a decoding method) indicated by the value of the profile ID detected in step S22; and thereby creates the decoded synthesized video G' (step S23).

At this time, the video decoding unit 23 decodes the encoded synthesized video g for each NALU. If a NALU herein has the value of the NALU type of "5" or "1", the video decoding unit 23: decodes the reference viewpoint video having been encoded using an encoding method indicated by the encoding management information Hk containing the profile ID (with the value of "100") extracted in step S203 (see FIG. 22); and thereby creates the reference viewpoint video C'.

If a NALU herein has the value of the NALU type of "20", the video decoding unit 23: decodes a video having been encoded with respect to the non-reference viewpoint, using an encoding method indicated by the encoding management information Hk containing the profile ID (having the value of "118", "128", "138", "139", or "140") extracted in step S206 (see FIG. 22); and thereby creates the left viewpoint video L', the left reduced residual video $X'_2$, or the like.

(Depth map decoding processing)

The depth map decoding unit 24 of the decoding device 2: decodes the encoded synthesized depth map gd separated in step S21, using a set of the encoding tools (an encoding method) indicated by the value of the profile ID detected in step S22; and thereby creates the decoded synthesized depth map G'd (step S24).

At this time, the depth map decoding unit 24 decodes the encoded synthesized depth map gd for each NALU. If a NALU herein has the value of the NALU type of "21", the depth map decoding unit 24: decodes the encoded synthesized depth map gd using a decoding method indicated by the encoding management information Hk containing the profile ID (with the value of "138", "139", or "140") extracted in step S206 (see FIG. 22); and thereby creates the decoded synthesized depth map G'd.

If a NALU herein has the value of the NALU type of "5", "1", or "20", the depth map decoding unit 24: decodes the encoded synthesized depth map gd using a decoding method indicated by the encoding management information Hk containing the profile ID (having the value of "118" or "128") extracted in step S206 (see FIG. 22); and thereby creates the decoded synthesized depth map G'd.

(Multi-view video synthesis processing)

The multi-view video synthesis unit 25 of the decoding device 2 synthesizes a multi-view video in accordance with the synthesis technique indicated by the depth type Hd extracted in step S211, using the camera parameter Hc extracted in step S209 (see FIG. 22), the synthesized video G' decoded in step S23, and the synthesized depth map G'd decoded in step S24 (step S25).

At this time, one of the multi-view video synthesis units 25A to 25E (each of which is specifically referred to as the collectively-referred multi-view video synthesis unit 25) corresponding to the synthesis technique (one of the technique A to the technique E) (see FIG. 18A to FIG. 18C) indicated by the depth type Hd synthesizes the multi-view videos P, Q, or the like.

As described above, the stereoscopic video transmission system S according to the first embodiment: multiplexes, into an encoded bit string, a depth type indicating the synthesis technique of a video and a depth map, in a form of a SEI message which is unit information (a NALU) different from a synthesized video and a synthesized depth map and is also auxiliary information for decoding and displaying; and transmits the depth type. This makes it possible for a decoding device 2 side to first decode the SEI message as the auxiliary information having a small amount of data and identify the depth type, and then, to appropriately decode the synthesized video and the synthesized depth map having a large amount of data.

In case that the decoding device in accordance with the old standard which does not support a multi-view video receives the encoded bit string as described above, the decoding device is configured to ignore information which the decoding device cannot recognize such as an encoded depth map and to take no response. This can prevent an erroneous operation of the decoding device.

The decoding device can also: perform an appropriate decoding within a correspondable range depending on the old standard with respect to, for example, the reference viewpoint video, and the reference viewpoint video plus a video at other viewpoint; or make use of the decoded video as a two-dimensional video or a multi-view video without projection to a free viewpoint. That is, forward compatibility can be maintained.

Regarding a non-reference viewpoint video and a depth map, the decoding device has identification information (NALU type =20, 21) for identifying being of type different from the reference viewpoint video, in place of the identification information (NALU type=5) for identifying being a reference viewpoint video. Regarding a depth type which is information indicating a synthesis technique, the encoding device encodes the depth type as auxiliary information different from video information. The encoding device then transmits the above-described information. That is, because a data structure of a NALU regarding a video and a depth map is the same as that of a conventional reference viewpoint video, the decoding device can perform decoding using the decoding tools which can decode the encoded bit string.


<Second Embodiment>

Next is described a configuration of a stereoscopic video transmission system including a stereoscopic video encoding device and a stereoscopic video decoding device according to a second embodiment.

The stereoscopic video transmission system including the stereoscopic video encoding device and the stereoscopic video decoding device according to the second embodiment encodes a depth type indicating a synthesis technique, as a parameter of auxiliary information for displaying a decoded video.

The auxiliary information corresponds to the MVC_VUI (Multiview Video Coding_Video Usability Information) in the MPEG-4 AVC encoding standard. In the encoding standard, the MVC_VUI is one of parameter groups which are encoded as S_SPS. The S_SPS is encoding management information on a non-reference viewpoint video. The MVC_VUI can contain a plurality of parameter groups.

Next is described a data structure of the MVC_VUI which is an encoded parameter containing depth type information with reference to FIG. 14E.

As illustrated in FIG. 14E, a data structure D24 of the encoded parameter has: the start code D100 at a head thereof; and, subsequently, a NALU type D241 having a value of "15" as identification information for identifying being the S_SPS. The data structure D24 further has a profile ID D242 which indicates a set of encoding tools used in encoding a non-reference viewpoint video. A value of "118", "128", "138", "139", or "140" is set at the profile ID D242. The data structure D24 further has a MVC_VUI flag D243 as identification information for identifying whether or not a parameter on the MVC_VUI is present. The MVC_VUI flag D243 takes a value of either "0" or "1 ". If the value is "0", no parameter on the MVC_VUI is present. After the MVC_VUI flag D243, the data structure 24 has a flag similar thereto indicating whether or not a next parameter group is present.

If the MVC_VUI flag D243 is "1", the data structure 24 has a parameter group of the MVC_VUI after the flag D243. FIG. 14E exemplifies a case in which the data structure D24 has, as the first parameter group, a depth type flag D244 as identification information indicating whether or not a depth type is present. The depth type flag D244 takes a value of either "0" or "1". If the depth type flag D244 is "0", no parameter on the depth type is present. After the depth type flag D244, the data structure 24 has a flag similar thereto in a next parameter group. In the configuration as described above, if there is a parameter of which transmission is not necessary, it is simply required to give a one-bit data "0" as a flag indicating that no parameter is present.

As in the case described above, if the depth type flag D244 is "1", the data structure 24 subsequently has a depth type value D245 as a parameter of the depth type. In this embodiment, any one of "0", "1", "2", "3", and "4" is set to the depth type value D245. As illustrated in FIG. 15, each of the values indicates a corresponding synthesis technique from among the technique A to the technique E.

In the case exemplified in FIG. 14E, only the depth type information D244, D245 is illustrated as the parameter groups on the MVC_VUI. The configuration is not, however, limited to the described above, and more parameter groups may be arranged in a prescribed order. In this case, in order to extract the depth type information D244, D245 from the MVC_VUI, all of the parameter groups arranged before the depth type information D244, D245, if any, are required to be decoded before the depth type information D244.

The data structure 24 further has, after the parameter group of the MVC_VUI, encoding management information D246 which is information on other non-reference viewpoint video in a NALU of the S_SPS. The encoding management information D246 is decoded sequentially after the parameter groups of the MVC_VUI.

In this embodiment, an order of arranging the parameter groups is predetermined. For example, when a depth type is transmitted in the form of a SEI message as an individual NALU in the first embodiment, it is not necessary to assign a unique value to identification information for identifying individual parameter groups (for example, a payload type). This is advantageous because a new parameter can be easily added.

Note that the second embodiment is similar to the first embodiment as described above, except how to encode a depth type is different. That is, how to encode a depth type in the parameter encoding unit 15 illustrated in FIG. 2 is different from how to extract a depth type in the parameter decoding unit 22 illustrated in FIG. 16. However, the other configurations in the second embodiment are similar to those in the first embodiment. Detailed description thereof is thus omitted.

[Operations of stereoscopic video encoding device]

Next are described operations of the encoding device 1 according to the second embodiment, with reference to FIG. 2, FIG. 19, and FIG. 20.

As illustrated in FIG. 19, the encoding device 1 according to the second embodiment performs step S11 to step S14, similarly to the encoding device 1 according to the first embodiment.

(Parameter encoding processing)

The parameter encoding unit 15 of the encoding device 1: encodes a parameter containing various types of the encoding management information Hk, the camera parameter Hc, and the depth type Hd, using a prescribed technique; and thereby creates the encoded parameter h (step S15).

At this time, the parameter encoding unit 15 of the encoding device 1, in step S104 illustrated in FIG. 20: encodes the parameter containing the depth type Hd; and thereby creates the NALU having the data structure D24 illustrated in FIG. 14E. In the created NALU, the depth type Hd is arranged in a prescribed order together with other parameter groups.

Note that the NALU containing the depth type Hd has a NALU type same as the NALU for transmitting the encoding management information Hk with respect to a non-reference viewpoint video. In the NALU type, a plurality of prescribed parameter groups can be contained in a single NALU. Thus, the NALU created in step S102 may contain the depth type Hd.

Regarding the other parameters, the same applies to those in the first embodiment. Description thereof is thus omitted herefrom.

(Multiplexing processing)

The multiplexing unit 16 of the encoding device 1, similarly to the first embodiment: multiplexes the encoded synthesized depth map gd created in step S12, the encoded synthesized video g created in step S14, and the encoded parameter h created in step S15, into the encoded bit string BS; and transmits the encoded bit string BS to the decoding device 2 (step S16).

[Operations of stereoscopic video decoding device]

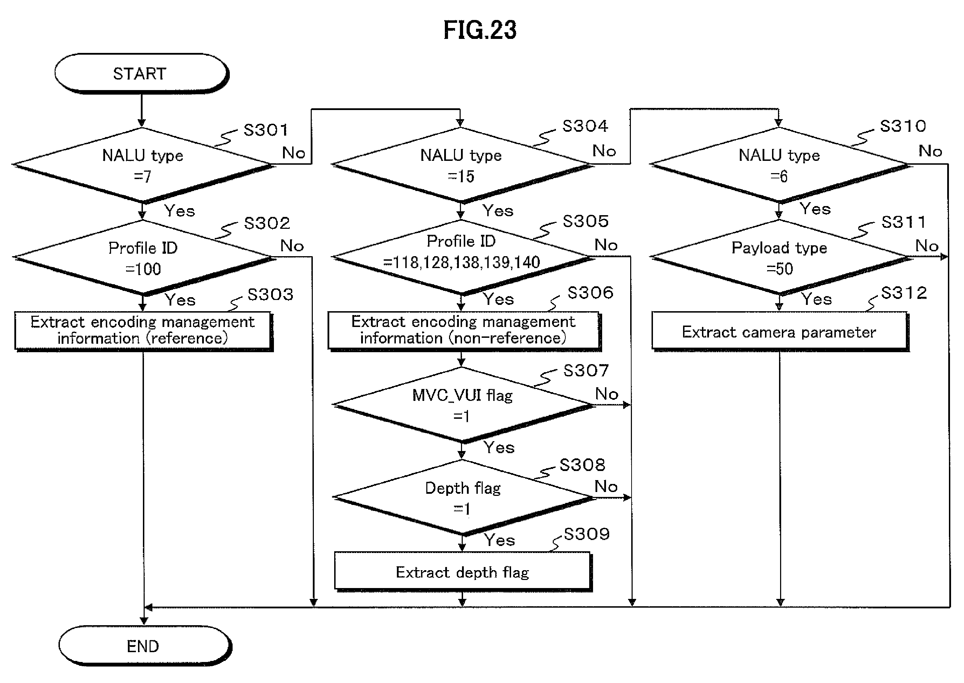

Next are described operations of the stereoscopic video decoding device 2 according to the second embodiment, with reference to FIG. 21 and FIG. 23 (as well as FIG. 1 and FIG. 16 where necessary). Description of processings performed with the operations similar to those in the first embodiment is omitted herefrom where appropriate.

(Separation processing)

As illustrated in FIG. 21, the separation unit 21 of the decoding device 2, similarly to the first embodiment: inputs therein the encoded bit string BS from the encoding device 1; separates the inputted encoded bit string BS for each NALU as a unit of information; and outputs the separated encoded bit strings BS to appropriate constituent units depending on the types of information contained in the respective NALUs (step S21).

(Parameter decoding processing)

The parameter decoding unit 22 of the decoding device 2: decodes the encoded parameter h separated in step S21; and outputs the decoded parameters to the appropriate constituent units depending on the types of information (step S22).

Note that step S23 to step S25 are similar to those in the first embodiment, description of which is thus omitted herefrom.

Next is described in detail the parameter decoding processing (step S22 of FIG. 21) with reference to FIG. 23.

As illustrated in FIG. 23, the parameter decoding unit 22: detects a NALU type of the NALU inputted as the encoded parameter h; and determines whether or not a value of the NALU type is "7" (step S301). If the value of the NALU type is "7" (if Yes in step S301), the parameter decoding unit 22: detects a profile ID which is positioned after the NALU type; and determines whether or not a value of the profile ID is "100" (step S302).

If the value of the profile ID is "100" (if Yes in step S302), this means that the encoded reference viewpoint video contained in a series of the encoded bit strings BS has been encoded using a set of prescribed encoding tools which is decodable by the video decoding unit 23 can decode the encoded reference viewpoint video. The parameter decoding unit 22 thus extracts another encoding management information Hk on the encoded reference viewpoint video contained in the NALU (step S303). The parameter decoding unit 22 outputs the extracted encoding management information Hk containing the profile ID to the video decoding unit 23 and the depth map decoding unit 24.

On the other hand, the value of the profile ID is not "100" but a value indicating a technique which is not decodable by the parameter decoding unit 22 itself (if No in step S302), the decoding device 2 cannot decode the encoded reference viewpoint video and thus stops the decoding processing. This can prevent an erroneous operation of the decoding device 2.

If the value of the NALU type is not "7" (if No in step S301), the parameter decoding unit 22 determines whether or not the value of the NALU type is "15" (step S304). If the value of the NALU type is "15" (if Yes in step S304), the parameter decoding unit 22: detects a profile ID which is positioned after the NALU type; and determines whether or not the value of the profile ID is "118", "128", "138", "139", or "140" (step S305).

If the value of the profile ID is "118", "128", "138", "139", or "140" (if Yes in step S305), this means that the encoded residual video, the encoded entire depth map, and the encoded residual depth map, which are information on a video (non-reference viewpoint video) other than the reference viewpoint video contained in a series of the encoded bit strings BS, have been encoded using a set of prescribed encoding tools which can decode the above-described encoded video and maps. The parameter decoding unit 22 thus extracts another encoding management information Hk on the non-reference viewpoint video contained in the NALU (step S306). The parameter decoding unit 22 outputs the extracted encoding management information Hk containing the profile ID to the video decoding unit 23 and the depth map decoding unit 24.

In this embodiment, the depth type Hd is transmitted by being contained in the NALU having the value of the NALU type of "15". Hence, the processing of extracting the depth type Hd is performed as a part of a series of processings of extracting the encoding management information Hk on a non-reference viewpoint video. Description herein is made assuming that, for convenience of explanations, a parameter group positioned before the MVC_VUI containing the depth type Hd is extracted, and the depth type Hd is then extracted from the MVC_VUI.

Note that, as in the data structure D24 illustrated in FIG. 14E, if other encoding management information with respect to a non-reference viewpoint video is put after the MVC_VUI, the parameter group of the MVC_VUI containing the depth type Hd is extracted first, and then, other encoding management information is extracted.

Following the extraction of the parameter group put before the MVC_VUI (step S306 described above), the parameter decoding unit 22 determines whether or not the value of the MVC_VUI flag is "1" (step S307). If the value of the MVC_VUI flag is "1" (if Yes in step S307), the parameter decoding unit 22: extracts a parameter group which is arranged in the MVC_VUI in a prescribed order; and determines whether or not a value of a depth type flag which is a flag with respect to the parameter group in which the depth type information is arranged is "1" (step S308). If the value of the depth type flag is "1" (if Yes in step S308), the parameter decoding unit 22 extracts a value of the depth type Hd put next to the depth type flag (step S309). The parameter decoding unit 22 outputs the extracted depth type Hd to the multi-view video synthesis unit 25.

On the other hand, if the value of the depth type flag is "0" (if No in step S308), because no depth type Hd is contained, the parameter decoding unit 22 terminates the processing with respect to the NALU.

It is assumed that, if no depth type Hd is inputted from the parameter decoding unit 22, the multi-view video synthesis unit 25 handles each of a synthesized depth map and a synthesized video in such a manner that "without processing" is selected as a synthesis technique thereof.

If the value of the depth type flag is "0", the parameter decoding unit 22: outputs information indicating that the value of the depth type flag is "0" to the multi-view video synthesis unit 25; and thereby explicitly shows that "no processing" is being selected as a synthesis technique of a video and a depth map of interest.

If the value of the MVC_VUI flag is "0" (if No in step S307), because no parameter group of the MVC_VUI is present in the NALU, the parameter decoding unit 22 terminates the processing with respect to the NALU.

On the other hand, the value of the profile ID is not "118", "128", "138", "139", or "140" (if No in step S305), the decoding device 2 stops the decoding processing, because the decoding device 2 cannot decode information on encoding of a depth map and a non-reference viewpoint video of interest. This can prevent an erroneous operation of the decoding device 2.

If the value of the NALU type is not "15" (if No in step S304), the parameter decoding unit 22 determines whether or not the value of the NALU type is "6" (step S310). If the value of the NALU type is "6" (if Yes in step S310), the parameter decoding unit 22: detects a payload type positioned after the NALU type; and determines whether or not the value of the payload type is "50" (step S311).

If the value of the payload type is "50" (if Yes in step S311), the parameter decoding unit 22 extracts the camera parameter Hc contained in the NALU (step S312). The parameter decoding unit 22 outputs the extracted camera parameter Hc to the multi-view video synthesis unit 25.

On the other hand, if the value of the payload type is not "50" but an unknown value (if No in step S311), the decoding device 2 ignores the payload type, because it is unknown to the decoding device 2 itself.

If the value of the NALU type is not "6" (if No in step S310), the decoding device 2 continues the decoding unless the NALU type is unknown to the decoding device 2 itself.

To simplify explanations, a case exemplified in FIG. 23 is described in such a manner that only a parameter directly required for the present invention is extracted. It is assumed, however, that other parameter or parameters are also extracted appropriately in accordance with prescribed standards and based on the NALU type or the payload type.

In the present invention, a stereoscopic video with naked eye vision which requires a large number of viewpoint videos can be efficiently compression-encoded and are transmitted as a small number of viewpoint videos and depth maps corresponding thereto. Also, the obtained high-efficiency and high-quality stereoscopic video can be provided at low cost. Thus, a device or a service which stores and transmits stereoscopic video using the present invention can easily store and transmit data and provide a high-quality stereoscopic video, even if the stereoscopic video is a naked-eye stereoscopic video requiring a large number of viewpoint videos

The present invention can be effectively and widely used for stereoscopic televisions, video recorders, movies, educational and display equipments, Internet services, and the like. The present invention can also be effectively used for free viewpoint televisions and movies which allow viewers to freely change their viewpoint positions.

A multi-view video created by the stereoscopic video encoding device of the present invention can be used as a single viewpoint video, even if used in a conventional decoding device which cannot decode a multi-view video.

DESCRIPTION OF REFERENCE CHARACTERS

| | |
|---|---|
| 1 | stereoscopic video encoding device |
| 11 | video synthesis unit |
| 11A | video synthesis unit |
| 11B | video synthesis unit |
| 11C | video synthesis unit |
| 12 | video encoding unit |
| 13 | depth map synthesis unit |
| 13A | depth map synthesis unit |
| 13B | depth map synthesis unit |
| 13C | depth map synthesis unit |
| 13D | depth map synthesis unit |
| 13E | depth map synthesis unit |
| 14 | depth map encoding unit |
| 15 | parameter encoding unit |
| 16 | multiplexing unit |
| 2 | stereoscopic video decoding device |
| 21 | separation unit |
| 22 | parameter decoding unit |
| 23 | video decoding unit |
| 24 | depth map decoding unit |
| 25 | multi-view video synthesis unit |
| 25A | multi-view video synthesis unit |
| 25B | multi-view video synthesis unit |
| 25C | multi-view video synthesis unit |
| 25D | multi-view video synthesis unit |
| 25E | multi-view video synthesis unit |
| D100 | start code |
| D101 | NALU type (first identification information) |

D111 NALU type (first identification information)
D121 NALU type (second identification information)
D131 NALU type (second identification information)
D211 NALU type (eighth identification information)
D212 profile ID (fifth identification information)
D231 NALU type (fourth identification information, sixth identification information)
D232 payload type (fourth identification information, seventh identification information)
D233 depth type (third identification information)
D241 NALU type (fourth identification information, eighth identification information)
D242 profile ID (fifth identification information)
D243 MVC_VUI flag (fourth identification information)
D244 depth type flag (fourth identification information)
D245 depth type (third identification information)

**Claims**

1. A stereoscopic video encoding device which: encodes a synthesized video and a synthesized depth map, the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques; adds, to the encoded synthesized video and the encoded synthesized depth map, for each prescribed unit, identification information for identifying a type of information of the prescribed unit; and thereby creates a series of encoded bit strings, the stereoscopic video encoding device, comprising:

   a video synthesis unit that synthesizes the multi-view video using one of a plurality of types of the prescribed video synthesis techniques, and thereby creates the synthesized video as a target for encoding;
   a video encoding unit that encodes the synthesized video, adds thereto first identification information for identifying being the synthesized video having been subjected to the encoding, and thereby creates an encoded synthesized video;
   a depth map synthesis unit that synthesizes a plurality of depth maps associated with the multi-view video, using one of a plurality of types of the prescribed depth map synthesis techniques, and thereby creates the synthesized depth map as a target for the encoding;
   a depth map encoding unit that encodes the synthesized depth map, adds thereto second identification information for identifying being the synthesized depth map having been subjected to the encoding, and thereby creates an encoded synthesized depth map;
   a parameter encoding unit that encodes third identification information for identifying the video synthesis technique used for synthesizing the synthesized video and the depth map synthesis technique used for synthesizing the synthesized depth map, as a parameter of auxiliary information used for decoding an encoded video or displaying a decoded video, adds thereto fourth identification information for identifying being the auxiliary information having been subjected to the encoding, and thereby creates an encoded parameter; and
   a multiplexing unit that multiplexes the encoded synthesized video, the encoded synthesized depth map, and the encoded parameter, and thereby creates a series of the encoded bit strings.

2. The stereoscopic video encoding device according to claim 1,
   wherein the video encoding unit: encodes a reference viewpoint video which is a video at a reference viewpoint, the reference viewpoint being set as a viewpoint determined as a reference, from among a plurality of the different viewpoints, and a non-reference viewpoint video which is a video at a viewpoint other than the reference viewpoint, as the respective prescribed units different from each other; and adds, as the first identification information, respective unique values different from each other, to the prescribed unit of the reference viewpoint video and the prescribed unit of the non-reference viewpoint video.

3. The stereoscopic video encoding device according to claims 1 or 2,
   wherein the parameter encoding unit encodes fifth identification information for identifying a set of encoding tools used for encoding the synthesized depth map and the synthesized video, as another parameter of the auxiliary information.

**4.** The stereoscopic video encoding device according to claims 1 or 2,
wherein the third identification information is encoded as auxiliary information of type 1 which is information containing only one type of information and additional information associated with the one type of information, in the prescribed unit, and
wherein the fourth identification information is encoded with added thereto sixth identification information for identifying being the auxiliary information of type 1 and seventh identification information for identifying the third identification information being contained.

**5.** The stereoscopic video encoding device according to claim 3,
wherein the third identification information is encoded as auxiliary information of type 1 which is information containing only one type of information and additional information associated with the one type of information, in the prescribed unit,
wherein the fourth identification information is encoded with added thereto sixth identification information for identifying being the auxiliary information of type 1 and seventh identification information for identifying the third identification information being contained, and
wherein, when the fifth identification information is encoded, the fifth identification information: is contained in auxiliary information of type 2 which is information containing a plurality of types of information in the prescribed unit; and is added with eighth identification information for identifying being the auxiliary information of type 2.

**6.** A stereoscopic video decoding device which synthesizes a multi-view video using a decoded synthesized video, a decoded synthesized depth map, and auxiliary information which are obtained by: decoding an encoded bit string in which a synthesized video, a synthesized depth map, and the auxiliary information are encoded; adding, to the encoded information, for each prescribed unit, identification information for identifying a type of information of the prescribed unit; and multiplexing the encoded and added information,
the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques, and the auxiliary information containing information for identifying the video synthesis technique used for synthesizing the synthesized video and the depth map synthesis technique used for synthesizing the synthesized depth map,
in the encoded bit string, being multiplexed, for the each prescribed unit: an encoded synthesized video which is created by adding, to the synthesized video having been encoded, first identification information for identifying being the having-been-encoded synthesized video; an encoded synthesized depth map which is created by adding, to the synthesized depth map having been encoded, second identification information for identifying being the having-been-encoded synthesized depth map; and an encoded parameter in which third identification information is encoded as a parameter of auxiliary information used for decoding an encoded video or displaying a decoded video, the third identification information being information for identifying the video synthesis technique used for synthesizing the synthesized video and also for identifying the depth map synthesis technique used for synthesizing the synthesized depth map, and fourth identification information for identifying being the auxiliary information having been encoded is added to the encoded parameter, the stereoscopic video decoding device, comprising:

a separation unit that separates, for the each prescribed unit, a unit having the first identification information as the encoded synthesized video, a unit having the second identification information as the encoded synthesized depth map, and a unit having the fourth identification information as the encoded parameter;
a parameter decoding unit that decodes the third identification information from the encoded parameter;
a video decoding unit that decodes the encoded synthesized video and thereby creates the decoded synthesized video;
a depth map decoding unit that decodes the encoded synthesized depth map and thereby creates the decoded synthesized depth map; and
a multi-view video synthesis unit that synthesizes a video at a plurality of viewpoints in accordance with the third identification information created by the parameter decoding unit, using the decoded synthesized video and the decoded synthesized depth map.

**7.** The stereoscopic video decoding device according to claim 6,
wherein, in the encoded synthesized video: a reference viewpoint video which is a video viewed from a viewpoint specified as a reference viewpoint from among a plurality of the different viewpoints, and a non-reference viewpoint video which is a video at a viewpoint other than the reference viewpoint are encoded as the prescribed units different from each other; and the prescribed unit of the reference viewpoint video and the prescribed unit of the non-reference viewpoint video have respective unique values different from each other, as the first identification information.

8. The stereoscopic video decoding device according to claims 6 or 7,
wherein, in the encoded parameter, fifth identification information for identifying a set of encoding tools used for encoding the synthesized video and the synthesized depth map is encoded as another parameter of the auxiliary information,
wherein the parameter decoding unit further decodes the fifth identification information from the encoded parameter, and
wherein, if the fifth identification information decoded by the parameter decoding unit indicates that the synthesized video has been encoded by a set of encoding tools which are decodable by the decoding unit, the video decoding unit decodes the encoded synthesized video, and, on the other hand, if the fifth identification information does not indicate that the synthesized video has been encoded by a set of encoding tools which are decodable by the decoding unit, the video decoding unit does not decode the encoded synthesized video.

9. The stereoscopic video decoding device according to claims 6 or 7,
wherein the third identification information is encoded as the auxiliary information of type 1 which is information containing only one type of information and additional information associated with the one type of information, in the prescribed unit,
wherein the fourth identification information is encoded with added thereto, sixth identification information for identifying being the auxiliary information of type 1 and seventh identification information for identifying the third identification information being contained,
wherein, if the prescribed unit has the sixth identification information, the separation unit separates the prescribed unit as the encoded parameter, and
wherein, if the encoded parameter having the sixth identification information has the seventh identification information, the parameter decoding unit decodes the third identification information from the encoded parameter.

10. The stereoscopic video decoding device according to claim 8,
wherein the third identification information is encoded as the auxiliary information of type 1 which is information containing only one type of information and additional information associated with the one type of information, in the prescribed unit,
wherein the fourth identification information is encoded with added thereto, sixth identification information for identifying being the auxiliary information of type 1 and seventh identification information for identifying the third identification information being contained,
wherein the fifth identification information: is encoded as auxiliary information of type 2 which is information containing a plurality of prescribed types of information in the prescribed unit; and is also encoded with added thereto eighth identification information for identifying being the auxiliary information of type 2,
wherein, if the prescribed unit has the sixth identification information or the eighth identification information, the separation unit separates the prescribed unit as the encoded parameter, and
wherein, if the encoded parameter having the sixth identification information has the seventh identification information, the parameter decoding unit: decodes the third identification information from the encoded parameter; and also decodes fifth identification information from the encoded parameter having the eighth identification information.

11. A stereoscopic video encoding method which: encodes a synthesized video and a synthesized depth map, the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques; adds, to the encoded synthesized video and the encoded synthesized depth map, for each prescribed unit, identification information for identifying a type of information of the prescribed unit; and thereby creates a series of encoded bit strings, the stereoscopic video encoding method, comprising:

a video synthesis processing step of synthesizing the multi-view video using one of a plurality of types of the prescribed video synthesis techniques, and thereby creating the synthesized video as a target for encoding;
a video encoding processing step of encoding the synthesized video, adding thereto first identification information for identifying being the synthesized video having been subjected to the encoding, and thereby creating an encoded synthesized video;

a depth map synthesis processing step of synthesizing a plurality of depth maps associated with the multi-view video, using one of a plurality of types of the prescribed depth map synthesis techniques, and thereby creating the synthesized depth map as a target for the encoding;

a depth map encoding processing step of encoding the synthesized depth map, adding thereto second identification information for identifying being the synthesized depth map having been subjected to the encoding, and thereby creating an encoded synthesized depth map;

a parameter encoding processing step of encoding third identification information for identifying the video synthesis technique used for synthesizing the synthesized video and the depth map synthesis technique used for synthesizing the synthesized depth map, as a parameter of auxiliary information used for decoding an encoded video or displaying a decoded video, adds thereto fourth identification information for identifying being the auxiliary information having been subjected to the encoding, and thereby creating an encoded parameter; and

a multiplexing processing step of multiplexing the encoded synthesized video, the encoded synthesized depth map, and the encoded parameter, and thereby creating a series of the encoded bit strings.

12. A stereoscopic video decoding method which synthesizes a multi-view video using a decoded synthesized video, a decoded synthesized depth map, and auxiliary information which are obtained by: decoding an encoded bit string in which a synthesized video, a synthesized depth map, and the auxiliary information are encoded; adding, to the encoded bit string, for each prescribed unit, identification information for identifying a type of information of the prescribed unit; and multiplexing the encoded and added information,

the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques, and the auxiliary information containing information for identifying the video synthesis technique used for synthesizing the synthesized video and the depth map synthesis technique used for synthesizing the synthesized depth map,

in the encoded bit string, being multiplexed, for the each prescribed unit: an encoded synthesized video which is created by adding, to the synthesized video having been encoded, first identification information for identifying being the having-been-encoded synthesized video; an encoded synthesized depth map which is created by adding, to the synthesized depth map having been encoded, second identification information for identifying being the having-been-encoded synthesized depth map; and an encoded parameter in which third identification information is encoded as a parameter of auxiliary information used for decoding an encoded video or displaying a decoded video, the third identification information being information for identifying the video synthesis technique used for synthesizing the synthesized video and also for identifying the depth map synthesis technique used for synthesizing the synthesized depth map, and fourth identification information for identifying being the auxiliary information having been encoded being added to the encoded parameter, the stereoscopic video decoding method, comprising:

a separation processing step of separating, for the each prescribed unit, a unit having the first identification information as the encoded synthesized video, a unit having the second identification information as the encoded synthesized depth map, and a unit having the fourth identification information as the encoded parameter;

a parameter decoding processing step of decoding the third identification information from the encoded parameter;

a video decoding processing step of decoding the encoded synthesized video and thereby creating the decoded synthesized video;

a depth map decoding processing step of decoding the encoded synthesized depth map and thereby creating the decoded synthesized depth map; and

a multi-view video synthesis processing step of synthesizing a video at a plurality of viewpoints in accordance with the third identification information created by the parameter decoding unit, using the decoded synthesized video and the decoded synthesized depth map.

13. A stereoscopic video encoding program for causing a computer serving as, so as to: encode a synthesized video and a synthesized depth map; add, to the encoded synthesized video and the encoded synthesized depth map, for each prescribed unit, identification information for identifying a type of information of the prescribed unit; and thereby create a series of encoded bit strings, the synthesized video being created by synthesizing a multi-view video which is a set of videos made up of single video viewed from a plurality of different viewpoints, using any one of a plurality of types of prescribed video synthesis techniques, and the synthesized depth map being corresponding to the multi-view video and being created by synthesizing a depth map which is a map of information on a depth value of the multi-view video for each pixel, and the depth value being a parallax between the different viewpoints of the multi-view video, using any one of a plurality of types of prescribed depth map synthesis techniques:

a video synthesis unit that synthesizes the multi-view video using one of a plurality of types of the prescribed video synthesis techniques, and thereby creates the synthesized video as a target for encoding;
a video encoding unit that encodes the synthesized video, adds thereto first identification information for identifying being the synthesized video having been subjected to the encoding, and thereby creates an encoded synthesized video;
a depth map synthesis unit that synthesizes a plurality of depth maps associated with the multi-view video, using one of a plurality of types of the prescribed depth map synthesis techniques, and thereby creates the synthesized depth map as a target for the encoding;
a depth map encoding unit that encodes the synthesized depth map, adds thereto second identification information for identifying being the synthesized depth map having been subjected to the encoding, and thereby creates an encoded synthesized depth map;
a parameter encoding unit that encodes third identification information for identifying the video synthesis technique used for synthesizing the synthesized video and the depth map synthesis technique used for synthesizing the synthesized depth map, as a parameter of auxiliary information used for decoding an encoded video or displaying a decoded video, adds thereto fourth identification information for identifying being the auxiliary information having been subjected to the encoding, and thereby creates an encoded parameter; and
a multiplexing unit that multiplexes the encoded synthesized video, the encoded synthesized depth map, and the encoded parameter, and thereby creates a series of the encoded bit strings.

14. A stereoscopic video decoding program for causing a computer serving as, so as to synthesize a multi-view video using a decoded synthesized video, a decoded synthesized depth map, and auxiliary information which are obtained by decoding an encoded bit string, the encoded bit string obtained by: encoding a synthesized video, a synthesized depth map, and the auxiliary information; adding, to the encoded information, for each prescribed unit, identification information for identifying a type of information of the prescribed unit; and multiplexing the encoded and added information,

the synthesized video being created by synthesizing a multi-view video which is a set of videos made up of single video viewed from a plurality of different viewpoints, using one of a plurality of types of prescribed video synthesis techniques, the synthesized depth map being associated with the multi-view video and being created by synthesizing a depth map which is a map of information on a depth value of the multi-view video for each pixel, the depth value being a parallax between the different viewpoints of the multi-view video, using one of a plurality of types of prescribed depth map synthesis techniques, and the auxiliary information containing information for identifying the video synthesis technique used for synthesizing the synthesized video and the depth map synthesis technique used for synthesizing the synthesized depth map,

in the encoded bit string, being multiplexed, for the each prescribed unit: an encoded synthesized video which is created by adding, to the synthesized video having been encoded, first identification information for identifying being the having-been-encoded synthesized video; an encoded synthesized depth map which is created by adding, to the synthesized depth map having been encoded, second identification information for identifying being the having-been-encoded synthesized depth map; and an encoded parameter in which third identification information is encoded as a parameter of auxiliary information used for decoding an encoded video or displaying a decoded video, the third identification information being information for identifying the video synthesis technique used for synthesizing the synthesized video and also for identifying the depth map synthesis technique used for synthesizing the synthesized depth map, and fourth identification information for identifying being the auxiliary information having been encoded being added to the encoded parameter:

a separation unit that separates, for the each prescribed unit, a unit having the first identification information as the encoded synthesized video, a unit having the second identification information as the encoded synthesized depth map, and a unit having the fourth identification information as the encoded parameter;
a parameter decoding unit that decodes the third identification information from the encoded parameter;
a video decoding unit that decodes the encoded synthesized video and thereby creates the decoded synthesized video;
a depth map decoding unit that decodes the encoded synthesized depth map and thereby creates the decoded synthesized depth map; and
a multi-view video synthesis unit that synthesizes a video at a plurality of viewpoints in accordance with the third identification information created by the parameter decoding unit, using the decoded synthesized video and the decoded synthesized depth map.

# FIG.1

# FIG.2

**Stereoscopic video encoding device** — 1

Encoding management information Hk

Camera parameter Hc

Depth type Hd

Multi-view videos C, L, R

Depth maps Cd, Ld, Rd

Parameter encoding unit — 15

Multiplexing unit — 16

Video synthesis unit — 11

Video encoding unit — 12

Depth map synthesis unit — 13

Depth map encoding unit — 14

h

BS → Encoded bit string

G

g

G'd

Gd

gd

EP 2 942 953 A1

## FIG.3Aa Technique A

13A

Cd → Projection unit → $Z^Cd$ → Synthesis unit → Zd → Reduction unit → $Z_2d$ } Gd

131a

Ld → Projection unit → $Z^Ld$

131b

131c

131d

## FIG.3Ab Technique B

13B

Cd →

Ld →

Projection unit → $C^Ld$ → Synthesis unit → Zd → Reduction unit → $Z_2d$

132a

132c

132e

Occlusion hole detection unit → Lh

132b

132d

Residual segmentation unit → Xd → Reduction unit → $X_2d$

132f

} Gd

## FIG.3Ac Technique C

13C

Rd → Projection unit → $C^Rd$

133a

Cd →

133b

Ld → Projection unit → $C^Ld$

Synthesis unit → Zd → Reduction unit → $Z_2d$ } Gd

133c

133d

**FIG.3Ba** Technique D

**FIG.3Bb** Technique E

# FIG.4

| Left viewpoint (View ID=1) (Non-reference viewpoint) | Left intermediate viewpoint | Middle viewpoint (View ID=0) (Reference viewpoint) | Right viewpoint (View ID=2) (Non-reference viewpoint) |
|---|---|---|---|
| (Original data) Multi-view video | | L | C | R |
| Depth map | | Ld | Cd | Rd |
| (Technique A: two-viewpoint type 1) | | Entire depth map — Zd | |
| (Technique B: two-viewpoint type 2) | Left residual depth map — Xd | Entire depth map — Zd | |
| (Technique C: three-viewpoint type 1) | | Entire depth map — Zd | |
| (Technique D: three-viewpoint type 2) | Left residual depth map — Xd | Entire depth map — Zd | Right residual depth map — Yd |
| (Technique E: type 3) | Left warp data — Lw | Middle warp data — Cw | |

# FIG.5A

Entire depth map

$Z_2d$ Entire depth map

original size

# FIG.5B

Residual depth map

$X_2d$
$Y_2d$ } $XY_2d$

original size

# FIG.5C

Warp data

$L_2w$
$C_2w$ } $CL_2w$

original size

# FIG.6

Left viewpoint    Left specified    Left intermediate          Reference
video          viewpoint        viewpoint          viewpoint video
          depth map     depth map

L          Pd          Md        C

Left specified viewpoint

Left viewpoint        Left intermediate viewpoint        Reference viewpoint

## FIG.7A Technique A and Technique B

## FIG.7B Technique C and Technique D

## FIG.7C Technique E

# FIG.8

# FIG.9A

Reduced residual video 1

$X_2$

original size

# FIG.9B

Reduced residual video 2

$X_2$
$Y_2$
$\left.\begin{matrix}\\\\\end{matrix}\right\} XY_2$

original size

# FIG.10

Reference
viewpoint video

Left viewpoint
video

Left viewpoint
projected video
$L^C$

Hole mask
$Lh$

Left residual
video

Occlusion hole
detection unit

$OH$

Residual
segmentation
unit

$X$

$111c$

$111d$

$11$

$L^Cd$

Left viewpoint
depth map

$C$

$L$

# FIG.11

Object          Object
(background)  (foreground)

$L^c d$

Pixel of interest          Right neighboring pixel

↓

$Lh$

Hole mask

# FIG.12A

Left synthesized
depth map $\quad$ Md

Framed reduced
synthesized
depth map

Right synthesized
depth map

Nd

Left reduced
synthesized
depth map

$M_2d$

$MN_2d$

Right reduced
synthesized
depth map

$N_2d$

$\longrightarrow$ Gd

# FIG.12B

Reference
viewpoint video

C

C $\longrightarrow$ C

$\longrightarrow XY_2$ $\Big\}$ G

$X_2$

Left reduced
residual video

$XY_2$

$Y_2$

Right reduced
residual video

Framed reduced
residual video

Left residual
video

X

Right residual
video Y

Y

## FIG.13A

Encoded reference viewpoint video   D10

| Start code = 001 | D100 |
| NALU type = 5, 1 | D101 |
| Encoded reference viewpoint video or encoded middle viewpoint video | D102 |

## FIG.13B

Encoded residual video   D11

| Start code = 001 | D100 |
| NALU type = 20 | D111 |
| SVC extension flag = 0 | D112 |
| View ID = 1, 2 | D113 |
| Encoded residual video or encoded non-reference viewpoint video | D114 |

## FIG.13C

Encoded entire depth map   D12

| Start code = 001 | D100 |
| NALU type = 21 | D121 |
| SVC extension flag = 0 | D122 |
| View ID = 0 | D123 |
| Encoded entire depth map or encoded middle warp data | D124 |

## FIG.13D

Encoded residual depth map   D13

| Start code = 001 | D100 |
| NALU type = 21 | D131 |
| SVC extension flag = 0 | D132 |
| View ID = 1, 2 | D133 |
| Encoded residual depth map or encoded left warp data | D134 |

## FIG.13E

Encoded entire depth map   D14

| Start code = 001 | D100 |
| NALU type = 0 | D141 |
| NALU type = 5, 1 | D101 |
| Encoded entire depth map or encoded middle warp data | D102 |

## FIG.13F

Encoded residual depth map   D15

| Start code = 001 | D100 |
| NALU type = 0 | D151 |
| NALU type = 20 | D111 |
| SVC extension flag = 0 | D112 |
| View ID = 1, 2 | D113 |
| Encoded residual depth map or encoded left warp data | D114 |

## FIG.14A

Encoding management information $\quad\overset{\text{D20}}{\curvearrowright}$

| | |
|---|---|
| Start code = 001 | ~ D100 |
| NALU type = 7 | ~ D201 |
| Profile ID = 100 | ~ D202 |
| Encoding management information on reference viewpoint video or middle viewpoint video | ~ D203 |

## FIG.14B

Encoding management information $\quad\overset{\text{D21}}{\curvearrowright}$

| | |
|---|---|
| Start code = 001 | ~ D100 |
| NALU type = 15 | ~ D211 |
| Profile ID = 118, 128, 138, 139, 140 | ~ D212 |
| Encoding management information on non-reference viewpoint video | ~ D213 |

## FIG.14C

Camera parameter $\quad\overset{\text{D22}}{\curvearrowright}$

| | |
|---|---|
| Start code = 001 | ~ D100 |
| NALU type = 6 | ~ D221 |
| Payload type = 50 | ~ D222 |
| Camera parameter | ~ D223 |

## FIG.14D

Depth type (SEI message) $\quad\overset{\text{D23}}{\curvearrowright}$

| | |
|---|---|
| Start code = 001 | ~ D100 |
| NALU type = 6 | ~ D231 |
| Payload type = 53 | ~ D232 |
| Depth type = (0, 1, 2, 3, 4) | ~ D233 |

## FIG.14E

Depth type (MVC_VUI) $\quad\overset{\text{D24}}{\curvearrowright}$

| | |
|---|---|
| Start code = 001 | ~ D100 |
| NALU type = 15 | ~ D241 |
| Profile ID = 118, 128, 138, 139, 140 | ~ D242 |
| MVC_VUI flag = (0,1) | ~ D243 |
| if (MVC_VUI flag = 1) { | |
| Depth type flag = (0,1) | ~ D244 |
| if (Depth type flag = 1) | |
| Depth type = (0, 1, 2, 3, 4) | ~ D245 |
| } | |
| Encoding management information on non-reference viewpoint video | ~ D246 |

59

# FIG.15

| Value of Depth Type | Descriptions |
|---|---|
| 0 | Technique A: two-viewpoint type 1 |
| 1 | Technique B: two-viewpoint type 2 |
| 2 | Technique C: three-viewpoint type 1 |
| 3 | Technique D: three-viewpoint type 2 |
| 4 | Technique E: type 3 |
| 5, 6 | Undefined |
| 7 | Extension code for adding any other depth type |

# FIG.16

EP 2 942 953 A1

# FIG.17

Reference
viewpoint video

Left residual
video

Left specified
viewpoint
video

Hole mask

Projection unit 251e

Projection unit 251d

Synthesis unit 251f

Left specified
viewpoint video

25

Left specified
viewpoint depth
map

**FIG.18Aa** Technique A

**FIG.18Ab** Technique B

# FIG.18B (Technique C)

# FIG.18Ca (Technique D)

# FIG.18Cb (TechniqueE)

# FIG.19

```
                    ┌─────────────┐
                    │    START    │
                    └──────┬──────┘
                           │
                           ▼
        ┌──────────────────────────────────┐  S11
        │  Depth map synthesis processing   │
        └──────────────────┬───────────────┘
                           │
                           ▼
        ┌──────────────────────────────────┐  S12
        │   Depth map encoding processing   │
        └──────────────────┬───────────────┘
                           │
                           ▼
        ┌──────────────────────────────────┐  S13
        │     Video synthesis processing    │
        └──────────────────┬───────────────┘
                           │
                           ▼
        ┌──────────────────────────────────┐  S14
        │     Video encoding processing     │
        └──────────────────┬───────────────┘
                           │
                           ▼
        ┌──────────────────────────────────┐  S15
        │       Parameter encoding          │
        │          processing               │
        └──────────────────┬───────────────┘
                           │
                           ▼
        ┌──────────────────────────────────┐  S16
        │      Multiplexing processing      │
        └──────────────────┬───────────────┘
                           │
                           ▼
                    ┌─────────────┐
                    │     END     │
                    └─────────────┘
```

# FIG.20

```
                    ┌─────────────────┐
                    │      START      │
                    └─────────────────┘
                             │
                             ▼
        ┌──────────────────────────────────┐
        │ Encoding of encoding management  │ ⟩ S101
        │ information (reference viewpoint)│
        └──────────────────────────────────┘
                             │
                             ▼
        ┌──────────────────────────────────┐
        │ Encoding of encoding management  │ ⟩ S102
        │ information (non-reference viewpoint)│
        └──────────────────────────────────┘
                             │
                             ▼
        ┌──────────────────────────────────┐
        │   Encoding of camera parameter   │ ⟩ S103
        └──────────────────────────────────┘
                             │
                             ▼
        ┌──────────────────────────────────┐
        │      Encoding of depth type      │ ⟩ S104
        └──────────────────────────────────┘
                             │
                             ▼
                    ┌─────────────────┐
                    │       END       │
                    └─────────────────┘
```

# FIG.21

```
           START
             │
             ▼
┌─────────────────────────┐   S21
│  Separation processing  │
└─────────────────────────┘
             │
             ▼
┌─────────────────────────┐   S22
│   Parameter decoding    │
│       processing        │
└─────────────────────────┘
             │
             ▼
┌─────────────────────────┐   S23
│ Video decoding processing│
└─────────────────────────┘
             │
             ▼
┌─────────────────────────┐   S24
│ Depth map decoding processing │
└─────────────────────────┘
             │
             ▼
┌─────────────────────────┐   S25
│   Multi viewpoint video │
│   synthesis processing  │
└─────────────────────────┘
             │
             ▼
           END
```

# FIG.22

START

S201 — NALU type =7 — No
Yes
S202 — Profile ID =100 — No
Yes
S203 — Extract encoding management information (reference)

S204 — NALU type =15 — No
Yes
S205 — Profile ID =118,128,138,139,140 — No
Yes
S206 — Extract encoding management information (non-reference)

S207 — NALU type =6 — No
Yes
S208 — Payload type =50 — No
Yes
S209 — Extract camera parameter

S210 — Payload type =53 — No
Yes
S211 — Extract depth type

END

EP 2 942 953 A1

# FIG.23

START

S301 — NALU type =7 — No
Yes

S302 — Profile ID =100 — No
Yes

S303 — Extract encoding management information (reference)

S304 — NALU type =15 — No
Yes

S305 — Profile ID =118,128,138,139,140 — No
Yes

S306 — Extract encoding management information (non-reference)

S307 — MVC_VUI flag =1 — No
Yes

S308 — Depth flag =1 — No
Yes

S309 — Extract depth flag

S310 — NALU type =6 — No
Yes

S311 — Payload type =50 — No
Yes

S312 — Extract camera parameter

END

EP 2 942 953 A1

# FIG.24

Encoding management information → **101** Encoding management part → **110** Parameter information encoding part

Camera parameter characteristics →

**109** Unitization part → Encoded bit string

Image signal → Image signal encoding part **107**

Depth signal → Depth signal encoding part **108**

## INTERNATIONAL SEARCH REPORT

| International application No. |
| --- |
| PCT/JP2013/078095 |

A. CLASSIFICATION OF SUBJECT MATTER
*H04N19/00*(2014.01)i, *H04N13/00*(2006.01)i

According to International Patent Classification (IPC) or to both national classification and IPC

B. FIELDS SEARCHED

Minimum documentation searched (classification system followed by classification symbols)
H04N19/00, H04N13/00-15/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | Takanori Senoh(et al.), "Proposal on Simple Test Model for 3DV Coding based on CE7", Joint Collaborative Team on 3D Video Coding Extension Development of ITU-T SG 16 WP 3 and ISO/IEC JTC 1/SC 29/WG 11 JCT2-A0072, ITU-T, 2012.07.10, p.1-9 | 1-14 |
| A | Takanori Senoh(et al.), "AHG8: Proposed Draft Amendment on Signaling of Alternative 3D Format in ISO/IEC 14496-10 (ITU-T H.264)", Joint Collaborative Team on 3D Video Coding Extension Development of ITU-T SG 16 WP 3 and ISO/IEC JTC 1/SC 29/WG 11 JCT3V-B0059r1, ITU-T, 2012.10.12, p.1-15 | 1-14 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 January, 2014 (08.01.14) | 21 January, 2014 (21.01.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**EP 2 942 953 A1**

<table>
<tr><td colspan="3" align="center">INTERNATIONAL SEARCH REPORT</td><td>International application No.<br>PCT/JP2013/078095</td></tr>
<tr><td colspan="4">C (Continuation).   DOCUMENTS CONSIDERED TO BE RELEVANT</td></tr>
<tr><td colspan="2">Category*</td><td>Citation of document, with indication, where appropriate, of the relevant passages</td><td>Relevant to claim No.</td></tr>
<tr><td colspan="2" align="center">A</td><td>Takanori Senoh(et al.), "AHG8: Proposal on Signaling of Alternative 3D Format in ISO/IEC 14496-10 (ITU-T H.264)", Joint Collaborative Team on 3D Video Coding Extension Development of ITU-T SG 16 WP 3 and ISO/IEC JTC 1/SC 29/WG 11 JCT3V-B0227, ITU-T, 2012.10.18, p.1-11</td><td align="center">1-14</td></tr>
<tr><td colspan="2" align="center">A</td><td>Masayuki TANIMOTO et al., "GLOBAL VIEW DEPTH 3D FORMAT", ITE Technical Report, The Institute of Image Information and Television Engineers, 30 August 2012 (30.08.2012), vol.36, no.35, pages 1 to 4</td><td align="center">1-14</td></tr>
<tr><td colspan="2" align="center">A</td><td>JP 2012-182731 A (Nikon Corp.), 20 September 2012 (20.09.2012), abstract; paragraphs [0005], [0033] to [0059]; fig. 5 to 9 (Family: none)</td><td align="center">1-14</td></tr>
<tr><td colspan="2" align="center">P,A</td><td>WO 2013/073316 A1 (National Institute of Information and Communications Technology), 23 May 2013 (23.05.2013), paragraphs [0096] to [0532]; fig. 1 to 34 & TW 201322736 A</td><td align="center">1-14</td></tr>
</table>

Form PCT/ISA/210 (continuation of second sheet) (July 2009)

**REFERENCES CITED IN THE DESCRIPTION**

**Patent documents cited in the description**

- JP 2010157821 A